# EUROPEAN PATENT APPLICATION

(11) **EP 4 516 855 A1**
(43) Date of publication of application: **05.03.2025**
(21) Application number: 23796550.4
(22) Date of filing: 28.04.2023
(51) Int. Cl.: C08L 27/12, C08F 6/22

(54) **COMPOSITION INCLUDING FLUORORUBBER**

(30) Priority: 28.04.2022 JP 2022075262
(71) Applicant: DAIKIN INDUSTRIES, LTD., Osaka-shi, Osaka 530-0001 (JP)
(72) Inventor: KITAICHI, Masanori, Osaka-Shi, Osaka 530-0001 (JP); MORIKAWA, Tatsuya, Osaka-Shi, Osaka 530-0001 (JP); IWASAKA, Takuma, Osaka-Shi, Osaka 530-0001 (JP); KURASAKI, Yuto, Osaka-Shi, Osaka 530-0001 (JP); SUMINO, Eisaku, Osaka-Shi, Osaka 530-0001 (JP); NAKAI, Katsuya, Osaka-Shi, Osaka 530-0001 (JP); ARIMOTO, Naoko, Osaka-Shi, Osaka 530-0001 (JP); TACHIKAWA, Shouhei, Osaka-Shi, Osaka 530-0001 (JP); TAKISHIMA, Ryo, Osaka-Shi, Osaka 530-0001 (JP); INOUE, Tomohito, Osaka-Shi, Osaka 530-0001 (JP); IRIE, Masaki, Osaka-Shi, Osaka 530-0001 (JP)
(74) Representative: Hoffmann Eitle
(86) International application number: PCT/JP2023/016907
(87) International publication number: WO 2023/210818

(57) **Abstract**

Provided is a composition containing: a polymer (I) having a polymerization unit (I) based on a monomer (I) represented by general formula (I); and a fluoroelastomer, wherein a content of the polymer (I) is 0.0001 to 1.0% by mass based on the fluoroelastomer:

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

## Description

### TECHNICAL FIELD

The present disclosure relates to a composition containing a fluoroelastomer.

### BACKGROUND ART

Patent Document 1 describes a method for producing a fluoropolymer, the method comprising the step of carrying out polymerization of a fluoromonomer in an aqueous medium in the presence of a polymer (1) containing a polymerization unit (1) based on a monomer represented by the following general formula (1) below thereby obtaining a fluoropolymer:

CX₂=CY(-CZ₂-O-Rf-A) (1)

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond;
and A is -COOM, -SO₃M, or -OSO₃M (wherein M is -H, a metal atom,- NR⁷₄, imidazolium optionally having a substituent, pyridinium optionally having a substituent, or phosphonium optionally having a substituent, and R⁷ is H or an organic group, provided that at least one of X, Y, and Z contains a fluorine atom).

Patent Document 2 describes a method for producing a fluorine-containing copolymer, wherein the fluorine-containing copolymer in an aqueous fluorine-containing copolymer dispersion produced by emulsion polymerization in the presence of aqueous ammonia is coagulated to separate the fluorine-containing copolymer and, at this time, a cationic surfactant and a water-soluble organic solvent are used as coagulating agents.

### RELATED ART

### PATENT DOCUMENTS

Patent Document 1: International Publication No. WO 2019/168183
Patent Document 2: Japanese Patent Laid-Open No. 2004-285264

### SUMMARY OF THE INVENTION

### PROBLEM TO BE SOLVED BY THE INVENTION

An object of the present disclosure is to provide a composition containing a polymer having a specific polymerization unit and a fluoroelastomer, wherein the content of the polymer having a specific polymerization unit is significantly reduced.

### MEANS FOR SOLVING THE PROBLEM

According to the first aspect of the present disclosure, provided is a composition comprising: a polymer (I) having a polymerization unit (I) based on a monomer (I) represented by general formula (I); and a fluoroelastomer, wherein a content of the polymer (I) is 0.0001 to 1.0% by mass based on the fluoroelastomer:

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

### EFFECTS OF INVENTION

The present disclosure can provide a composition containing a polymer having a specific polymerization unit and a fluoroelastomer, wherein the content of the polymer having a specific polymerization unit is significantly reduced.

### DESCRIPTION OF EMBODIMENTS

Before describing the present disclosure in detail, some terms used in the present disclosure will now be defined or described.

In the present disclosure, the fluoroelastomer is an amorphous fluoropolymer. The term "amorphous" means that a fluoropolymer has a melting peak (ΔH) of 4.5 J/g or lower as determined by differential scanning calorimetry (DSC) (temperature-increasing rate: 10°C/min) or differential thermal analysis (DTA) (temperature-increasing rate: 10°C/min). The fluoroelastomer exhibits elastomeric characteristics when crosslinked. The elastomeric characteristics mean that a polymer has an ability to be stretched and retain its original length when the force required to stretch the polymer is no longer applied.

In the present disclosure, the partially fluorinated elastomer refers to a fluoropolymer comprising a fluoromonomer unit and having a perfluoromonomer unit content of less than 90 mol% based on all polymerization units, wherein the fluoropolymer has a glass transition temperature of 20°C or lower and has a melting peak (ΔH) of 4.5 J/g or lower.

The perfluoroelastomer (perfluororubber) in the present disclosure means a fluoropolymer having a perfluoromonomer unit content of 90 mol% or more and preferably 91 mol% or more based on all polymerization units, having a glass transition temperature of 20°C or lower, having a melting peak (ΔH) of 4.5 J/g or lower, and having a fluorine atom concentration in the fluoropolymer of 71% by mass or more, preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.

The perfluoromonomer in the present disclosure means a monomer that does not contain a carbon-hydrogen bond within the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all the hydrogen atoms are replaced with fluorine atoms. The perfluoromonomer does not encompass a monomer that provides a crosslinking site.

The monomer that provides a crosslinking site is a monomer (a cure-site monomer) having a crosslinkable group that provides the fluoropolymer with a crosslinking site for forming a crosslink with the curing agent.

In the present disclosure, the content of each monomer constituting the fluoropolymer can be calculated by any suitable combination of NMR, FT-IR, elemental analysis, and X-ray fluorescence analysis according to the type of monomer.

In the present disclosure, the term "organic group" means a group containing one or more carbon atoms or a group formed by removing one hydrogen atom from an organic compound.

Examples of the "organic group" include:
an alkyl group optionally having one or more substituents;
an alkenyl group optionally having one or more substituents;
an alkynyl group optionally having one or more substituents;
a cycloalkyl group optionally having one or more substituents;
a cycloalkenyl group optionally having one or more substituents;
a cycloalkadienyl group optionally having one or more substituents;
an aryl group optionally having one or more substituents;
an aralkyl group optionally having one or more substituents;
a non-aromatic heterocyclic group optionally having one or more substituents;
a heteroaryl group optionally having one or more substituents; a cyano group;
a formyl group;
RaO-;
RaCO-;
RaSO₂-;
RaCOO-;
RaNRaCO-;
RaCONRa-;
RaOCO-;
RaOSO₂-; and
RaNRbSO₂-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is each independently H or an alkyl group optionally having one or more substituents.

The organic group is preferably an alkyl group optionally having one or more substituents.

Also, in the present disclosure, the term "substituent" refers to a group that is capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoylamino group, a halogen atom, a sulfamoylcarbamoyl group, a carbamoylsulfamoyl group, a dialiphatic oxyphosphinyl group, and a diaromatic oxyphosphinyl group.

The aliphatic group described above may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group described above include alkyl groups having 1 to 8, preferably 1 to 4, carbon atoms in total, such as a methyl group, an ethyl group, a vinyl group, a cyclohexyl group, and a carbamoylmethyl group.

The aromatic group described above may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group described above include aryl groups having 6 to 12 carbon atoms, preferably 6 to 10 carbon atoms in total, such as a phenyl group, a 4-nitrophenyl group, a 4-acetylaminophenyl group, and a 4- methanesulfonylphenyl group.

The heterocyclic group described above may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group described above include 5- or 6-membered heterocyclic groups having 2 to 12, preferably 2 to 10, carbon atoms in total, such as a 2-tetrahydrofuryl group and a 2-pyrimidyl group.

The acyl group described above may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group described above include acyl groups having 2 to 8, preferably 2 to 4, carbon atoms in total, such as an acetyl group, a propanoyl group, a benzoyl group, and a 3-pyridinecarbonyl group.

The acylamino group described above may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group described above include acylamino groups having 2 to 12, preferably 2 to 8, carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group described above may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group described above include alkoxycarbonyl groups having 2 to 8, preferably 2 to 4, carbon atoms in total, such as a methoxycarbonyl group, an ethoxycarbonyl group, and a (t)-butoxycarbonyl group.

The carbamoyl group described above may have an aliphatic group, an aromatic group, a heterocyclic group, or the like. Examples of the carbamoyl group described above include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group described above may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group described above include alkylsulfonyl groups having 1 to 6 carbon atoms in total, preferably 1 to 4 carbon atoms in total, such as a methanesulfonyl group.

The aromatic sulfonyl group described above may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group described above include arylsulfonyl groups having 6 to 10 carbon atoms in total, such as a benzenesulfonyl group.

The amino group described above may have an aliphatic group, an aromatic group, a heterocyclic group, or the like.

The acylamino group described above may have, for example, an acetylamino group, a benzoylamino group, a 2-pyridinecarbonylamino group, a propanoylamino group, or the like. Examples of the acylamino group described above include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group described above may be, for example, a methanesulfonamide group, a benzenesulfonamide group, a 2-pyridinesulfonamide group, respectively.

The sulfamoyl group described above may have an aliphatic group, an aromatic group, a heterocyclic group, or the like. Examples of the sulfamoyl group described above include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group described above may be saturated or unsaturated, and may have a methoxy group, an ethoxy group, an i-propyloxy group, a cyclohexyloxy group, a methoxyethoxy group, or the like. Examples of the aliphatic oxy group described above include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and heterocyclic amino group described above may each have an aliphatic group, an aliphatic oxy group, a halogen atom, a carbamoyl group, a heterocyclic group having a ring condensed with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group described above may be saturated or unsaturated, and examples include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group described above may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

In the present disclosure, a range indicated by endpoints includes all numerical values within the range (for example, the range of 1 to 10 includes 1.4, 1.9, 2.33, 5.75, 9.98, and the like).

In the present disclosure, the phrase "at least one" includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

### (Composition)

The composition of the present disclosure contains: a polymer (I) having a polymerization unit (I) based on a monomer (I) represented by the general formula (I); and a fluoroelastomer,

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

Patent Document 1 discloses a method for producing a fluoropolymer, the method comprising the step of polymerizing a fluoromonomer in an aqueous medium in the presence of the above polymer (1) to give a fluoropolymer. The composition obtained by using this production method will contain a relatively large amount of the polymer (1).

The composition of the present disclosure contains a polymer (I) and a fluoroelastomer and, moreover, the content of the polymer (I) is 0.0001 to 1.0% by mass based on the fluoroelastomer. Accordingly, the composition of the present disclosure is a composition having a significantly reduced content of the polymer (I) and, therefore, when crosslinking the composition of the present disclosure, the crosslinking reaction proceeds smoothly, and the resulting crosslinked product has excellent physical properties of a fluoroelastomer. For example, the use of the composition having a significantly reduced content of the polymer (I) enables the crosslinking time to be shortened and the compression set of the resulting crosslinked product to be reduced.

The content of the polymer (I) in the composition of the present disclosure, based on the fluoroelastomer, is 0.0001 to 1.0% by mass, preferably 0.001% by mass or more, more preferably 0.005% by mass or more, and even more preferably 0.01% by mass or more, and is preferably 0.5% by mass or less and more preferably 0.2% by mass or less. The content of the polymer (I) based on the fluoroelastomer may be less than 0.1% by mass, may be 0.05% by mass or less, or may be 0.02% by mass or less.

The content of the polymer (I) in the composition can be determined by solid-state NMR measurement or liquid-state NMR measurement. When the polymer (I) contains a carbonyl group, the content can also be determined with a Fourier transform infrared spectrometer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the polymer (I) may be any of the polymer measurement methods respectively described in these documents.

The composition of the present disclosure can be produced by polymerizing a fluoromonomer in an aqueous medium in the presence of the polymer (I) to give a polymerization dispersion containing a fluoroelastomer, and then subjecting the resulting polymerization dispersion to any of the following treatments:
(1) The fluoroelastomer in the polymerization dispersion is brought into contact with an alcohol having 3 to 6 carbon atoms per OH group to coagulate the fluoroelastomer;
(2) The polymerization dispersion is frozen to coagulate the fluoroelastomer; and
(3) The fluoroelastomer in the polymerization dispersion is brought into contact with an extremely limited type of organic solvent to coagulate the fluoroelastomer.

The content of the polymer (I) in the polymerization dispersion, based on the fluoroelastomer, is preferably more than 0.20% by mass and more preferably more than 1.0% by mass, and is preferably 50% by mass or less, more preferably 25% by mass or less, even more preferably 10% by mass or less, and particularly preferably 5.0% by mass or less.

The above method for producing the composition enables the content of the polymer (I) in the polymerization dispersion to be reduced to a value that is within the aforementioned range of the content of the polymer (I) in the composition.

Next, the components contained in the composition of the present disclosure and the production methods therefor as well as the polymerization dispersion containing the polymer (I), the fluoroelastomer, and the aqueous medium used to produce the composition of the present disclosure and the production methods therefor will now be described in more detail.

### (Polymer (I))

The polymer (I) contained in the composition of the present disclosure contains a polymerization unit (I) based on a monomer (I) represented by the general formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

In the present disclosure, the anionic group includes a functional group that imparts an anionic group, for example, an acid group such as -COOH and an acid base such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM, wherein M is -H, a metal atom, -NR⁷₄, imidazolium optionally having a substituent, pyridinium optionally having a substituent, or phosphonium optionally having a substituent, and R⁷ is H or an organic group.

In the production method for the composition, one monomer (I) represented by the general formula (I) may be used singly, or two or more monomers (I) may be used as well.

The polymer (I) may have a polymerization unit (I) based on one or more monomers (I) represented by the general formula (I).

R is a linking group. The "linking group" in the present disclosure is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may contain no carbon atoms, and may be a catenary heteroatom such as oxygen, sulfur, or nitrogen.

m is an integer of 1 or more, and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and the divalent organic group may or may not contain a double bond. R may be linear or branched, and may be cyclic or acyclic. Also, R may contain a functional group (such as ester, ether, ketone (a keto group), amine, or halide).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all hydrogen atoms bonded to carbon atoms in the hydrocarbon group may be replaced with fluorine.

R is preferably at least one selected from -(CH₂)ₐ-, - (CF₂)ₐ-, - (CF₂)ₐ-O-, -O-(CF₂)ₐ-, -(CF₂)ₐ-O-(CF₂)_{b}-, -O(CF₂)ₐ-O-(CF₂)ₚ-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)_{c}-O]_{d}-, -O-[CF₂CF(CF₃)O]ₐ-(CF₂)_{b}-, -O-(CF₂)ₐ-O-[CF(CF₃)CF₂O]_{b}-, -O-[CF₂CF(CF₃)O]ₐ- (CF₂)_{b}-O-, -O- [CF₂CF(CF₃)O]ₐ-(CF₂)_{b}-O-[CF(CF₃)CF₂O]_{c}-, -[CF₂CF(CF₃)O]ₐ-, - [CF(CF₃)CF₂O]ₐ-, -(CF₂)ₐ-O-[CF (CF₃)CF₂O]ₐ-, -(CF₂)ₐ-O-[CF(CF₃)CF₂O]ₐ-(CF₂)_{b}-, -[CF₂CF(CF₃)]ₐ-CO-(CF₂)_{b}-, and a combination thereof.

In the formulas, a, b, c, and d are each independently at least 1 or more. a, b, c, and d may each independently be 2 or more, 3 or more, 4 or more, 10 or more, or 20 or more. The upper limits of a, b, c, and d are, for example, 100.

R is more preferably at least one selected from -O-CF₂-, -O-CF₂CF₂-, -O-CF₂CF₂-O-, -O-CF₂CF₂CF₂-, -O-CF₂CF₂CF₂-O-, -O-CF₂CF(CF₃)-O-, -O-CF₂CF₂-O-CF(CF₃)CF₂-O-, -O-CF₂CF(CF₃)-O-CF₂CF₂-O-, and -O-CF₂CF(CF₃)-O-CF₂-.

R is preferably a divalent group represented by the general formula (r1):

-CF₂-O-(CX⁶₂)ₑ-{O-CF(CF₃)}_{f}-(O)_{g}- (r1)

(wherein X⁶ is each independently H, F, or CF₃; e is an integer of 0 to 3; f is an integer of 0 to 3; and g is 0 or 1), and more preferably a divalent group represented by the general formula (r2):

-CF₂-O-(CX⁷₂)ₑ-(O)_{g}- (r2)

(wherein X⁷ is each independently H, F, or CF₃; e is an integer of 0 to 3; and g is 0 or 1).

Specific suitable examples of R include -CF₂-O-, -CF₂-O-CF₂-, -CF₂-O-CH₂-, -CF₂-O-CH₂CF₂-, -O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF₂CH₂-, -CF₂-O-CF₂CF₂CH₂-, -CF₂-O-CF (CF₃)-, -CF₂-O-CF(CF₃)CF₂-, -CF₂-O-CF(CF₃)CF₂-O-, -CF₂-O-CF (CF₃)CF₂-O-CF₂-, and -CF₂-O-CF(CF₃)CH₂-. In particular, R is preferably a perfluoroalkylene group optionally containing an oxygen atom and, specifically, is preferably -CF₂-O-, -CF₂-O-CF₂-, -O-CF₂-, -O-CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF(CF₃)-, -CF₂-O-CF(CF₃)CF₂-, or - CF₂-O-CF(CF₃)CF₂-O-.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and yet more preferably one is F, and the other is CF₃.

Also, -R-CZ¹Z²- in general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and yet more preferably one is F, and the other is CF₃.

-R-CZ¹Z²- in the general formula (I) is preferably -CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF (CF₃)-, -CF₂-O-CF(CF₃)-C (CF₃)₂-, -CF₂-O-CF (CF₃)CF₂-CF₂-, -CF₂-O-CF(CF₃)CF₂-CF(CF₃)-, -CF₂-O-CF(CF₃)CF₂-C (CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF(CF₃)-, -CF₂-O-CF₂-CF(CF₃)-, -CF₂-O-CF₂CF₂-CF (CF₃)-, -CF₂-O-CF(CF₃)-CF (CF₃)-, -CF₂-O-CF(CF₃)CF₂-CF(CF₃)-, or -CF₂-O-CF(CF₃)CF₂-O-CF(CF₃)-, and even more preferably -O-CF₂CF₂- and -O-CF₂CF(CF₃)-O-CF₂CF₂-.

Also preferably, the polymer (I) is highly fluorinated. Except for the anionic group (A⁰) such as a phosphate group moiety (such as CH₂OP(O)(OM)₂) or a sulfate group moiety (such as CH₂OS(O)₂OM), 80% or more, 90% or more, 95% or more, or 100% of the C-H bonds in the polymer (I) are preferably replaced with C-F bonds.

The monomer (I) and the polymer (I) also preferably has a C-F bonds and does not have a C-H bond, except for the anionic group (A⁰). In other words, in the general formula (I), preferably, X¹, X², and X³ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group described above may have 2 to 20 carbon atoms or 4 to 18 carbon atoms.

The monomer (I) and the polymer (I) may be partially fluorinated. That is to say, the monomer (I) and the polymer (I) also preferably have at least one hydrogen atom bonded to a carbon atom and at least one fluorine atom bonded to a carbon atom, in the portion excluding the anionic group (A⁰).

The anionic group (A⁰) may be -SO₂M, -SO₃M, -OSO₃M, - COOM, -SO₂NR'CH₂COOM, -CH₂OP(O)(OM) ₂, [-CH₂O]₂P(O)(OM), - CH₂CH₂OP(O)(OM) ₂, [-CH₂CH₂O]₂P(O)(OM), -CH₂CH₂OSO₃M, -P(O)(OM)₂, - SO₂NR' CH₂CH₂OP(O)(OM) ₂, [-SO₂NR'CH₂CH₂O]₂P(O)(OM), -CH₂OSO₃M, - SO₂NR' CH₂CH₂OSO₃M, or -C(CF₃)₂OM. In particular, it is preferably -SO₃M, -OSO₃M, -COOM, -P(O)(OM)₂, or -C(CF₃)₂OM; more preferably -COOM, -SO₃M, -OSO₃M, -P(O)(OM)₂, or -C(CF₃)₂OM; even more preferably -SO₃M, -COOM, or -P(O)(OM)₂; and particularly preferably -SO₃M or -COOM.

M is H, a metal atom, NR⁷₄, imidazolium optionally having a substituent, pyridinium optionally having a substituent, or phosphonium optionally having a substituent, and R⁷ is H or an organic group.

Examples of the metal atom include alkali metals (Group 1) and alkaline earth metals (Group 2), and Na, K, or Li is preferable.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or -NH₄, yet more preferably -H, -Na, -K, or -NH₄, particularly preferably -H, -Na or -NH₄, and most preferably - H, or -NH₄.

In the polymer (I), each polymerization unit (I) may have a different anionic group or may have the same anionic group.

The monomer (I) is also preferably a monomer represented by the general formula (Ia).

The polymer (I) is also preferably a polymer containing a polymerization unit (Ia) based on a monomer represented by the general formula (Ia):

CF₂=CF-O-Rf⁰-A⁰ (Ia)

wherein A⁰ is an anionic group; and Rf⁰ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The polymer (I) is also preferably a polymer comprising a polymerization unit (Ib) based on a monomer represented by the following formula (Ib):

CH₂=CH-O-Rf⁰-A⁰ (Ib)

wherein A⁰ is an anionic group, and Rf⁰ is a perfluorinated divalent linking group as defined by the formula Ia.

In one preferable embodiment, A⁰ in the general formula (I) is a sulfate group. A⁰ is, for example, -CH₂OSO₃M, - CH₂CH₂OSO₃M, or -SO₂NR'CH₂CH₂OSO₃M, wherein R' is H or an alkyl group having 1 to 4 carbon atoms, and M is as described above.

When A⁰ is a sulfate group, examples of the monomer represented by the general formula (I) include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH(O(CF₂)₄CH₂OSO₃M), CF₂=CF(OCF₂CF₂SO₂N(CH₃)CH₂CH₂OSO₃M), CH₂=CH(OCF₂CF₂CH₂OSO₃M), CF₂=CF(OCF₂CF₂CF₂CF₂SO₂N(CH₃)CH₂CH₂OSO₃M), and CH₂=CH(OCF₂CF₂CF₂CH₂OSO₃M). In the formulae, M is as described above.

In one preferable embodiment, A⁰ in the general formula (I) is a sulfonate group. A⁰ is, for example, -SO₃M, wherein M is as described above.

When A⁰ is a sulfonate group, examples of the monomer represented by the general formula (I) include CF₂=CF(OCF₂CF₂SO₃M), CF₂=CF(O(CF₂)₃SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(OCF₂CF₂SO₃M), CF₂=CF(OCF₂CF(CF₃)OCF₂CF₂CF₂CF₂SO₃M), CH₂=CH(O(CF₂)₄SO₃M), and CH₂=CH(O(CF₂)₃SO₃M). In the formulae, M is as described above.

In one preferable embodiment, A⁰ in the general formula (I) is a carboxylate group. A⁰ is, for example, COOM or SO₂NR'CH₂COOM, wherein R' is H or an alkyl group having 1 to 4 carbon atoms, and M is as described above. When A⁰ is a carboxylate group, examples of the monomer represented by the general formula (I) include CF₂=CF(OCF₂CF₂COOM), CF₂=CF(O(CF₂)₃COOM), CF₂=CF(O(CF₂)₄COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(OCF₂CF₂COOM), CH₂=CH(O(CF₂)₄COOM), CH₂=CH(O(CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR' CH₂COOM), CF₂=CF(OCF₂CF(CF₃)OCF₂CF₂SO₂NR'CH₂COOM), CH₂=CH(OCF₂CF₂SO₂NR'CH₂COOM), CF₂=CF(OCF₂CF(CF₃)OCF₂CF₂CF₂CF₂SO₂NR'CH₂COOM), CH₂=CH(O(CF₂)₄SO₂NR'CH₂COOM), and CH₂=CH(O(CF₂)₃SO₂NR'CH₂COOM). In the formulae, R' is H or an alkyl group having 1 to 4 carbon atoms, and M is as described above.

In one preferable embodiment, A⁰ in the general formula (I) is a phosphate group. A⁰ is, for example, -CH₂OP(O)(OM)₂, [-CH₂O]₂P(O)(OM), -CH₂CH₂OP(O)(OM)₂, [-CH₂CH₂O]₂P(O)(OM), [-SO₂NR'CH₂CH₂O]₂P(O)(OM), or SO₂NR'CH₂CH₂OP(O)(OM)₂, wherein R' is an alkyl group having 1 to 4 carbon atoms, and M is as described above.

When A⁰ is a phosphate group, examples of the monomer represented by the general formula (I) include CF₂=CF(OCF₂CF₂CH₂OP(O)(OM) ₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(OCF₂CF₂CH₂OP(O)(OM)₂), CH₂=CH(O(CF₂)₄CH₂OP(O)(OM)₂), and CH₂=CH(O(CF₂)₃CH₂OP(O)(OM)₂). In the formulae, M is as described above.

In one preferable embodiment, A⁰ in the general formula (I) is a phosphonate group. When A⁰ is a phosphonate group, examples of the monomer represented by the general formula (I) include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(OCF₂CF₂P(O)(OM)₂), CH₂=CH(O(CF₂)₄P(O)(OM)₂), and CH₂=CH(O(CF₂)₃P(O)(OM)₂), wherein M is as described above.

The monomer (I) is preferably a monomer (1) represented by the general formula (1).

The polymer (I) is preferably a polymer (1) containing a polymerization unit (1) based on a monomer represented by the general formula (1):

CX₂=CY(-CZ₂-O-Rf-A) (1)

wherein X is the same or different and is -H or F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM (wherein M is -H, a metal atom, -NR⁷₄, imidazolium optionally having a substituent, pyridinium optionally having a substituent, or phosphonium optionally having a substituent, and R⁷ is H or an organic group), provided that at least one of X, Y, and Z contains a fluorine atom.

In the method for producing the composition, the monomer (1) represented by the general formula (1) and a further monomer may be copolymerized.

The polymer (1) may be a homopolymer of the monomer (1) represented by the general formula (1), or may be a copolymer with a further monomer.

The fluorine-containing alkylene group having 2 to 100 carbon atoms and having an ether bond described above is an alkylene group that does not include a structure in which an oxygen atom is an end and that contains an ether bond between carbon atoms.

In the general formula (1), X is -H or F. Both X may be -F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or CF₃, and more preferably -F.

In the general formula (1), Z is the same or different, and is -H, -F, an alkyl group, or a fluoroalkyl group. The alkyl group is an alkyl group not containing a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or CF₃, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include -CF₂-, -CH₂CF₂-, - CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by the general formula: 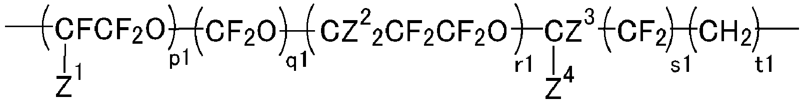 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, -(CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (1), A is -COOM, -SO₃M, -OSO₃M, or -C(CF₃)₂OM (wherein M is H, a metal atom, NR⁷₄, imidazolium optionally having a substituent, pyridinium optionally having a substituent, or phosphonium optionally having a substituent, and R⁷ is H or an organic group).

R⁷ is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, particularly preferably H, Na or NH₄, and most preferably H or NH₄.

A is preferably -COOM or -SO₃M.

Examples of the monomer represented by the general formula (1) include the monomer represented by the general formula (1a):

CX₂=CFCF₂-O-(CF(CF₃)CF₂O)ₙ₅-CF(CF₃)-A (1a)

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

In the method for producing the composition, the monomer represented by the general formula (1a) and a further monomer may be copolymerized.

The polymer (1) may be a homopolymer of the monomer represented by the general formula (1a) or a copolymer with a further monomer.

The monomer (1) is preferably a monomer represented by the general formula (1A) below.

The polymerization unit (1) is preferably a polymerization unit (1A) based on a monomer represented by the general formula (1A):

CH₂=CF(-CF₂-O-Rf-A) (1A)

wherein Rf and A are as described above.

In the production method for the composition, the monomer represented by the general formula (1A) and a further monomer may be copolymerized.

The polymer (1) may be a homopolymer of the monomer represented by the general formula (1A), or may be a copolymer with a further monomer.

Specific examples of the monomer represented by the formula (1A) include a monomer represented by the following formula: 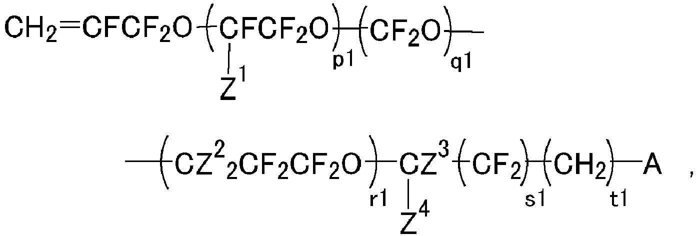 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include:

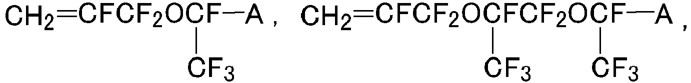

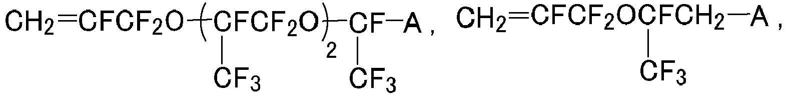

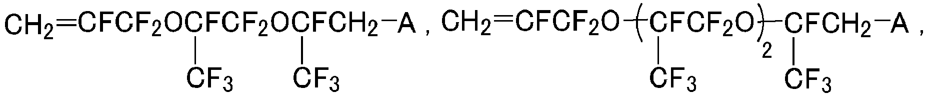

CH₂=CFCF₂OCH₂CF₂-A, CH₂=CFCF₂O(CH₂CF₂CF₂O)CH₂CF₂-A,

CH₂=CFCF₂OCH₂CF₂CH₂-A,

CH₂=CFCF₂O(CH₂CF₂CF₂O)CH₂CF₂CH₂-A,

CH₂=CFCF₂OCF₂CF₂-A, CH₂=CFCF₂O(CF₂CF₂CF₂O)CF₂CF₂-A,

CH₂=CFCF₂OCF₂CF₂CH₂-A,

CH₂=CFCF₂O(CF₂CF₂CF₂O)CF₂CF₂CH₂-A,

CH₂=CFCF₂OCF₂-A, CH₂=CFCF₂O(CF₂CF₂O)CF₂-A,

CH₂=CFCF₂OCF₂CH₂-A,

CH₂=CFCF₂O(CF₂CF₂O)CF₂CH₂-A,

and, in particular, 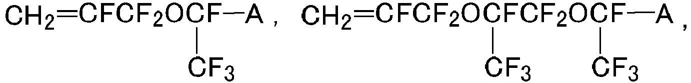 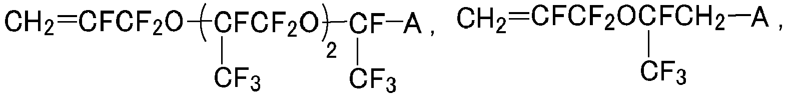 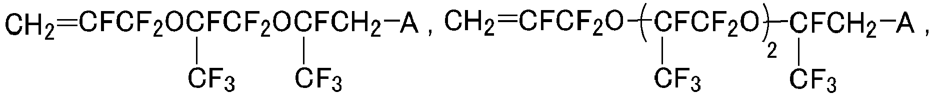 are preferable.

In the monomer represented by the general formula (1A), A in the formula (1A) is preferably -COOM, and, in particular, at least one selected from the group consisting of CH₂=CFCF₂OCF(CF₃)COOM and CH₂=CFCF₂OCF(CF₃)CF₂OCF(CF₃)COOM (wherein M is as defined above) is preferable, and CH₂=CFCF₂OCF(CF₃)COOM is more preferable.

Examples of the monomer represented by the general formula (1) further include monomers represented by the following formula:

CF₂=CFCF₂-O-Rf-A

wherein Rf and A are as described above.

More specifically, preferable examples include

CF₂=CFCF₂OCF₂CF₂CF₂-A,

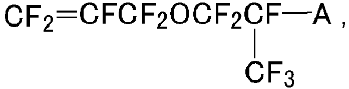

CF₂=CFCF₂OCF₂CF₂CF₂CH₂-A,

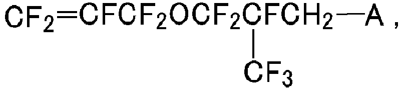

and the like.

The monomer (I) is also preferably a monomer (2) represented by the general formula (2).

The polymer (I) is also preferably a polymer (2) containing a polymerization unit (2) based on a monomer represented by the general formula (2):

CX₂=CY(-O-Rf-A) (2)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the method for producing the composition, the monomer (2) represented by the general formula (2) and a further monomer may be copolymerized.

The polymer (2) may be a homopolymer of the monomer represented by the general formula (2), or may be a copolymer with a further monomer.

In the general formula (2), X is -H or F. Both X may be -F, or at least one may be -H. For example, one may be -F and the other may be -H, or both may be -H.

In the general formula (2), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and has one or more carbon atoms. The number of carbon atoms of the fluorine-containing alkyl group is preferably 6 or less, more preferably 4 or less, and even more preferably 3 or less. Y is preferably -H, -F, or -CF₃, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure in which an oxygen atom is an end and that contains an ether bond between carbon atoms.

The fluorine-containing alkylene group of Rf preferably has 2 or more carbon atoms. The number of carbon atoms is preferably 30 or less, more preferably 20 or less, even more preferably 10 or less, and particularly preferably 5 or less. Examples of the fluorine-containing alkylene group include - CF₂-, -CH₂CF₂-, -CF₂CF₂-, -CF₂CH₂-, -CF₂CF₂CH₂-, -CF(CF₃)-, - CF(CF₃)CF₂-, -CF(CF₃)CH₂-, -CF₂CF₂CF₂-, and CF₂CF₂CF₂CF₂-. The fluorine-containing alkylene group is preferably a perfluoroalkylene group, and more preferably an unbranched linear perfluoroalkylene group.

The fluorine-containing alkylene group having an ether bond described above preferably has 3 or more carbon atoms. The fluorine-containing alkylene group having an ether bond preferably has 60 or less carbon atoms, more preferably 30 or less carbon atoms, even more preferably 12 or less carbon atoms, and particularly preferably 5 or less carbon atoms. The fluorine-containing alkylene group having an ether bond is also preferably a divalent group represented by the general formula: 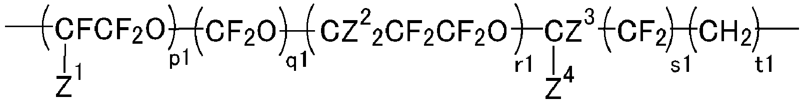 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF₂CF(CF₃)OCF₂CF₂-, -CF₂CF(CF₃)OCF₂CF₂CF₂-, -CF(CF₃)CF₂-O-CF(CF₃)-, -(CF(CF₃)CF₂-O)ₙ-CF(CF₃)- (where n is an integer of 1 to 10), -CF(CF₃)CF₂-O-CF(CF₃)CH₂-, - (CF (CF₃)CF₂-O)ₙ-CF(CF₃)CH₂-(where n is an integer of 1 to 10), -CH₂CF₂CF₂O-CH₂CF₂CH₂-, - CF₂CF₂CF₂O-CF₂-, -CF₂CF₂CF₂O-CF₂CF₂-, -CF₂CF₂CF₂O-CF₂CF₂CF₂-, - CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

The fluorine-containing alkylene group having a keto group described above preferably has 3 or more carbon atoms. The fluorine-containing alkylene group having a keto group preferably has 60 or less carbon atoms, more preferably 30 or less carbon atoms, even more preferably 12 or less carbon atoms, and particularly preferably 5 or less carbon atoms.

Specific examples of the fluorine-containing alkylene group having a keto group include -CF₂CF(CF₃)CO-CF₂-, - CF₂CF(CF₃)CO-CF₂CF₂-, -CF₂CF(CF₃)CO-CF₂CF₂CF₂-, and -CF₂CF(CF₃)CO-CF₂CF₂CF₂CF₂-. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include - CF₂CF(CF₃)C(OH)₂-CF₂-, -CF₂CF(CF₃)C(OH)₂-CF₂CF₂-, - CF₂CF(CF₃)C(OH)₂-CF₂CF₂CF₂-, and -CF₂CF(CF₃)C(OH)₂-CF₂CF₂CF₂CF₂-.

The monomer represented by the general formula (2) is preferably at least one selected from the group consisting of monomers represented by the following general formulae (2a), (2b), (2c), (2d), (2e), (2f), and (2g):

CF₂=CF-O-(CF₂)ₙ₁-A (2a)

wherein n1 represents an integer of 1 to 10, and A is as defined above;

CF₂=CF-O-(CF₂C(CF₃)F)ₙ₂-A (2b)

wherein n2 represents an integer of 1 to 5, and A is as defined above;

CF₂=CF-O-(CFX¹)ₙ₃-A (2c)

wherein X¹ represents F or CF₃, n3 represents an integer of 1 to 10, and A is as defined above;

CF₂=CF-O-(CF₂CFX¹O)ₙ₄-(CF₂)ₙ₆-A (2d)

wherein n4 represents an integer of 1 to 10, n6 represents an integer of 1 to 3, and A and X¹ are as defined above;

CF₂=CF-O-(CF₂CF₂CFX¹O)ₙ₅-CF₂CF₂CF₂-A (2e)

wherein n5 represents an integer of 0 to 10, and A and X¹ are as defined above;

CF₂=CF-O-(CF₂)ₙ₇-O-(CF₂)ₙ₈-A (2f)

wherein n7 represents an integer of 1 to 10, n8 represents an integer of 1 to 3, and A is as defined above; and

CF₂=CF[OCF₂CF(CF₃)]n₉O(CF₂)ₙ₁₀O[CF(CF₃)CF₂O]ₙ₁₁CF(CF₃)-A (2g)

wherein n9 represents an integer of 0 to 5, n10 represents an integer of 1 to 8, n11 represents an integer of 0 to 5, and A is as defined above.

In the general formula (2a), n1 is preferably an integer of 5 or less, and more preferably an integer of 2 or less.

Examples of the monomer represented by the general formula (2a) include CF₂=CF-O-CF₂COOM, CF₂=CF(OCF₂CF₂COOM), CF₂=CF(O(CF₂)₃COOM), CF₂=CF(OCF₂CF₂SO₃M), CF₂=CFOCF₂SO₃M, and CF₂=CFOCF₂CF₂CF₂SO₃M, wherein M is as defined above.

In the general formula (2b), n2 is preferably an integer of 3 or less from the viewpoint of dispersion stability of the resulting composition.

In the general formula (2c), n3 is preferably an integer of 5 or less from the viewpoint of water solubility, A is preferably -COOM, and M is preferably H, Na, or NH₄.

In the general formula (2d), X¹ is preferably -CF₃ from the viewpoint of dispersion stability of the composition, n4 is preferably an integer of 5 or less from the viewpoint of water solubility, A is preferably -COOM, and M is preferably H, Na, or NH₄.

Examples of the monomer represented by the general formula (2d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂SO₃M, CF₂=CFOCF₂CF(CF₃)OCF₂CF₂SO₃M, and CF₂=CFOCF₂CF(CF₃)OCF₂CF₂CF₂SO₃M, wherein M represents H, NH₄, or an alkali metal.

In the general formula (2e), n5 is preferably an integer of 5 or less from the viewpoint of water solubility, A is preferably -COOM, and M is preferably H or NH₄.

An example of the monomer represented by the general formula (2e) is CF₂=CFOCF₂CF₂CF₂COOM, wherein M represents H, Na, NH₄, or an alkali metal.

In the general formula (2f), n7 is preferably an integer of 5 or less from the viewpoint of water solubility, and A is preferably -COOM or -SO₃M, and more preferably -COOM. M is preferably H, Na, K, or NH₄.

An example of the monomer represented by the general formula (2f) is CF₂=CF-O-(CF₂)₃-O-CF₂-COOM, wherein M represents H, NH₄, or an alkali metal.

In the general formula (2g), n9 is preferably an integer of 3 or less from the viewpoint of water solubility, n10 is preferably an integer of 3 or less, n11 is preferably an integer of 3 or less, and A is preferably -COOM or -SO₃M, and more preferably -COOM. M is preferably H, Na, K, or NH₄.

Examples of the monomer represented by the general formula (2g) include CF₂=CFO(CF₂)₂OCF(CF₃)COOM, CF₂=CFOCF_{2C}F₂OCF(CF₃)CF₂OCF(CF₃)COOM, CF₂=CFOCF₂CF(CF₃)OCF₂CF₂OCF(CF₃)COOM, CF₂=CF[OCF₂CF(CF₃)]₂O(CF₂)₂O[CF(CF₃)CF₂O]CF(CF₃)COOM, and CF₂=CF[OCF₂CF(CF₃)]₃O(CF₂)₂O[CF(CF₃)CF₂O]₃CF(CF₃)COOM, wherein M represents H, NH₄, or an alkali metal.

The monomer (I) is also preferably a monomer (3) represented by the general formula (3).

The polymer (I) is also preferably a polymer (3) containing a polymerization unit (3) based on a monomer represented by the general formula (3):

CX₂=CY(-Rf-A) (3)

wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the method for producing the composition, the monomer (3) represented by the general formula (3) and a further monomer may be copolymerized.

The polymer (3) may be a homopolymer of the monomer represented by the general formula (3) or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by the general formula (3a):

CF₂=CF-(CF₂)ₙ₁-A (3a)

wherein n1 represents an integer of 1 to 10, and A is as defined above; and a monomer represented by the general formula (3b):

CF₂=CF-(CF₂C(CF₃)F)ₙ₂-A (3b)

wherein n2 represents an integer of 1 to 5, and A is as defined above.

In the general formula (3a) and general formula (3b), A is preferably -SO₃M or COOM, and M is preferably H, a metal atom, NR⁷₄, imidazolium optionally having a substituent, pyridinium optionally having a substituent, or phosphonium optionally having a substituent. R⁷ represents H or an organic group.

In the general formula (3a), n1 is preferably an integer of 5 or less, and more preferably an integer of 2 or less. A is preferably -COOM, and M is preferably H or NH₄.

Examples of the monomer represented by the general formula (3a) include CF₂=CFCF₂COOM, wherein M is as defined above.

In the general formula (3b), n2 is preferably an integer of 3 or less from the viewpoint of dispersion stability of the resulting composition, A is preferably -COOM, and M is preferably H or NH₄.

Next, a suitable configuration wherein m is an integer of 2 or more in the general formula (I) will now be described.

The monomer (I) is also preferably at least one selected from the group consisting of monomers represented by the general formula (4a) and the general formula (4b).

The polymer (I) is also preferably a polymer (4) containing a polymerization unit (4) based on at least one monomer selected from the group consisting of monomers represented by the general formulae (4a) and the general formula (4b):

CF₂=CF-CF₂-O-Q^{F1}-CF(-Q^{F2}-CZ¹Z²-A)₂ (4a)

wherein Z¹, Z², and A are as defined above, and Q^{F1} and Q^{F2} are the same or different and are a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ¹Z²-A)₂ (4b)

wherein Z¹, Z², A, Q^{F1}, and Q^{F2} are as defined above.

Examples of the monomers represented by the general formulae (4a) and the general formula (4b) include: 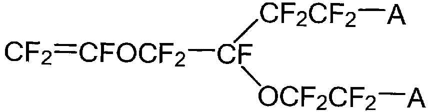 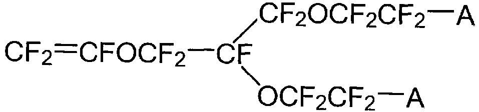 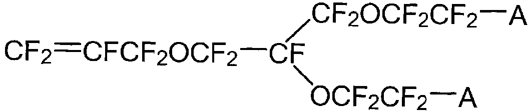 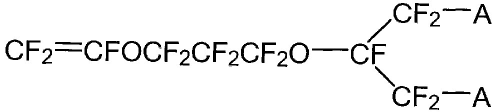 and the like.

The monomer (I) is preferably at least one selected from the group consisting of the monomer (1), the monomer (2), and the monomer (3), and is more preferably the monomer (2).

The polymer (I) is preferably at least one selected from the group consisting of the polymer (1), the polymer (2), and the polymer (3), and is more preferably the polymer (2).

In the method for producing the composition, the monomer (I) and a further monomer may be copolymerized.

The polymer (I) may be a homopolymer composed solely of the polymerization unit (I), or may be a copolymer containing the polymerization unit (I) and a polymerization unit based on a further monomer that is copolymerizable with the monomer represented by the general formula (I). From the viewpoint of solubility in an aqueous medium, a homopolymer composed solely of the polymerization unit (I) is preferable. The polymerization unit (I) may be the same or different at each occurrence, and the polymer (I) may contain the polymerization unit (I) based on two or more different monomers represented by the general formula (I).

The further monomer is preferably a monomer represented by the general formula CFR=CR₂ wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E-form), and CHF=CHCF₃ (Z-form).

In particular, from the viewpoint of good copolymerizability, at least one selected from the group consisting of tetrafluoroethylene (CF₂=CF₂), chlorotrifluoroethylene (CF₂=CFCl), and vinylidene fluoride (CH₂=CF₂) is preferable, and at least one selected from the group consisting of tetrafluoroethylene and vinylidene fluoride is more preferable. Accordingly, the polymerization unit based on the further monomer is preferably a polymerization unit based on tetrafluoroethylene. The polymerization unit based on the further monomer may be the same or different at each occurrence, and the polymer (I) may contain a polymerization unit based on two or more different further monomers.

Examples of the further monomer also include a monomer represented by the general formula (n1-2): 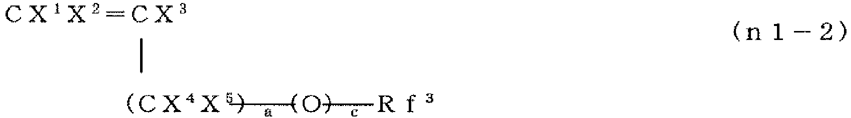 wherein X¹ and X² are the same or different and are each H or F; X³ is H, F, Cl, CH₃, or CF₃; X⁴ and X⁵ are the same or different and are each H or F; and a and c are the same or different and are each 0 or 1; and Rf³ is a fluorine-containing alkyl group having 1 to 40 carbon atoms or a fluorine-containing alkyl group having 2 to 100 carbon atoms and having an ether bond.

Specifically, preferable examples include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³, wherein Rf³ is as in the above formula (n1-2).

Another example of the further monomer is a fluorine-containing acrylate monomer represented by the formula (n2-1): 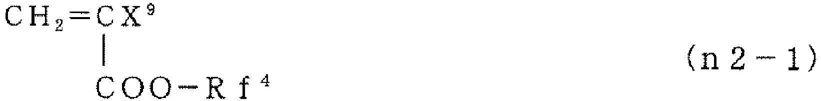 wherein X⁹ is H, F, or CH₃; and Rf⁴ is a fluorine-containing alkyl group having 1 to 40 carbon atoms, or a fluorine-containing alkyl group having 2 to 100 carbon atoms and having an ether bond. Examples of the Rf⁴ group include: 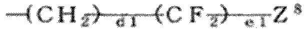 wherein Z⁸ is H, F, or Cl; dl is an integer of 1 to 4; and e1 is an integer of 1 to 10,

-CH (CF₃) ₂,

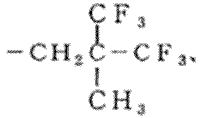

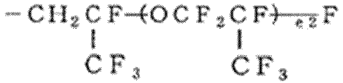

wherein e2 is an integer of 1 to 5, 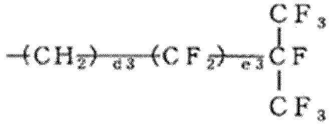 wherein d3 is an integer of 1 to 4; and e3 is an integer of 1 to 10.

Another example of the further monomer is a fluorine-containing vinyl ether represented by the following formula (n2-2):

CH₂=CHO-Rf⁵ (n2-2)

wherein Rf⁵ is a fluorine-containing alkyl group having 1 to 40 carbon atoms, or a fluorine-containing alkyl group having 2 to 100 carbon atoms and having an ether bond.

Specifically, preferable examples of the monomer represented by the general formula (n2-2) include: 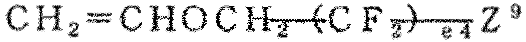 wherein Z⁹ is H or F; and e4 is an integer of 1 to 10, 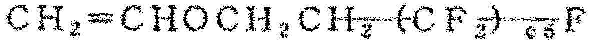 wherein e5 is an integer of 1 to 10, 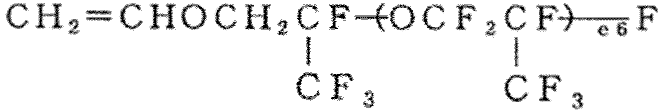 wherein e6 is an integer of 1 to 10.

More specific examples include:

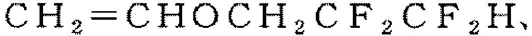

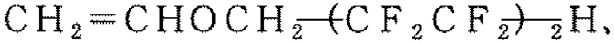

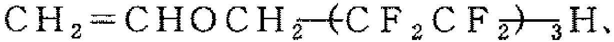

CH₂=CHOCH₂CF₂CF₃,

CH₂=CHOCH₂CF₃,

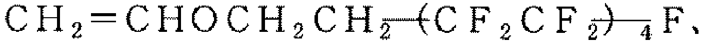

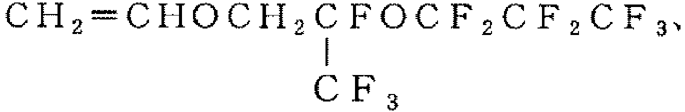

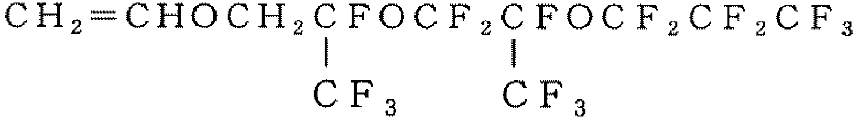

and the like.

In addition, examples also include fluorine-containing allyl ether represented by the general formula (n2-3):

CH₂=CHCH₂O-Rf⁶ (n2-3)

wherein Rf⁶ is a fluorine-containing alkyl group having 1 to 40 carbon atoms or a fluorine-containing alkyl group having 2 to 100 carbon atoms and having an ether bond, and a fluorine-containing vinyl monomer represented by the general formula (n2-4):

CH₂=CH-Rf⁷ (n2-4)

wherein Rf⁷ is a fluorine-containing alkyl group having 1 to 40 carbon atoms or a fluorine-containing alkyl group having 2 to 100 carbon atoms and having an ether bond.

Specific examples of the monomers represented by the general formulae (n2-3) and (n2-4) include monomers such as:

CH₂=CHCH₂OCH₂CF₂CF₂H,

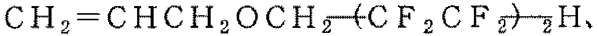

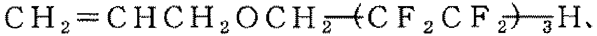

CH₂=CHCH₂OCH₂CF₂CF₃,

CH₂=CHCH₂OCH₂CF₃,

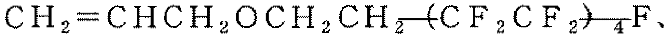

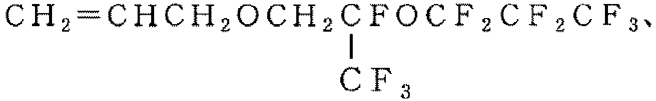

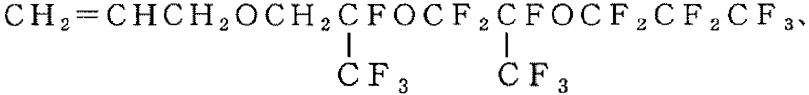

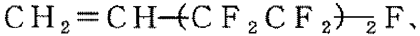

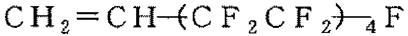

and the like.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

In the polymer (I), the content of the polymerization unit (I) is, in ascending order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on all polymerization units. The content of the polymerization unit (I) is, particularly preferably, substantially 100 mol%, and the polymer (I) is most preferably composed solely of the polymerization unit (I).

In the polymer (I), the content of the polymerization unit based on the further monomer that is copolymerizable with the monomer represented by the general formula (I) is, in ascending order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on all polymerization units. The content of the polymerization unit based on the further monomer that is copolymerizable with the monomer represented by the general formula (I) is, particularly preferably, substantially 0 mol%, and most preferably the polymer (I) does not contain the polymerization unit based on the further monomer.

The number average molecular weight of the polymer (I) is preferably 0.1 × 10⁴ or more, more preferably 0.2 × 10⁴ or more, even more preferably 0.3 × 10⁴ or more, yet more preferably 0.4 × 10⁴ or more, further preferably 0.5 × 10⁴ or more, particularly preferably 1.0 × 10⁴ or more, more particularly preferably 3.0 × 10⁴ or more, and most preferably 3.1 × 10⁴ or more. The number average molecular weight of the polymer (I) is preferably 75.0 × 10⁴ or less, more preferably 50.0 × 10⁴ or less, even more preferably 40.0 × 10⁴ or less, yet more preferably 30.0 × 10⁴ or less, and particularly preferably 20.0 × 10⁴ or less. The number average molecular weight and the weight average molecular weight are molecular weight values calculated by gel permeation chromatography (GPC) using monodisperse polystyrene as a standard. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The lower limit of the weight average molecular weight of the polymer (I) is, in ascending order of preference, 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The upper limit of the weight average molecular weight of the polymer (I) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The polymer (I) preferably has an ion exchange rate (IXR) of 53 or less. The IXR is defined as the number of carbon atoms in the polymer backbone relative to the ionic groups. A precursor group that becomes ionic by hydrolysis (such as -SO₂F) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is more preferably 43 or less, even more preferably 33 or less, and particularly preferably 23 or less.

The ion exchange capacity of the polymer (I) is, in ascending order of preference, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The term "sulfonate, carboxylate, phosphonate, and phosphate" is intended to refer to the respective salts or the respective acids that can form the salts. When a salt is used, the salt is preferably an alkali metal salt or an ammonium salt. Preferable ionic groups are a carboxylate group and a sulfonate group.

The polymer (I) preferably has water solubility. Water solubility means the property of being readily dissolved or dispersed in an aqueous medium. When the polymer (I) has water solubility, the particle size cannot be measured, or a particle size of 10 nm or less is indicated, by, for example, dynamic light scattering (DLS).

The viscosity of the aqueous solution of polymer (I) is preferably 5.0 mPa.s or more, more preferably 8.0 mPa.s or more, more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer (I) can be determined by regulating the content of the polymer (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring surface tension. Surface tension can be measured with, for example, a surface tensiometer CBVP-A3 manufactured by Kyowa Interface Science Co., Ltd.

The acid value of the polymer (I) is preferably 60 or more, more preferably 90 or more, even more preferably 120 or more, particularly preferably 150 or more, and most preferably 180 or more, and while the upper limit is not specified, it is preferably 300 or less.

When the polymer (I) has an anionic group such as -COOM, -SO₃M, -OSO₃M, or -C(CF₃)₂OM (wherein M is a metal atom, NR⁷₄, imidazolium optionally having a substituent, pyridinium optionally having a substituent, or phosphonium optionally having a substituent, and R⁷ is H or an organic group) other than an acid-type functional group, the acid value of the polymer (I) can be determined by acid-base titration after converting the anionic group into an acid-type group.

The polymer (I) may also be a polymer (11) of a monomer (11) represented by the general formula (11) wherein the content of a polymerization unit (11) based on the monomer (11) is 50 mol% or more based on all polymerization units constituting the polymer (11), and the weight average molecular weight (Mw) is 38.0 × 10⁴ or more. The polymer (11) is a novel polymer.

General formula (11): CX₂=CY-CF₂-O-Rf-A

wherein X and Y are independently H, F, CH₃, or CF₃, and at least one of X and Y is F. Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or - C(CF₃)₂OM (wherein M is H, a metal atom, NR⁷₄, imidazolium optionally having a substituent, pyridinium optionally having a substituent, or phosphonium optionally having a substituent, and R⁷ is H or an organic group).

In the general formula (11), X and Y are independently H, F, CH₃, or CF₃, and at least one of X and Y is F. X is preferably H or F, and more preferably H. Y is preferably H or F, and more preferably F.

Rf and A in the general formula (11) are the same as Rf and A in the general formula (1), respectively, which represents the monomer constituting the polymer (1).

The polymer (11) may be a homopolymer composed solely of the polymerization unit (11) based on the monomer (11), or may be a copolymer containing the polymerization unit (11) and a polymerization unit based on a further monomer that is copolymerizable with the monomer (11). The further monomer is as described above. The polymerization unit (11) may be the same or different at each occurrence, and the polymer (11) may contain polymerization units (11) based on two or more different monomers represented by the general formula (11).

The content of the polymerization unit (11) in the polymer (11) is, in ascending order of preference, 50 mol% or more, 60 mol% or more, 70 mol% or more, 80 mol% or more, 90 mol% or more, or 99 mol% or more based on all polymerization units constituting the polymer (11). The content of the polymerization unit (11) is, particularly preferably, substantially 100 mol%, and the polymer (11) is most preferably composed solely of the polymerization unit (11).

In the polymer (11), the content of the polymerization unit based on the further monomer that is copolymerizable with the monomer (11) is, in ascending order of preference, 99.0 mol% or less, 97.0 mol% or less, 95.0 mol% or less, 90 mol% or less, 80 mol% or less, 70 mol% or less, 60 mol% or less, or 50 mol% or less based on all polymerization units constituting the polymer (11). The content of the polymerization unit based on the further monomer that is copolymerizable with the monomer (11) is, particularly preferably, substantially 0 mol%, and most preferably the polymer (11) does not contain the polymerization unit based on the further monomer.

The lower limit of the weight average molecular weight of the polymer (11) is, in ascending order of preference, 38.0 × 10⁴ or more or 40.0 × 10⁴ or more. The upper limit of the weight average molecular weight of the polymer (11) is, in ascending order of preference, 150.0 × 10⁴ or less, 100.0 × 10⁴ or less, or 60.0 × 10⁴ or less.

The lower limit of the number average molecular weight of the polymer (11) is, in ascending order of preference, 5.0 × 10⁴, 8.0 × 10⁴, 10.0 × 10⁴ or more, and 12.0 × 10⁴ or more. The upper limit of the number average molecular weight of the polymer (11) is, in ascending order of preference, 75.0 × 10⁴ or less, 50.0 × 10⁴ or less, 40.0 × 10⁴ or less, or 30.0 × 10⁴ or less.

The polymer (I) may also be a polymer (12) of a monomer (12) represented by the general formula (12) wherein the content of a polymerization unit (12) based on the monomer (12) is 50 mol% or more based on all polymerization units constituting the polymer (12), and the weight average molecular weight (Mw) is 1.4 × 10⁴ or more. The polymer (12) is a novel polymer.

General formula (12): CX₂=CX-O-Rf-A

wherein X is independently F or CF₃; Rf is a fluorine-containing alkylene group having 1 to 40 carbon atoms or a fluorine-containing alkylene group having 2 to 100 carbon atoms and having an ether bond or a keto group; and A is - COOM, -SO₃M, -OSO₃M, or -C(CF₃)₂OM (wherein M is -H, a metal atom, -NR⁷₄, imidazolium optionally having a substituent, pyridinium optionally having a substituent, or phosphonium optionally having a substituent, and R⁷ is H or an organic group).

In the general formula (12), each X is independently F or CF₃. It is preferable that at least one or more X is F, and it is more preferable that all X is F.

Rf and A in the general formula (12) are the same as Rf and A in the general formula (2) representing the monomer constituting the polymer (2).

The polymer (12) may be a homopolymer composed solely of the polymerization unit (12) based on the monomer (12), or may be a copolymer comprising the polymerization unit (12) and a polymerization unit based on a further monomer that is copolymerizable with the monomer (12). The further monomer is as described above. The polymerization unit (12) may be the same or different in each occurrence, and the polymer (12) may contain polymerization units (12) based on two or more different monomers represented by the general formula (12).

The content of the polymerization unit (12) in the polymer (12) is, in an increasing order of preference, 40 mol% or more, 50 mol% or more, 60 mol% or more, 70 mol% or more, 80 mol% or more, 90 mol% or more, or 99 mol% or more based on all polymerization units constituting the polymer (12). The content of the polymerization unit (12) is, particularly preferably, substantially 100 mol%, and the polymer (12) is most preferably composed solely of the polymerization unit (12).

In the polymer (12), the content of the polymerization unit based on the further monomer that is copolymerizable with the monomer (12) is, in ascending order of preference, 50 mol% or less, 40 mol% or less, 30 mol% or less, 20 mol% or less, 10 mol% or less, or 1 mol% or less based on all polymerization units constituting the polymer (12). The content of the polymerization unit based on the further monomer that is copolymerizable with the monomer (12) is, particularly preferably, substantially 0 mol%, and most preferably the polymer (12) does not contain the polymerization unit based on the further monomer.

The lower limit of the weight average molecular weight (Mw) of the polymer (12) is, in an increasing order of preference, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, or 5.1 × 10⁴ or more. The upper limit of the weight average molecular weight (Mw) of the polymer (12) is, in an increasing order of preference, 150.0 × 10⁴ or less, 100.0 × 10⁴ or less, 60.0 × 10⁴ or less, 50.0 × 10⁴ or less, or 40.0 × 10⁴ or less.

The lower limit of the number average molecular weight (Mn) of the polymer (12) is, in ascending order of preference, 0.7 × 10⁴ or more, 0.9 × 10⁴ or more, 1.0 × 10⁴ or more, 1.2 × 10⁴ or more, 1.4 × 10⁴ or more, 1.6 × 10⁴ or more, or 1.8 × 10⁴ or more. The upper limit of the number average molecular weight (Mn) of the polymer (12) is, in an increasing order of preference, 75.0 × 10⁴ or less, 50.0 × 10⁴ or less, 40.0 × 10⁴ or less, 30.0 × 10⁴ or less, or 20.0 × 10⁴ or less.

The molecular weight distribution (Mw/Mn) of the polymer (12) is preferably 3.0 or less, more preferably 2.4 or less, even more preferably 2.2 or less, particularly preferably 2.0 or less, and most preferably 1.9 or less.

When the polymer (12) contains the polymerization unit (12) and a polymerization unit based on a further monomer that is copolymerizable with the monomer (12), the content of the polymerization unit (12) based on the monomer (12) is preferably 40 to 60 mol% and more preferably 45 to 55 mol% based on all polymerization units constituting the polymer (12), and the content of the polymerization unit based on the further monomers is preferably 60 to 40 mol% and more preferably 55 to 45 mol% based on all polymerization units constituting the polymer (12). Such a configuration is particularly suitable when the polymerization unit based on the further monomer that is copolymerizable with the monomer (12) is a polymerization unit (M) based on a monomer represented by the general formula CFR=CR₂.

When the polymer (12) contains the polymerization unit (12) and the polymerization unit based on the further monomer that is copolymerizable with the monomer (12), the alternating ratio of the polymerization unit (12) to the polymerization unit based on the further monomer that is copolymerizable with the monomer (12) is preferably 40% or more, more preferably 50% or more, even more preferably 60% or more, yet more preferably 70% or more, particularly preferably 80% or more, and most preferably 90% or more. The alternating ratio may be, for example, 40 to 99%. Such a configuration is particularly suitable when the polymerization unit based on the further monomer that is copolymerizable with the monomer (12) is a polymerization unit (M) based on a monomer represented by the general formula CFR=CR₂.

The alternating ratio between the polymerization unit (12) to the polymerization unit based on the further monomer that is copolymerizable with the monomer (12) in the polymer (12) can be determined by ¹⁹F-NMR analysis of the polymer (12).

The polymer (I) can be produced by a conventionally known method except that the above-described monomer is used.

The polymer (I) may also be a polymer (13) of a monomer (13) represented by the general formula (13) wherein the content of a polymerization unit (13) based on the monomer (13) is 50% by mass or more based on all polymerization units constituting the polymer (13). The polymer (13) is a novel polymer.

General formula (13): CX₂=CX-O-Rf-SO₃M

wherein X is independently F or CF₃; Rf is a fluorine-containing alkylene group having 1 to 40 carbon atoms or a fluorine-containing alkylene group having 2 to 100 carbon atoms and having an ether bond or a keto group; and M is -H, a metal atom, -NR⁷₄, imidazolium optionally having a substituent, pyridinium optionally having a substituent, or phosphonium optionally having a substituent, wherein R⁷ is H or an organic group.

In the general formula (13), each X is independently F or CF₃. It is preferable that at least one or more X is F, and it is more preferable that all X is F.

Rf and M in the general formula (13) are the same as Rf and A in general formula (2) representing the monomer constituting the polymer (2).

The polymer (13) may be a homopolymer composed solely of the polymerization unit (13) based on the monomer (13), or may be a copolymer comprising the polymerization unit (13) and a polymerization unit based on a further monomer that is copolymerizable with the monomer (13). The further monomer is as described above. The polymerization unit (13) may be the same or different in each occurrence, and the polymer (13) may contain polymerization units (13) based on two or more different monomers represented by the general formula (13).

In the polymer (13), the content of the polymerization unit (13) based on the monomer (13) is 50% by mass or more based on all polymerization units constituting the polymer (13). The content of the polymerization unit (13) in the polymer (13) is, in ascending order of preference, 50% by mass or more, 60% by mass or more, 70% by mass or more, 80% by mass or more, 90% by mass or more, or 99% by mass or more based on all polymerization units constituting the polymer (13). The content of the polymerization unit (13) is, particularly preferably, substantially 100% by mass, and the polymer (13) is most preferably composed solely of the polymerization unit (13).

In the polymer (13), the content of the polymerization unit based on the further monomer that is copolymerizable with the monomer (13) is, in an increasing order of preference, 50% by mass or less, 40% by mass or less, 30% by mass or less, 20% by mass or less, 10% by mass or less, or 1% by mass or less based on all polymerization units constituting the polymer (13). The content of the polymerization unit based on the further monomer that is copolymerizable with the monomer (13) is, particularly preferably, substantially 0% by mass, and most preferably the polymer (13) does not contain the polymerization unit based on the further monomer.

The lower limit of the number average molecular weight of the polymer (13) is, in an increasing order of preference, 0.3 × 10⁴ or more, 0.4 × 10⁴ or more, 0.5 × 10⁴ or more, 0.7 × 10⁴ or more, 0.8 × 10⁴ or more, 1.0 × 10⁴ or more, 1.2 × 10⁴ or more, 1.4 × 10⁴, 1.6 × 10⁴ or more, 1.8 × 10⁴ or more, 2.0 × 10⁴ or more, or 3.0 × 10⁴ or more. The upper limit of the number average molecular weight of the polymer (13) is, in an increasing order of preference, 75.0 × 10⁴ or less, 50.0 × 10⁴ or less, 40.0 × 10⁴ or less, 30.0 × 10⁴ or less, or 20.0 × 10⁴ or less.

The lower limit of the weight average molecular weight of the polymer (13) is, in an increasing order of preference, 0.4 × 10⁴ or more, 0.5 × 10⁴ or more, 0.6 × 10⁴ or more, 0.8 × 10⁴ or more, 1.0 × 10⁴ or more, 1.2 × 10⁴ or more, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, 5.1 × 10⁴ or more, 10.0 × 10⁴ or more, 15.0 × 10⁴ or more, 20.0 × 10⁴ or more, or 25.0 × 10⁴ or more. The upper limit of the weight average molecular weight of the polymer (13) is, in an increasing order of preference, 150.0 × 10⁴ or less, 100.0 × 10⁴ or less, 60.0 × 10⁴ or less, 50.0 × 10⁴ or less, or 40.0 × 10⁴ or less.

The molecular weight distribution (Mw/Mn) of the polymer (13) is, in ascending order of preference, 3.0 or less, 2.4 or less, 2.2 or less, 2.0 or less, 1.9 or less, 1.7 or less, 1.5 or less, 1.4 or less, or 1.3 or less.

Concerning the polymer (I), the polymer (11) is a novel polymer and can be produced by a production method (11) comprising polymerizing the monomer (11) represented by the general formula (11) in an aqueous medium to produce the polymer (11) of the monomer (11), wherein the oxygen concentration in the reaction system of the polymerization is maintained at 500 ppm by volume or less.

In the production method (11), the oxygen concentration in the reaction system of the polymerization is 500 ppm by volume or less. In the production method (11), the oxygen concentration in the reaction system is maintained at 500 ppm by volume or less throughout the polymerization of the monomer (11). The oxygen concentration in the reaction system is preferably 350 ppm by volume or less, more preferably 300 ppm by volume or less, even more preferably 100 ppm by volume or less, and particularly preferably 50 ppm by volume or less. The oxygen concentration in the reaction system is usually 0.01 ppm by volume or more.

In the production method (11), the polymerization temperature of the monomer (11) is preferably 59°C or lower, more preferably 57°C or lower, even more preferably 55°C or lower, and particularly preferably 53°C or lower, and is preferably 20°C or higher, more preferably 25°C or higher, even more preferably 30°C or higher, and particularly preferably 35°C or higher because the polymer (11) having a higher molecular weight can be readily produced.

In the production method (11), the monomer (11) may be copolymerized with the above-described further monomer.

In the production method (11), the polymerization pressure is usually atmospheric pressure to 10 MPaG. The polymerization pressure is suitably determined according to the type of monomer used, the molecular weight of the target polymer, and the reaction rate.

In the production method (11), the polymerization time is usually 1 to 200 hours, and may be 5 to 100 hours.

Concerning the polymer (I), the polymer (12) is a novel polymer and can be produced by a production method (12) comprising polymerizing the monomer (12) represented by the general formula (12) in an aqueous medium to produce the polymer (12) of the monomer (12), wherein the oxygen concentration in the reaction system of the polymerization is maintained at 1,500 ppm by volume or less.

In the production method (12), the oxygen concentration in the reaction system of the polymerization is 1,500 ppm by volume or less. In the production method (12), the oxygen concentration in the reaction system is maintained at 1,500 ppm by volume or less throughout the polymerization of the monomer (12). The oxygen concentration in the reaction system is preferably 500 ppm by volume or less, more preferably 100 ppm by volume or less, and even more preferably 50 ppm by volume or less. The oxygen concentration in the reaction system is usually 0.01 ppm by volume or more.

Concerning the polymer (I), the polymer (13) is a novel polymer and can be produced by a production method (13) comprising polymerizing the monomer (13) represented by the general formula (13) in an aqueous medium to produce the polymer (13) of the monomer (13).

In the production method (13), the oxygen concentration in the reaction system of the polymerization is preferably 1,500 ppm by volume or less, more preferably 500 ppm by volume or less, even more preferably 100 ppm by volume or less, and particularly preferably 50 ppm by volume or less. The oxygen concentration in the reaction system is usually 0.01 ppm by volume or more. In the production method, the oxygen concentration in the reaction system is preferably maintained within the above range throughout the polymerization of the monomer (13).

In the production method (12) and the production method (13), the polymerization temperature of the monomer (12) and the monomer (13) is preferably 70°C or lower, more preferably 65°C or lower, even more preferably 60°C or lower, particularly preferably 55°C or lower, yet more preferably 50°C or lower, particularly preferably 45°C or lower, and most preferably 40°C or lower, and is preferably 10°C or higher, more preferably 15°C or higher, and even more preferably 20°C or higher because the polymer (12) and the polymer (13) having a higher molecular weight can be readily produced.

In the production method (12) and the production method (13), the monomer (12) and the monomer (13) may be copolymerized with the above-described further monomer.

In the production method (12) and the production method (13), the polymerization pressure is usually atmospheric pressure to 10 MPaG. The polymerization pressure is suitably determined according to the type of monomer used, the molecular weight of the target polymer, and the reaction rate.

In the production method (12) and the production method (13), the polymerization time is usually 1 to 200 hours, and may be 5 to 100 hours.

In the production methods (11) to (13), the oxygen concentration in the reaction system of the polymerization can be controlled by causing, for example, an inert gas such as nitrogen or argon, or the gaseous monomer when a gaseous monomer is used, to flow through the liquid phase or the gas phase in the reactor. The oxygen concentration in the reaction system of the polymerization can be determined by measuring and analyzing the gas emitted from the discharge gas line of the polymerization system with a low-concentration oxygen analyzer.

In the production methods (11) to (13), the aqueous medium is a reaction medium in which polymerization is performed, and means a liquid that contains water. The aqueous medium is not limited as long as it contains water, and it may be a medium that contains water and, for example, a fluorine-free organic solvent such as alcohol, ether, or ketone, and/or a fluorine-containing organic solvent having a boiling point of 40°C or lower. The aqueous medium is preferably water.

In the production methods (11) to (13), the monomer can be polymerized in the presence of a polymerization initiator. The polymerization initiator is not limited as long as it can generate radicals within the polymerization temperature range, and known oil-soluble and/or water-soluble polymerization initiators can be used. The polymerization initiator can be combined with a reducing agent or the like to form a redox agent and initiate the polymerization. The concentration of the polymerization initiator is suitably determined according to the types of monomers, the molecular weight of the target polymer, and the reaction rate.

The polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfite during polymerization.

As the polymerization initiator, a persulfate is particularly preferable because a polymer having a higher molecular weight can be readily produced. Examples of persulfate include ammonium persulfate, potassium persulfate, and sodium persulfate, and ammonium persulfate is preferable.

The amount of the polymerization initiator added is not limited, and the polymerization initiator may be added in an amount that does not significantly decrease the polymerization rate (for example, a concentration of several ppm in water) or more at once in the initial stage of polymerization, or added successively or continuously. The upper limit is within a range where the reaction temperature is allowed to increase while the polymerization reaction heat is removed through the device surface, and the more preferred upper limit is within a range where the polymerization reaction heat can be removed through the device surface.

In the production methods (11) to (13), the polymerization initiator can be added at the initiation of polymerization, and can be added also during the polymerization. The proportion of the amount of the polymerization initiator added at the initiation of polymerization to the amount of the polymerization initiator added during the polymerization is preferably 95/5 to 5/95, more preferably 60/40 to 10/90, and still more preferably 30/70 to 15/85. The method for adding the polymerization initiator during the polymerization is not limited, and the entire amount may be added at once, may be added in two or more divided portions, or may be added continuously.

In the production methods (11) to (13), the total amount of the polymerization initiator added to be used in the polymerization is preferably 0.00001 to 10% by mass based on the aqueous medium because a polymer having a higher molecular weight can be readily produced. The total amount of the polymerization initiator added to be used in the polymerization is more preferably 0.0001% by mass or more, even more preferably 0.001% by mass or more, and particularly preferably 0.01% by mass or more, and is more preferably 5% by mass or less, and even more preferably 2% by mass or less.

In the production methods (11) to (13), the total amount of the polymerization initiator added to be used in the polymerization is preferably 0.001 to 10 mol% based on the monomer because a polymer having a higher molecular weight can be readily produced. The total amount of the polymerization initiator added to be used in the polymerization is more preferably 0.005 mol% or more, even more preferably 0.01 mol% or more, yet more preferably 0.1 mol% or more, and most preferably 0.5 mol% or more, and is more preferably 5 mol% or less, even more preferably 2.5 mol% or less, particularly preferably 2.2 mol% or less, and most preferably 2.0 mol% or less.

In the production methods (11) to (13), the amount of a monomer that is present and that contains the monomers (11) to (13) at the initiation of polymerization is preferably 30% by mass or more based on the amount of the aqueous medium present because a polymer having a higher molecular weight can be readily produced. The amount of the monomer present is more preferably 30% by mass or more, and even more preferably 40% by mass or more. The upper limit of the amount of the monomer present is not limited, and may be 200% by mass or less from the viewpoint of causing the polymerization to proceed smoothly. The amount of the monomer present at the initiation of polymerization is the total amount of the monomers (11) to (13) and, if any, other monomers present in the reactor at the initiation of polymerization.

In the production methods (11) to (13), polymerization may be carried out in the presence of a pH adjuster. The pH adjuster may be added before the initiation of polymerization or after the initiation of polymerization.

Examples of the pH adjuster include ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate.

In the production methods (11) to (13), polymerization of the monomers (11) to (13) can be carried out by charging a reactor with an aqueous medium, any of the monomers (11) to (13), optionally a further monomer, and optionally a further additive, stirring the contents of the reactor, maintaining the reactor at a predetermined polymerization temperature, and adding a predetermined amount of a polymerization initiator to thereby initiate the polymerization reaction. After the initiation of the polymerization reaction, the monomer, the polymerization initiator, and the further additive may be added depending on the purpose.

In the production methods (11) to (13), the polymerization of the monomer can be carried out substantially in the absence of a fluorine-containing surfactant. The expression "substantially in the absence of a fluorine-containing surfactant" in the present disclosure means that the amount of the fluorine-containing surfactant is 10 ppm by mass or less based on the aqueous medium. The amount of the fluorine-containing surfactant based on the aqueous medium is preferably 1 ppm by mass or less, more preferably 100 ppb by mass or less, even more preferably 10 ppb by mass or less, and yet more preferably 1 ppb by mass or less.

As for the fluorine-containing surfactant, the description concerning the polymerization of a fluoromonomer is also applicable to the production methods (11) to (13).

The content of the dimer and the trimer of the monomer (I) represented by the general formula (I) in the composition is preferably 1.0% by mass or less, more preferably 0.1% by mass or less, even more preferably 0.01% by mass or less, particularly preferably 0.001% by mass or less, and most preferably 0.0001% by mass or less based on the polymer (I).

### (Fluoroelastomer)

The composition of the present disclosure contains a fluoroelastomer.

The fluoroelastomer preferably has an ion exchange rate (IXR) higher than 53. A preferable fluoroelastomer has either no ionic groups at all or a limited number of ionic groups resulting in an ion exchange rate higher than about 100. Preferably, the ion exchange rate of the fluoroelastomer is preferably 1,000 or more, more preferably 2,000 or more, and even more preferably 5,000 or more.

The fluoroelastomer in the composition of the present disclosure can be produced by, for example, the following method. That is to say, polymerization of the fluoroelastomer is initiated by introducing pure water and the polymer (I) into a pressure-resistant reaction vessel equipped with a stirrer, deoxidizing the system, charging the monomers, increasing the temperature to a predetermined level, and adding a polymerization initiator. The pressure decreases as the reaction progresses, and additional monomers are fed continuously or intermittently to maintain the initial pressure. When the amount of the monomers fed reaches a predetermined level, feeding is stopped, and the monomers in the reaction vessel are purged and the temperature is returned to room temperature, whereby the reaction is completed. In this case, polymer latex can be continuously taken out of the reaction vessel.

In particular, in the case of producing the fluoroelastomer, it is also possible to use a method in which fine fluoropolymer particles are synthesized so as to have the above high concentration and then diluted for further polymerization as disclosed in International Publication No. WO 00/01741, whereby the final polymerization rate can be increased as compared with ordinary polymerization.

The polymerization for the fluoroelastomer may be performed under conditions suitably selected from the viewpoints of physical properties of the target polymer and control of the polymerization rate, and is performed at a polymerization temperature of usually -20 to 200°C, preferably 5 to 150°C, and a polymerization pressure of usually 0.5 to 10 MPaG, preferably 1 to 7 MPaG. The polymerization medium preferably has a pH usually maintained at 1.5 to 13 using a pH adjuster to be described later by a known method, for example.

Examples of the fluoromonomer used in the polymerization for the fluoroelastomer include vinylidene fluoride and, in addition, fluorine-containing ethylenically unsaturated monomers that have at least as many fluorine atoms as carbon atoms and that are copolymerizable with vinylidene fluoride. Examples of the fluorine-containing ethylenically unsaturated monomers include trifluoropropene, tetrafluoropropene, pentafluoropropene, hexafluoropropene, 2,3,3,3-tetrafluoropropene, hexafluorobutene, and octafluorobutene. In particular, hexafluoropropene or 2,3,3,3-tetrafluoropropene is particularly preferable because of the properties of the elastomer obtained when hexafluoropropene or 2,3,3,3-tetrafluoropropene blocks the crystal growth of the polymer. Examples of the fluorine-containing ethylenically unsaturated monomers also include trifluoroethylene, TFE and CTFE, and fluorine-containing monomers containing one or two or more chlorine and/or bromine substituents may also be used. Perfluoro(alkyl vinyl ether) such as perfluoro(methyl vinyl ether) may also be used. TFE and HFP are preferable for producing a fluoroelastomer.

The fluoromonomer used in the polymerization for the fluoroelastomer preferably has at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example, at least one selected from the group consisting of:
a fluoromonomer represented by the general formula (110): CF₂=CF-ORf¹¹¹
   wherein Rf¹¹¹ represents a perfluoro organic group;
a fluoromonomer represented by general formula (120): CF₂=CF-OCH₂- Rf¹²¹
   wherein Rf¹²¹ is a perfluoroalkyl group having 1 to 5 carbon atoms;
a fluoromonomer represented by the general formula (130): CF₂=CFOCF₂ORf¹³¹
   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : CF₂=CFO(CF₂CF(Y¹⁴¹)O)ₘ(CF₂)ₙF
   wherein Y¹⁴¹ represents a fluorine atom or a trifluoromethyl group; m is an integer of 1 to 4, and n is an integer of 1 to 4; and
a fluoromonomer represented by the general formula (150): CF₂=CF-O-(CF₂CFY¹⁵¹-O)ₙ-(CFY¹⁵²)ₘ-A¹⁵¹
wherein Y¹⁵¹ represents a fluorine atom, a chlorine atom, a - SO₂F group, or a perfluoroalkyl group; the perfluoroalkyl group optionally contains ether oxygen and a -SO₂F group; n represents an integer of 0 to 3; n Y¹⁵¹s are the same as or different from each other; Y¹⁵² represents a fluorine atom, a chlorine atom, or a -SO₂F group; m represents an integer of 1 to 5; m Y¹⁵²s are the same as or different from each other; A¹⁵¹ represents -SO₂X¹⁵¹, -COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same as or different from each other, and each represent -NR¹⁵⁴R¹⁵⁵ or - OR¹⁵⁶; R¹⁵¹, R¹⁵², R¹⁵³, R¹⁵⁴, R¹⁵⁵, and R¹⁵⁶ are the same as or different from each other, and each represent H, ammonium, an alkali metal, or an alkyl group, aryl group, or sulfonyl-containing group optionally containing a fluorine atom.

The "perfluoro organic group" in the present disclosure means an organic group in which all hydrogen atoms bonded to the carbon atoms are replaced by fluorine atoms. The perfluoro organic group optionally has ether oxygen.

An example of the fluoromonomer represented by the general formula (110) is a fluoromonomer in which Rf¹¹¹ is a perfluoroalkyl group having 1 to 10 carbon atoms. The perfluoroalkyl group preferably has 1 to 5 carbon atoms.

Examples of the perfluoro organic group in the general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by the general formula (110) also include those represented by the general formula (110) in which Rf¹¹¹ is a perfluoro(alkoxyalkyl) group having 4 to 9 carbon atoms; those in which Rf¹¹¹ is a group represented by the following formula: 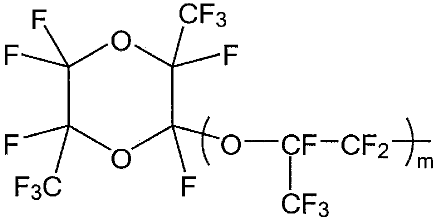
wherein m represents 0 or an integer of 1 to 4; and those in which Rf is a group represented by the following formula:

   CF₃CF₂CF₂-(O-CF(CF₃)-CF₂)ₙ-
wherein n represents an integer of 1 to 4.

In particular, the fluoromonomer represented by the general formula (110) is preferably
a fluoromonomer represented by the general formula (160): CF₂=CF-ORf¹⁶¹
wherein Rf¹⁶¹ represents a perfluoroalkyl group having 1 to 10 carbon atoms. Rf¹⁶¹ is preferably a perfluoroalkyl group having 1 to 5 carbon atoms.

The fluoroalkyl vinyl ether is preferably at least one selected from the group consisting of fluoromonomers represented by the general formulae (160), (130), and (140).

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (130) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (140) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The fluoromonomer represented by the general formula (150) is preferably at least one selected from the group consisting of CF₂=CFOCF₂CF₂SO₂F, CF₂=CFOCF₂CF(CF₃)OCF₂CF₂SO₂F, CF₂=CFOCF₂CF(CF₂CF₂SO₂F)OCF₂CF₂SO₂F, and CF₂=CFOCF₂CF(SO₂F)₂.

The fluoromonomer represented by the general formula (100) is preferably a fluoromonomer in which Rf¹⁰¹ is a linear fluoroalkyl group, and more preferably a fluoromonomer in which Rf¹⁰¹ is a linear perfluoroalkyl group. Rf¹⁰¹ preferably has 1 to 6 carbon atoms. Examples of the fluoromonomer represented by the general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

The fluoroalkyl ethylene is preferably a fluoroalkyl ethylene represented by the general formula (170):

CH₂=CH-(CF₂)ₙ-X¹⁷¹

(wherein X¹⁷¹ is H or F; and n is an integer of 3 to 10), and more preferably at least one selected from the group consisting of CH₂=CH-C₄F₉ and CH₂=CH-C₆F₁₃.

An example of the fluoroalkyl allyl ether is a fluoromonomer represented by the

general formula (180): CF₂=CF-CF₂-ORf¹¹¹

wherein Rf¹¹¹ represents a perfluoro organic group.

Rf¹¹¹ in the general formula (180) is the same as Rf¹¹¹ in the general formula (110). Rf¹¹¹ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

An example of the fluorinated vinyl heterocyclic compound is a fluorinated vinyl heterocyclic compound represented by the general formula (230): 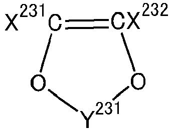 wherein X²³¹ and X²³² are each independently F, Cl, a methoxy group, or a fluorinated methoxy group; and Y²³¹ is represented by the formula Y²³² or the formula Y²³³: 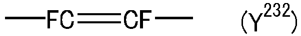 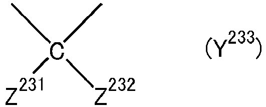 wherein Z²³¹ and Z²³² are each independently F or a fluorinated alkyl group having 1 to 3 carbon atoms.

The monomer that provides a crosslinking site is preferably at least one selected from the group consisting of:
a fluoromonomer represented by the general formula (180): CX¹⁸¹₂=CX¹⁸²-R_{f}¹⁸¹CHR¹⁸¹X¹⁸³
   wherein X¹⁸¹ and X¹⁸² are each independently a hydrogen atom, a fluorine atom, or CH₃; R_{f}¹⁸¹ is a fluoroalkylene group, a perfluoroalkylene group, a fluoro(poly)oxyalkylene group, or a perfluoro(poly)oxyalkylene group; R¹⁸¹ is a hydrogen atom or CH₃; and X¹⁸³ is an iodine atom or a bromine atom;
a fluoromonomer represented by the general formula (190): CX¹⁹¹₂=CX¹⁹²-R_{f}¹⁹¹X¹⁹³
   wherein X¹⁹¹ and X¹⁹² are each independently a hydrogen atom, a fluorine atom, or CH₃; R_{f}¹⁹¹ is a fluoroalkylene group, a perfluoroalkylene group, a fluoropolyoxyalkylene group, or a perfluoropolyoxyalkylene group; and X¹⁹³ is an iodine atom or a bromine atom;
a fluoromonomer represented by the general formula (200): CF₂=CFO(CF₂CF(CF₃)O)ₘ(CF₂)ₙ-X²⁰¹
   wherein m is an integer of 0 to 5; n is an integer of 1 to 3; and X²⁰¹ is a cyano group, a carboxyl group, an alkoxycarbonyl group, an iodine atom, a bromine atom, or -CH₂I; and
a fluoromonomer represented by the general formula (210): CH₂=CFCF₂O(CF(CF₃)CF₂O)ₘ(CF(CF₃))ₙ-X²¹¹
   wherein m is an integer of 0 to 5; n is an integer of 1 to 3; and X²¹¹ is a cyano group, a carboxyl group, an alkoxycarbonyl group, an iodine atom, a bromine atom, or-CH₂OH; and
a monomer represented by the general formula (220):

   CR²²¹R²²²=CR²²³-Z²²¹-CR²²⁴=CR²²⁵R²²⁶

   wherein R²²¹, R²²², R²²³, R²²⁴, R²²⁵, and R²²⁶ are the same as or different from each other, and are each a hydrogen atom or an alkyl group having 1 to 5 carbon atoms; Z²²¹ is a linear or branched alkylene group having 1 to 18 carbon atoms and optionally having an oxygen atom, a cycloalkylene group having 3 to 18 carbon atoms, at least partially fluorinated alkylene or oxyalkylene group having 1 to 10 carbon atoms, or a (per)fluoropolyoxyalkylene group which is represented by:

   -(Q)ₚ-CF₂O-(CF₂CF₂O)ₘ(CF₂O)ₙ-CF₂-(Q)ₚ-

   (wherein Q is an alkylene group or an oxyalkylene group; p is 0 or 1; and m/n is 0.2 to 5) and has a molecular weight of 500 to 10,000.

X¹⁸³ and X¹⁹³ are each preferably an iodine atom. R_{f}¹⁸¹ and R_{f}¹⁹¹ are each preferably a perfluoroalkylene group having 1 to 5 carbon atoms. R¹⁸¹ is preferably a hydrogen atom. X²⁰¹ is preferably a cyano group, an alkoxycarbonyl group, an iodine atom, a bromine atom, or -CH₂I. X²¹¹ is preferably a cyano group, an alkoxycarbonyl group, an iodine atom, a bromine atom, or -CH₂OH.

The monomer that provides a crosslinking site is preferably at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, and is more preferably at least one selected from the group consisting of CF₂=CFOCF₂CF(CF₃)OCF₂CF₂CN and CF₂=CFOCF₂CF₂CH₂I.

In the polymerization for the fluoroelastomer, the polymer (I) is usually added in an amount of 0.0001 to 20% by mass based on 100% by mass of the aqueous medium. It is preferably added in an amount of 10% by mass or less, and more preferably 2% by mass or less.

In the polymerization for the fluoroelastomer, the polymerization initiator used may be a known inorganic radical polymerization initiator. Examples of particularly useful inorganic radical polymerization initiators include conventionally known water-soluble inorganic peroxides, such as persulfates, perphosphates, perborates, percarbonates or permanganates of sodium, potassium, and ammonium. The radical polymerization initiator may be further activated with a reducing agent such as sulfite, bisulfite, metabisulfite, hyposulfite, thiosulfate, phosphite, or hypophosphite of sodium, potassium, or ammonium, or an easily oxidizable metal compound such as an iron(I) salt, a copper(I) salt, or a silver salt. A suitable inorganic radical polymerization initiator is ammonium persulfate, and more preferably a combination of ammonium persulfate and sodium bisulfite is used in a redox system.

The concentration of the polymerization initiator added is suitably determined according to the molecular weight of the target fluoropolymer and the polymerization reaction rate, and is set to 0.0001 to 10% by mass, preferably 0.01 to 5% by mass, based on 100% by mass of the total amount of the monomers.

In the polymerization for the fluoroelastomer, a known chain transfer agent can be used, and hydrocarbon, ester, ether, alcohol, ketone, a chlorine compound, carbonate, an iodine compound, and the like are usable. In particular, isopentane, diethyl malonate, and ethyl acetate are preferable from the viewpoint that the reaction rate is unlikely impaired, and diiodine compounds such as I(CF₂)₄I, I(CF₂)₆I, and ICH₂I are preferable from the viewpoint that the polymer terminal can be iodinated, and such a compound can be used as a reactive polymer.

The amount of the chain transfer agent used is usually 0.5 × 10⁻³ to 5 × 10⁻³ mol%, preferably 1.0 × 10⁻³ to 3.5 × 10⁻³ mol%, based on the total amount of the monomers fed.

In the polymerization for the fluoroelastomer, a phosphoric acid salt, sodium hydroxide, potassium hydroxide, or the like can be preferably used as a pH adjuster.

At completion of the polymerization, the polymerization dispersion obtained by the method for producing the composition has a solid concentration of 1.0 to 40% by mass, an average particle size of 0.03 to 1 µm, preferably 0.05 to 0.5 µm, and a number average molecular weight of 1,000 to 2,000,000.

Among fluoroelastomers, a perfluoroelastomer (a perfluororubber) can be obtained by polymerizing a perfluoromonomer in an aqueous medium in the presence of the polymer (I).

The perfluoromonomer is preferably at least one selected from the group consisting of:
tetrafluoroethylene (TFE);
hexafluoropropylene (HFP);
a fluoromonomer represented by the general formula: CF₂=CF-ORf¹³,
wherein Rf¹³ represents a perfluoroalkyl group having 1 to 8 carbon atoms;
a fluoromonomer represented by the general formula:

   CF₂=CFOCF₂ORf¹⁴,

   wherein Rf¹⁴ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms; and
a fluoromonomer represented by the general formula:

   CF₂=CFO(CF₂CF(Y¹⁵)O)ₘ(CF₂)ₙF,

   wherein Y¹⁵ represents a fluorine atom or a trifluoromethyl group, m is an integer of 1 to 4, and n is an integer of 1 to 4.

Also, in the polymerization of the perfluoromonomer, a monomer that provides a crosslinking site may be polymerized together with the perfluoromonomer.

The polymer (I) used in the method for producing a perfluoroelastomer preferably has an ion exchange capacity of 1.50 meq/g or more. The ion exchange capacity of the polymer (I) is, in ascending order of preference, 1.75 meq/g or more, 2.00 meq/g or more, 2.40 meq/g or more, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I). A precursor group that becomes ionic by hydrolysis (such as -COOCH₃) is not regarded as an ionic group for the purpose of determining the ion exchange capacity. It is presumed that the higher the ion exchange capacity of the polymer (I), the more anionic groups in the polymer (I), the more stable particles are formed, and also the higher the particle forming ability, resulting in a higher number of particles per unit water volume and a higher polymerization rate.

The polymer (I) is preferably added in an amount of 0.01 to 20% by mass based on 100% by mass of the aqueous medium. When the amount of the polymer (I) added in the polymerization (the amount present) is within the above range, the polymerization reaction of the perfluoromonomer progresses smoothly and the perfluoroelastomer can be produced efficiently.

Since the polymerization reaction of the perfluoromonomer progresses further smoothly, the amount of the polymer (I) added is more preferably 0.1% by mass or more, even more preferably 0.5% by mass or more, particularly preferably 0.75% by mass or more, and most preferably 1.0% by mass or more, based on 100% by mass of the aqueous medium.

In addition, when the amount added is excessive, effects commensurate with the amount added cannot be obtained, which is economically disadvantageous, and post-treatment after the completion of the polymerization may become complex. Accordingly, the amount of the polymer (I) added is more preferably 15% by mass or less, even more preferably 10% by mass or less, and particularly preferably 5% by mass or less, based on 100% by mass of the aqueous medium.

The polymerization of the perfluoromonomer may be carried out in the presence of a polymerization initiator. The polymerization initiator is as described above. The amount of the polymerization initiator added is preferably 0.0001 to 10% by mass, and more preferably 0.01 to 5% by mass, based on 100% by mass of the perfluoromonomer. When the amount of the polymerization initiator added in the polymerization (the amount present) is within the above range, the polymerization reaction of the perfluoromonomer progresses smoothly and the perfluoroelastomer can be produced efficiently. When the amount of the polymerization initiator added is excessively small, a sufficient polymerization rate cannot be obtained or a sufficient yield cannot be obtained.

The polymerization of the perfluoromonomer may be carried out in the presence of a pH adjuster. By carrying out the polymerization in the presence of a pH adjuster, a sufficient number of perfluoroelastomer particles can be generated at a sufficient polymerization rate while further suppressing the adhesion of the perfluoroelastomer to the polymerization tank. The pH adjuster may be added before the initiation of polymerization or after the initiation of polymerization.

Examples of the pH adjuster include aqueous ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, disodium hydrogen phosphate, sodium dihydrogen phosphate, dipotassium hydrogen phosphate, potassium dihydrogen phosphate, sodium citrate, potassium citrate, ammonium citrate, sodium gluconate, potassium gluconate, and ammonium gluconate.

Among the fluoroelastomers, a partially fluorinated elastomer can be obtained by polymerizing a fluoromonomer in an aqueous medium in the presence of the polymer (I).

The fluoromonomer for obtaining a partially fluorinated elastomer is preferably at least one selected from the group consisting of vinylidene fluoride (VdF), tetrafluoroethylene (TFE), hexafluoropropylene (HFP), a perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, an iodine-containing fluorinated vinyl ether, and a fluorine-containing monomer (2) represented by the general formula: CHX¹=CX²Rf, wherein one of X¹ and X² is H and the other is F, and Rf is a linear or branched fluoroalkyl group having 1 to 12 carbon atoms.

In the method for producing a partially fluorinated elastomer, at least vinylidene fluoride or tetrafluoroethylene is preferably polymerized as the fluoromonomer, and vinylidene fluoride is more preferably polymerized.

The polymer (I) is preferably added in an amount of 0.01 to 20% by mass based on 100% by mass of the aqueous medium. When the amount of the polymer (I) added in the polymerization (the amount present) is within the above range, the polymerization reaction of the fluoromonomer progresses smoothly, and the partially fluorinated elastomer can be produced efficiently. When the amount of the polymer (I) added is excessively small, a sufficient polymerization rate cannot be obtained or a sufficient yield cannot be obtained.

Since the polymerization reaction of the fluoromonomer progresses further smoothly, the amount of the polymer (I) added is more preferably 0.0001% by mass or more, even more preferably 0.0005% by mass or more, yet more preferably 0.001% by mass or more, particularly preferably 0.005% by mass or more, and most preferably 0.01% by mass or more, based on 100% by mass of the aqueous medium.

In addition, when the amount added is excessively large, effects commensurate with the amount added cannot be obtained, which is economically disadvantageous, and therefore, the amount of the polymer (I) added is more preferably 2% by mass or less, even more preferably 1% by mass or less, and particularly preferably 0.5% by mass or less, based on 100% by mass of the aqueous medium.

The polymerization of the fluoromonomer may be carried out in the presence of a polymerization initiator. The polymerization initiator is as described above. The amount of the polymerization initiator is suitably determined according to the types of the monomers, the molecular weight of the target partially fluorinated elastomer, and the reaction rate. The amount of the polymerization initiator is suitably determined according to the molecular weight of the target partially fluorinated elastomer and the polymerization reaction rate, and is preferably 0.00001 to 10% by mass, and more preferably 0.0001 to 1% by mass, based on 100% by mass of the total amount of the monomers.

The fluoroelastomer may be either a partially fluorinated elastomer or a perfluoroelastomer.

The partially fluorinated elastomer preferably contains a methylene group (-CH₂-) in the main chain. The partially fluorinated elastomer containing -CH₂- in the main chain is not limited as long as it contains the chemical structure represented by -CH₂-, and examples include partially fluorinated elastomers containing the structure of -CH₂-CF₂-, - CH₂-CH(CH₃)-, -CH₂-CH₂-, -CH₂-CF(CF₃)-, or the like, which for example can be introduced into the main chain of the partially fluorinated elastomer by polymerizing vinylidene fluoride, propylene, ethylene, 2,3,3,3-tetrafluoropropylene, or the like. The content of tetrafluoroethylene unit in the partially fluorinated elastomer (the content of the polymerization unit based on tetrafluoroethylene based on all polymerization units of the partially fluorinated elastomer) may be less than 40 mol%.

The partially fluorinated elastomer preferably contains a monomer unit based on at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: CF₂=CF-Rf^{a}, wherein Rf^{a} is -CF₃ or -ORf^{b} (where Rf^{b} is a perfluoroalkyl group having 1 to 5 carbon atoms). In particular, the partially fluorinated elastomer preferably contains a VdF unit or a TFE unit.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, ethylene/hexafluoropropylene (HFP)/tetrafluoroethylene (TFE)-based fluoroelastomers, and Et/TFE/PAVE-based fluoroelastomers. In particular, the partially fluorinated elastomer is preferably at least one selected from the group consisting of vinylidene fluoride-based fluoroelastomers and tetrafluoroethylene/propylene-based fluoroelastomers.

The vinylidene fluoride-based fluoroelastomer is preferably a copolymer comprising 45 to 85 mol% of vinylidene fluoride and 55 to 15 mol% of at least one other monomer that is copolymerizable with vinylidene fluoride. The vinylidene fluoride-based fluoroelastomer is more preferably a copolymer containing 50 to 80 mol% of vinylidene fluoride and 50 to 20 mol% of at least one other monomer that is copolymerizable with vinylidene fluoride.

Examples of the at least one other monomer that is copolymerizable with vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluoromonomer represented by general formula (170): CH₂=CH-(CF₂)ₙ-X¹⁷¹ (wherein X¹⁷¹ is H or F, and n is an integer of 3 to 10), and a monomer that provides a crosslinking site; and non-fluorinated monomers such as ethylene, propylene, and alkyl vinyl ethers. One of these may be used singly, or any combination thereof may be used. Of these, preferable is at least one selected from the group consisting of TFE, HFP, 2.3.3.3-tetrafluoropropene, fluoroalkyl vinyl ether, and CTFE. The fluoroalkyl vinyl ether is preferably a fluoromonomer represented by the general formula (160).

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VdF and a fluoromonomer represented by the general formula (100), rubber based on VdF, a fluoromonomer represented by the general formula (100), and TFE, rubber based on VdF and perfluoro(methyl vinyl ether) (PMVE), VdF/PMVE/TFE-based rubber, and VdF/PMVE/TFE/HFP-based rubber. The elastomer based on VdF/a fluoromonomer represented by the general formula (100) is preferably a VdF/CH₂=CFCF₃-based elastomer, and the elastomer based on VdF/a fluoromonomer represented by the general formula (100)/TFE is preferably a VdF/TFE/CH₂=CFCF₃-based elastomer.

The vinylidene fluoride-based fluoroelastomer is more preferably a VdF/HFP copolymer or a VdF/HFP/TFE copolymer, and particularly preferably one having a VdF/HFP/TFE composition of (32 to 85)/(10 to 34)/(0 to 40) (mol%). The VdF/HFP/TFE composition is more preferably (32 to 85)/(15 to 34)/(0 to 34) (mol%), and even more preferably (47 to 81)/(17 to 32)/(0 to 28) (mol%).

For example, in the VdF/HFP copolymer, the composition of VdF/HFP is preferably (45 to 85)/(15 to 55) (mol%), more preferably (50 to 83)/(17 to 50) (mol%), even more preferably (55 to 81)/(19 to 45) (mol%), and particularly preferably (60 to 80)/(20 to 40) (mol%).

The VdF/CH₂=CFCF₃-based rubber is preferably a copolymer containing 40 to 99.5 mol% of VdF and 0.5 to 60 mol% of CH₂=CFCF₃, more preferably a copolymer containing 50 to 85 mol% of VdF and 20 to 50 mol% of CH₂=CFCF₃.

The VdF/TFE/PMVE-based rubber is preferably a copolymer having a VdF/TFE/PMVE composition of (32 to 85)/(3 to 40)/(10 to 34) mol%, and more preferably a copolymer having VdF/TFE/PMVE of (45 to 81)/(4 to 30)/(16 to 28) mol%.

The Et/TFE/PAVE-based fluoroelastomer preferably has an Et/TFE/PAVE composition of (10 to 40)/(32 to 60)/(20 to 40) (mol%), and more preferably (20 to 40)/(40 to 50)/(20 to 30) (mol%). PAVE is preferably PMVE.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The fluoroelastomer may be a perfluoroelastomer. The perfluoroelastomer is preferably at least one selected from the group consisting of perfluoroelastomers containing TFE, such as a copolymer containing TFE/a fluoromonomer represented by the general formula (160), (130), or (140) and a copolymer containing TFE/a fluoromonomer represented by the general formula (160), (130), or (140)/a monomer that provides a crosslinking site.

In the case of the TFE/PMVE copolymer, the composition ratio thereof is preferably 45 to 90/10 to 55 (mol%), more preferably 55 to 80/20 to 45, and even more preferably 55 to 70/30 to 45.

In the case of the copolymer of TFE, PMVE, and a monomer that provides a crosslinking site, the composition ratio thereof is preferably 45 to 89.9/10 to 54.9/0.01 to 4 (mol%), more preferably 55 to 77.9/20 to 49.9/0.1 to 3.5, and even more preferably 55 to 69.8/30 to 44.8/0.2 to 3.

In the case of the copolymer of TFE/a fluoromonomer represented by the general formula (160), (130), or (140) having 4 to 12 carbon atoms, the composition ratio thereof is preferably 50 to 90/10 to 50 (mol%), more preferably 60 to 88/12 to 40, and even more preferably 65 to 85/15 to 35.

In the case of the copolymer of TFE/a fluoromonomer represented by the general formula (160), (130), or (140) having 4 to 12 carbon atoms/a monomer that provides a crosslinking site, the composition ratio thereof is preferably 50 to 89.9/10 to 49.9/0.01 to 4 (mol%), more preferably 60 to 87.9/12 to 39.9/0.1 to 3.5, and even more preferably 65 to 84.8/15 to 34.8/0.2 to 3.

Outside of these compositional ranges, the perfluoroelastomer tends to have no characteristics as a rubber elastic material and become more like a resin.

The perfluoroelastomer is preferably at least one selected from the group consisting of copolymers of TFE/a fluoromonomer represented by the general formula (140)/a fluoromonomer that provides a crosslinking site, copolymers of TFE/a perfluorovinyl ether represented by the general formula (140), copolymers of TFE/a fluoromonomer represented by the general formula (160), and copolymers of TFE/a fluoromonomer represented by the general formula (160)/a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-81608, and Japanese Patent Publication No. 05-13961.

From the viewpoint of achieving an excellent compression set at high temperature, the fluoroelastomer preferably has a glass transition temperature of -70°C or higher, more preferably -60°C or higher, and even more preferably -50°C or higher. From the viewpoint of achieving good low-temperature resistance, the glass transition temperature is preferably 5°C or lower, more preferably 0°C or lower, and even more preferably -3°C or lower.

The glass transition temperature can be determined as follows. Specifically, using a differential scanning calorimeter (DSC822e, manufactured by Mettler-Toledo International Inc.), 10 mg of a sample is heated at a rate of 10°C/min to give a DSC curve, and the point at which the maximum value in the differential curve of the DSC curve at the secondary transition is read as the glass transition temperature.

From the viewpoint of achieving good heat resistance, the fluoroelastomer preferably has a Mooney viscosity ML(1+20) at 170°C of 30 or higher, more preferably 40 or higher, and even more preferably 50 or higher. From the viewpoint of achieving good processability, the Mooney viscosity is preferably 150 or lower, more preferably 120 or lower, and even more preferably 110 or lower.

From the viewpoint of achieving good heat resistance, the fluoroelastomer preferably has a Mooney viscosity ML(1+20) at 140°C of 30 or higher, more preferably 40 or higher, and even more preferably 50 or higher. From the viewpoint of achieving good processability, the Mooney viscosity is preferably 180 or lower, more preferably 150 or lower, and even more preferably 110 or lower.

From the viewpoint of achieving good heat resistance, the fluoroelastomer preferably has a Mooney viscosity ML(1+10) at 100°C of 10 or higher, more preferably 20 or higher, and even more preferably 30 or higher. From the viewpoint of achieving good processability, the Mooney viscosity is preferably 120 or lower, more preferably 100 or lower, and even more preferably 80 or lower.

The Mooney viscosity can be measured in accordance with JIS K 6300 at 170°C, 140°C, or 100°C using a Mooney viscometer MV2000E model manufactured by ALPHA TECHNOLOGIES.

The fluoroelastomer may be mixed with an additive such as a curing agent and a filler and processed into a fluoroelastomer composition.

Examples of the curing agent include polyols, polyamines, organic peroxides, organotins, bis(aminophenol)tetraamine, and bis(thioaminophenol).

The fluoroelastomer may be formed into a fluoroelastomer formed article. The forming method is not limited, and may be a known method involving the above-described curing agent. Examples of the forming method include, but are not limited to, compression molding, cast molding, injection molding, extrusion forming, and forming involving Rotocure.

When the fluoroelastomer composition contains a curing agent (a cross-linking agent), a crosslinked product can be obtained as a fluoroelastomer formed article by crosslinking the fluoroelastomer composition (the crosslinkable composition). As for the crosslinking method, steam crosslinking, crosslinking by heating, radiation crosslinking, and other methods can be adopted, and among them, steam crosslinking, and crosslinking by heating are preferable. Nonlimiting specific crosslinking conditions may be suitably determined according to the types of crosslinking accelerator, cross-linking agent, acid acceptor, and others, usually within a temperature range of 140 to 250°C and a crosslinking time of 1 minute to 24 hours.

The fluoroelastomer formed article is suitable for seals, gaskets, electric wire coatings, hoses, tubes, laminated products, accessories, or the like, and, in particular, parts for semiconductor manufacturing devices, automobile parts, or the like.

Preferably, in the polymerization, the polymerization of the fluoromonomer is carried out substantially in the absence of a fluorine-containing surfactant (excluding the compound having a functional group capable of reaction by radical polymerization and a hydrophilic group). While fluorine-containing surfactants are conventionally used in the polymerization of fluoromonomers in an aqueous medium, the production method of the present disclosure enables a fluoroelastomer to be obtained even without using the fluorine-containing surfactants.

In the present disclosure, the expression "substantially in the absence of a fluorine-containing surfactant" means that the amount of the fluorine-containing surfactant is 10 ppm by mass or less based on the aqueous medium. The amount of the fluorine-containing surfactant based on the aqueous medium is preferably 1 ppm by mass or less, more preferably 100 ppb by mass or less, even more preferably 10 ppb by mass or less, and yet more preferably 1 ppb by mass or less.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant in which the molecular weight of the anionic moiety is 1,000 or less.

The "anionic moiety" means the portion of the fluorine-containing surfactant excluding the cation. For example, in the case of F(CF₂)ₙ₁COOM represented by the formula (I) described below, the anionic moiety is the "F(CF₂)ₙ₁COO" portion.

Examples of the fluorine-containing surfactant also include fluorine-containing surfactants having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (ϕ4.6 mm × 250 mm, manufactured by Tosoh Corporation), eluent: acetonitrile/0.6% by mass HClO₄ solution = 1/1 (vol/vol%), flow rate: 1.0 ml/min, sample volume: 300 µL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant described above may be a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F; the alkylene group optionally containing one or more ether bonds in which some of H are replaced by Cl; and Y⁰ is an anionic group.

The anionic group Y⁰ may be -COOM, -SO₂M, or -SO₃M, and may be -COOM or -SO₃M.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In Rfⁿ⁰, 50% or more of H atoms may be replaced with fluorine atoms.

Examples of the compound represented by the general formula (N⁰) may be a compound represented by
the following general formula (N¹):

   Xⁿ⁰-(CF₂)ₘ₁-Y⁰ (N¹)
wherein Xⁿ⁰ is H, Cl, or F; m1 is an integer of 3 to 15; and Y⁰ is as defined above;
   a compound represented by the following general formula (N²):

      Rfⁿ¹-O-(CF(CF₃)CF₂O)ₘ₂CFXⁿ¹-Y⁰ (N²)

      wherein Rfⁿ¹ is a perfluoroalkyl group having 1 to 5 carbon atoms; m2 is an integer of 0 to 3; Xⁿ¹ is F or CF₃; and Y⁰ is as defined above;
   a compound represented by the following general formula (N³):

      Rfⁿ²(CH₂)ₘ₃-(Rfⁿ³)_{q}-Y⁰ (N³)

      wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y⁰ is as defined above;
   a compound represented by the following general formula (N⁴) :

      Rfⁿ⁴-O-(CYⁿ¹Yⁿ²)ₚCF₂-Y⁰ (N⁴)

      wherein Rfⁿ⁴ is a linear or branched partially or fully fluorinated alkyl group having 1 to 12 carbon atoms and optionally containing an ether bond and/or a chlorine atom; and Yⁿ¹ and Yⁿ² are the same or different and are each H or F; p is 0 or 1; and Y⁰ is as defined above; and
   a compound represented by general formula (N⁵): 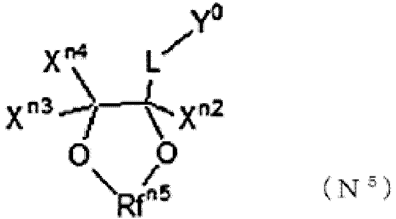 wherein Xⁿ², Xⁿ³, and Xⁿ⁴ may be the same or different and are each H, F, or a linear or branched partially or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, provided that the total number of carbon atoms in Xⁿ², Xⁿ³, Xⁿ⁴, and Rfⁿ⁵ is 18 or less.

More specific examples of the compound represented by general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) described above is represented by the following general formula (I):

F(CF₂)ₙ₁COOM (I)

wherein n1 is an integer of 3 to 14; and M is H, a metal atom, NR⁷₄, imidazolium optionally having a substituent, pyridinium optionally having a substituent, or phosphonium optionally having a substituent, wherein R⁷ is H or an organic group.

The ω-H perfluorocarboxylic acid (II) described above is represented by the following general formula (II):

H(CF₂)ₙ₂COOM (II)

wherein n2 is an integer of 4 to 15; and M is as defined above.

The perfluoroethercarboxylic acid (III) described above is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) described above is represented by the following general formula (IV):

Rf² (CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) described above is represented by the following general formula (V):

Rf⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) described above is represented by the following general formula (VI):

F(CF₂)ₙ₅SO₃M (VI)

wherein n5 is an integer of 3 to 14; and M is as defined above.

The ω-H perfluorosulfonic acid (VII) described above is represented by the following general formula (VII):

H (CF₂)ₙ₆SO₃M (VII)

wherein n6 is an integer of 4 to 14; and M is as defined above.

The perfluoroalkylalkylenesulfonic acid (VIII) described above is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) described above is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) described above is represented by the following general formula (X):

Rf⁷-O-Rf⁸-O-CF₂-COOM (X)

wherein Rf⁷ is a linear or branched partially or fully fluorinated alkyl group having 1 to 6 carbon atoms and optionally containing an ether bond and/or a chlorine atom; Rf⁸ is a linear or branched partially or fully fluorinated alkyl group having 1 to 6 carbon atoms; and M is as defined above.

The alkoxyfluorosulfonic acid (XI) described above is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) described above is represented by the following general formula (XII): 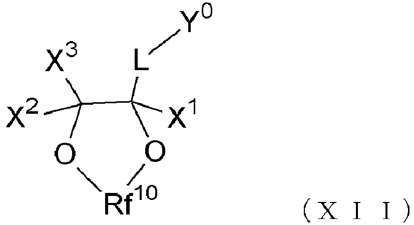 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms and containing chlorine, n9 is an integer of 0 to 3, n10 is an integer of 0 to 3, and M is as defined above. Examples of the compound (XIII) include CF₂ClO(CF₂CF(CF₃)O)ₙ₉(CF₂O)ₙ₁₀CF₂COONH₄ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be a single fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the polymerization described above, a fluoromonomer is polymerized substantially in the absence of compounds represented by the following formulae:

F(CF₂)₇COOM;

F(CF₂)₅COOM;

H(CF₂)₆COOM;

H(CF₂)₇COOM;

CF₃O(CF₂)₃OCHFCF₂COOM;

CF₃(CF₂)₅CH₂CH₂SO₃M;

C₃F₇OCF(CF₃)CF₂OCF(CF₃)COOM;

CF₃CF₂CF₂OCF(CF₃)COOM;

CF₃CF₂OCF₂CF₂OCF₂COOM;

C₂F₅OCF(CF₃)CF₂OCF(CF₃)COOM;

CF₃OCF(CF₃)CF₂OCF(CF₃)COOM;

CF₂ClCF₂CF₂OCF(CF₃)CF₂OCF₂COOM;

CF₂ClCF₂CF₂OCF₂CF(CF₃)OCF₂COOM;

CF₂ClCF(CF₃)OCF(CF₃)CF₂OCF₂COOM;

CF₂ClCF(CF₃)OCF₂CF(CF₃)OCF₂COOM;

and 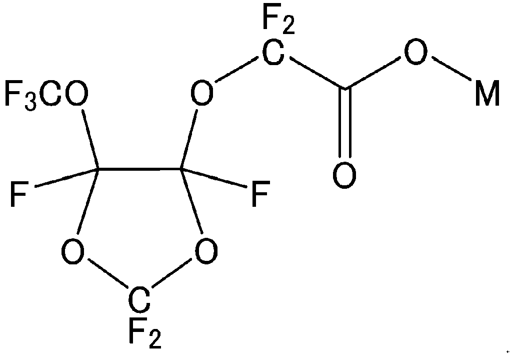 wherein M is H, a metal atom, NR⁷₄, imidazolium optionally having a substituent, pyridinium optionally having a substituent, or phosphonium optionally having a substituent, wherein R⁷ is H or an organic group.

### (Aqueous medium)

The aqueous medium used in the production method of the composition means a liquid that contains water. The aqueous medium is not limited as long as it contains water, and may be a medium that contains water as well as a fluorine-free organic solvent such as alcohol, ether, or ketone and/or a fluorine-containing organic solvent having a boiling point of 40°C or lower.

Polymerization of the fluoromonomer in the aqueous medium yields a polymerization dispersion containing the fluoroelastomer, the polymer (I), and the aqueous medium. The content (the solid concentration) of the fluoroelastomer in the polymerization dispersion is usually 10 to 50% by mass and more preferably 15% by mass or more, and is preferably 40% by mass or less and more preferably 35% by mass or less.

The content of the fluoroelastomer in the polymerization dispersion is a value obtained by drying 1 g of the polymerization dispersion in an air dryer at 150°C for 60 minutes, measuring the mass of non-volatile matter, and calculating the proportion of the mass of the non-volatile matter based on the mass (1 g) of the polymerization dispersion in percentage.

### (Form of composition, and other components)

The form of the composition of the present disclosure is not limited, and may be gum, crumb, powder, pellet, or the like, and is preferably gum or crumb. Gum is a small particulate mass of the fluoroelastomer, and crumb is an amorphous mass of the fluoroelastomer resulting from fusion of particles that cannot maintain the form of small particles as gum at room temperature. Gum or crumb is suitably obtained by drying the coagulated product obtained by coagulation.

In one embodiment, the composition of the present disclosure contains a fluorine-containing surfactant. A composition containing a fluorine-containing surfactant has an advantage that it can be stably produced with high productivity using a fluorine-containing surfactant.

In one embodiment, the composition of the present disclosure is substantially free from a fluorine-containing surfactant. In order to produce a composition substantially free from a fluorine-containing surfactant, the fluoromonomer needs to be polymerized without using a fluorine-containing surfactant, but the production method of the present disclosure involving the polymer (I) enables such a composition to be produced.

In the present disclosure, the expression "substantially free from a fluorine-containing surfactant" means that the content of the fluorine-containing surfactant in the composition is 10 ppm by mass or less, and it is preferably 1 ppm by mass or less, more preferably 100 ppb by mass or less, even more preferably 10 ppb by mass or less, further preferably 1 ppb by mass or less, and particularly preferably the fluorine-containing surfactant is below the detection limit as measured by liquid chromatography-mass spectrometry (LC/MS) .

The content of the fluorine-containing surfactant can be quantified by a known method. For example, it can be quantified by LC/MS analysis.

First, methanol is added to the composition for extraction, and the obtained extracted liquid is subjected to LC/MS analysis. In order to further increase the extraction efficiency, a treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different concentration levels of the confirmed fluorine-containing surfactant are prepared, and LC/MS analysis is performed on the aqueous solutions with the respective concentration levels, and the relationship between the concentration level and the area corresponding to that concentration level is plotted to draw a calibration curve.

Then, using the calibration curve, the area of the LC/MS chromatogram of the fluorine-containing surfactant in the extract can be converted into the content of the fluorine-containing surfactant.

### (Method for producing composition)

As described above, the composition of the present disclosure can be produced by polymerizing a fluoromonomer in an aqueous medium in the presence of the polymer (I) to give a polymerization dispersion containing a fluoroelastomer, and then subjecting the resulting polymerization dispersion to any of the following treatments: This production method enables a fluoroelastomer to be coagulated without using a coagulating agent containing an inorganic acid or a metal element.
(1) The fluoroelastomer in the polymerization dispersion is brought into contact with an alcohol having 3 to 6 carbon atoms per OH group to coagulate the fluoroelastomer;
(2) The polymerization dispersion is frozen to coagulate the fluoroelastomer; and
(3) The fluoroelastomer in the polymerization dispersion is brought into contact with an extremely limited type of organic solvent to coagulate the fluoroelastomer.

Polymerization of a fluoromonomer in an aqueous medium in the presence of the polymer (I) causes a so-called emulsion polymerization reaction to proceed, and a polymerization dispersion in which fluoroelastomer particles are dispersed in the aqueous medium is usually obtained. Then, the fluoroelastomer in the polymerization dispersion can be recovered by coagulating the fluoroelastomer particles. Next, the coagulation methods (1) to (3) will now be described in more detail.

### (Coagulation method (1))

(1) The fluoroelastomer in the polymerization dispersion is brought into contact with an alcohol having 3 to 6 carbon atoms per OH group to coagulate the fluoroelastomer.

The alcohol may be a monohydric alcohol, a dihydric alcohol, or a trihydric alcohol. The alcohol is preferably a monohydric alcohol because the efficiency of removing the polymer (I) is further improved. Also, the alcohol may be a non-fluorinated alcohol.

The number of carbon atoms per OH group of the alcohol is 3 to 6 and, because the efficiency of removing the polymer (I) is further improved, is preferably 4 or more and preferably 5 or less.

Examples of the alcohol include:
alcohols having 3 carbon atoms per OH group, such as 1-propanol and 2-propanol;
alcohols having 4 carbon atoms per OH group, such as 1-butanol, 2-butanol, 2-methyl-1-propanol, 2-methyl-2-propanol, and 1,4-cyclohexanedimethanol;
alcohols having 5 carbon atoms per OH group, such as 1-pentanol, 2-pentanol, 3-pentanol, 3-methyl-1-butanol, 2-methyl-1-butanol, 2,2-dimethyl-1-propanol, 3-methyl-2-butanol, and 2-methyl-2-butanol;
alcohols having 6 carbon atoms per OH group, such as 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 3,3-dimethyl-1-butanol, 2,3-dimethyl-2-butanol, 3,3-dimethyl-2-butanol, and 2-ethyl-1-butanol.

The alcohol may be partially substituted with a halogen atom. Examples of the alcohol partially substituted with a halogen atom include 2,2,3,3,3-pentafluoro-1-propanol, 2-(perfluorobutyl)ethanol, 1H,1H,3H-tetrafluoropropanol, and 1H,1H,5H-octafluoropentanol.

The alcohol is preferably an alcohol having a MolLogP in the range of 0.3 to 1.6 because the efficiency of removing the polymer (I) is further improved. MolLogP is more preferably 1.2 or less.

Examples of the alcohol having a MolLogP in the range of 0.3 to 1.6 include 2-methyl-1-propanol, 2-butanol, and 1-pentanol.

MolLogP is the octanol-water partition coefficient of a compound calculated using an open-source library RDKit.

In particular, the alcohol is preferably at least one selected from the group consisting of 1-butanol, 2-butanol, 2-methyl-1-propanol, and 2-methyl-2-propanol.

In coagulation, the alcohol may be solely used, or a composition containing the alcohol and an aqueous medium may be used as well.

The method for bringing the fluoroelastomer in the polymerization dispersion into contact with the alcohol is not limited, and examples include a method involving adding the polymerization dispersion to the alcohol, and a method involving adding the alcohol to the polymerization dispersion. The fluoroelastomer in the polymerization dispersion may be coagulated by stirring the mixture containing the polymerization dispersion and the alcohol to sufficiently bring the fluoroelastomer and the alcohol into contact. Also, coagulation of the fluoroelastomer may be carried out in a batch-wise manner or in a continuous manner.

The method for bringing the fluoroelastomer in the polymerization dispersion into contact with the alcohol is preferably a method involving dripping or adding the polymerization dispersion obtained by polymerization to the alcohol or a composition containing the alcohol because the efficiency of removing the polymer (I) is further improved.

The content of the fluoroelastomer in the polymerization dispersion obtained by polymerization may be regulated using water before coagulation, and the content of the fluoroelastomer in the polymerization dispersion for use in coagulation may be 5 to 40% by mass based on the polymerization dispersion.

The amount of the alcohol for use in coagulation is preferably a weight equal to or greater than 0.5 times the weight (dry weight) of the fluoroelastomer in the polymerization dispersion for use in coagulation because the efficiency of removing the polymer (I) is further improved. The amount of the alcohol for use in coagulation is more preferably 1.0 time or more and more preferably 1.5 times or more. An excessively small amount of the alcohol may result in incomplete coagulation and thus problems such as polymer loss and troubles with apparatus blockage. The upper limit of the amount of the alcohol is not limited, and the amount is preferably 40 times or less, more preferably 10 times or less, and even more preferably 5 times or less for reasons such as economy and apparatus capacity.

Before bringing the fluoroelastomer in the polymerization dispersion into contact with the alcohol, the polymerization dispersion obtained by polymerization may be suitably diluted with water. In one embodiment, the fluoroelastomer is brought into contact with the alcohol using a polymerization dispersion that is obtained by polymerization and that has a fluoroelastomer concentration of 20 to 40% based on water. In one embodiment, the fluoroelastomer is brought into contact with the alcohol using a polymerization dispersion that is obtained by polymerization and that has a fluoroelastomer concentration regulated by being diluted with water. The dilution ratio is preferably 1 to 10-fold, more preferably 1 to 6-fold, and even more preferably 1.5 to 4-fold based on the polymerization dispersion being 1. An excessively high dilution ratio tends to result in incomplete coagulation, and an excessively low dilution ratio tends to result in an increased number of washings. The alcohol may be diluted with water before bringing the fluoroelastomer in the polymerization dispersion into contact with the alcohol.

The respective temperatures of the fluoroelastomer in the polymerization dispersion and the alcohol when bringing the fluoroelastomer into contact with the alcohol is preferably 1 to 70°C, more preferably 5°C or higher, even more preferably 10°C or higher, and is more preferably 50°C or lower, even more preferably 40°C or lower, and particularly preferably 35°C or lower because the efficiency of removing the polymer (I) is further improved.

The pH of the polymerization dispersion obtained by polymerization may be regulated before coagulation, and the pH of the polymerization dispersion when bringing the fluoroelastomer in the polymerization dispersion into contact with the alcohol is preferably within the range of 3 to 10, more preferably 4 or more, and even more preferably 5 or more, and is more preferably 9 or less, and even more preferably 8 or less, to suppress corrosion of equipment used in the coagulation process. When using equipment composed of a corrosion-resistant material such as a resin lining in the coagulation process, the pH of the polymerization dispersion does not need to be regulated.

The pH can be regulated by adding an acid or an alkali to the polymerization dispersion. For example, when the pH of the polymerization dispersion is excessively low, an alkali such as ammonia may be added to the polymerization dispersion to regulate the pH of the polymerization dispersion to the above range.

When coagulation is carried out by bringing the fluoroelastomer in the polymerization dispersion into contact with the alcohol, the polymer (I) is removed from the resulting coagulated product, and it is further preferable to wash the resulting coagulated product because the efficiency of removing the polymer (I) is further improved.

A composition having a further reduced content of the polymer (I) can be obtained by coagulating the fluoroelastomer using the coagulation method (1) and washing the resulting coagulated product with water under suitable conditions. By washing the coagulated product with water under suitable conditions, the content of the polymer (I) can be reduced to, for example, less than 0.1% by mass, preferably 0.05% by mass or less, and more preferably 0.02% by mass or less based on the fluoroelastomer.

The total amount of water used to wash the coagulated product is preferably an amount corresponding to 1 to 100 times the mass of the coagulated product, more preferably an amount corresponding to 10 times the mass or more, and even more preferably an amount corresponding to 20 times the mass or more, and is more preferably an amount corresponding to 80 times the mass or less and even more preferably an amount corresponding to 60 times the mass or less. The total amount of water used to wash the coagulated product is the total amount of water used in each time of washing when washing is carried out two or more times.

The temperature of water used to wash the coagulated product is preferably 10 to 50°C.

The coagulated product may be washed one or more times. The washing method is not limited, and washing can be carried out by, for example, a method involving introducing the coagulated product and water into a washing tank and then stirring the components. When washing is carried out two or more times, washing can be carried out by a method in which the steps of introducing the coagulated product and water into a washing tank, stirring the components, and dehydrating the components are repeated. The number of times the coagulated product washed is preferably 2 or more and more preferably 3 or more, and is preferably 10 or less and more preferably 6 or less.

The fluoroelastomer after being coagulated or washed may be dried.

### (Coagulation method (2))

(2) The polymerization dispersion is frozen to coagulate the fluoroelastomer.

The fluoroelastomer can be coagulated by freezing the polymerization dispersion and then thawing the polymerization dispersion. Moreover, to reduce the content of the polymer (I) in the fluoroelastomer, a small amount of an alcohol that can be used in the coagulation method (1) or an organic solvent that can be used in the coagulation method (3) may be added to the polymerization dispersion as an auxiliary agent to such an extent that the polymerization dispersion does not coagulate, and after mixing, freezing-coagulation may be carried out.

The temperature at which the polymerization dispersion is frozen is not limited, and may be equal to or lower than the temperature at which the polymerization dispersion freezes. The freezing temperature is preferably 0 to -196°C, more preferably -5°C to -50°C, and more preferably -10°C to - 30°C or higher. An excessively high freezing temperature may result in insufficient coagulation, and an excessively low freezing temperature may require excessive energy and be economically disadvantageous.

The temperature at which the frozen polymerization dispersion is thawed is not limited, and may be equal to or higher than a temperature at which the polymerization dispersion melts and a temperature lower than the thermal decomposition temperature of the fluoroelastomer. The melting temperature is preferably 0 to 100°C and more preferably 5°C or higher, and is more preferably 70°C or lower.

When coagulation is carried out by freezing the polymerization dispersion, the polymer (I) is removed from the resulting coagulated product, and it is further preferable to wash the resulting coagulated product because the efficiency of removing the polymer (I) is further improved.

The fluoroelastomer after being coagulated or washed may be dried.

### (Coagulation method (3))

(3) The fluoroelastomer in the polymerization dispersion is brought into contact with an extremely limited type of organic solvent to coagulate the fluoroelastomer.

A usable organic solvent may be at least one selected from the group consisting of the following compounds:
carboxylic acids having 2 to 5 carbon atoms
methyl ethyl ketone
methyl acetate
dimethyl carbonate
acetone
3-methyl-2-cyclopentenone
methyl propionate
ethyl acetate
tetrahydrofuran
1,2-dimethoxyethane.

Examples of the carboxylic acid having 2 to 5 carbon atoms include acetic acid, propionic acid, ethoxyacetic acid, and valeric acid.

In coagulation, the organic solvent may be solely used, or a composition containing the organic solvent and an aqueous medium may be used as well.

The method for bringing the fluoroelastomer into contact with the organic solvent is not limited, and examples include a method involving adding the polymerization dispersion to the organic solvent, and a method involving adding the organic solvent to the polymerization dispersion. The fluoroelastomer in the polymerization dispersion may be coagulated by stirring the mixture containing the polymerization dispersion and the organic solvent to sufficiently bring the fluoroelastomer and the organic solvent into contact. Also, coagulation of the fluoroelastomer may be carried out in a batch-wise manner or in a continuous manner.

The method for bringing the fluoroelastomer dispersion into contact with the organic solvent is preferably a method involving dripping or adding the polymerization dispersion obtained by polymerization to the organic solvent or a composition containing the organic solvent because the efficiency of removing the polymer (I) is further improved.

The content of the fluoroelastomer in the polymerization dispersion obtained by polymerization may be regulated using water before coagulation, and the content of the fluoroelastomer in the polymerization dispersion for use in coagulation may be 5 to 40% by mass based on the polymerization dispersion.

The amount of the organic solvent for use in coagulation is preferably a weight equal to or greater than 0.5 times the weight (dry weight) of the fluoroelastomer in the polymerization dispersion for use in coagulation because the efficiency of removing the polymer (I) is further improved. The amount of the organic solvent for use in coagulation is more preferably 1.0 time or more and more preferably 1.5 times or more. An excessively small amount of the organic solvent may result in incomplete coagulation and thus problems such as polymer loss and troubles with apparatus blockage. The upper limit of the amount of the organic solvent is not limited, and the amount is preferably 40 times or less, more preferably 10 times or less, and even more preferably 5 times or less for reasons such as economy and apparatus capacity.

Before bringing the fluoroelastomer in the polymerization dispersion into contact with the organic solvent, the polymerization dispersion obtained by polymerization may be suitably diluted with water. In one embodiment, the fluoroelastomer is brought into contact with the organic solvent using a polymerization dispersion that is obtained by polymerization and that has a fluoroelastomer concentration of 20 to 40% based on water. In one embodiment, the fluoroelastomer is brought into contact with the organic solvent using a polymerization dispersion that is obtained by polymerization and that has a fluoroelastomer concentration regulated by being diluted with water. The dilution ratio is preferably 1 to 10-fold, more preferably 1 to 6-fold, and even more preferably 1.5 to 4-fold based on the polymerization dispersion being 1. An excessively high dilution ratio tends to result in incomplete coagulation, and an excessively low dilution ratio tends to result in an increased number of washings. The organic solvent may be diluted with water before bringing the fluoroelastomer in the polymerization dispersion into contact with the organic solvent.

The respective temperatures of the fluoroelastomer in the polymerization dispersion and the organic solvent when bringing the fluoroelastomer into contact with the organic solvent is preferably 1 to 70°C, more preferably 5°C or higher, even more preferably 10°C or higher, and is more preferably 50°C or lower, even more preferably 40°C or lower, and particularly preferably 35°C or lower because the efficiency of removing the polymer (I) is further improved.

The pH of the polymerization dispersion obtained by polymerization may be regulated before coagulation, and the pH of the polymerization dispersion when bringing the fluoroelastomer in the polymerization dispersion into contact with the organic solvent is preferably within the range of 3 to 10, more preferably 4 or more, and even more preferably 5 or more, and is more preferably 9 or less, and even more preferably 8 or less, to suppress corrosion of equipment used in the coagulation process. When using equipment composed of a corrosion-resistant material such as a resin lining in the coagulation process, the pH of the polymerization dispersion does not need to be regulated.

The pH can be regulated by adding an acid or an alkali to the polymerization dispersion. For example, when the pH of the polymerization dispersion is excessively low, an alkali such as ammonia may be added to the polymerization dispersion to regulate the pH of the polymerization dispersion to the above range.

When coagulation is carried out by bringing the fluoroelastomer in the polymerization dispersion into contact with the organic solvent, the polymer (I) is removed from the resulting coagulated product, and it is further preferable to wash the resulting coagulated product because the efficiency of removing the polymer (I) is further improved.

The fluoroelastomer after being coagulated or washed may be dried.

Next, the crosslinkable composition (the fluoroelastomer composition) of the present disclosure will now be described in detail. The crosslinkable composition of the present disclosure preferably contains a perfluoroelastomer as the fluoroelastomer.

The crosslinkable composition of the present disclosure contains the composition described above and at least one selected from the group consisting of an inorganic nitride, an organotin compound, an ammonia-generating compound, and a cross-linking agent. By crosslinking the crosslinkable composition of the present disclosure, a crosslinked product can be obtained.

The inorganic nitride is not limited, and examples include silicon nitride (Si₃N₄), lithium nitride, titanium nitride, aluminum nitride, boron nitride, vanadium nitride, and zirconium nitride. Among these, silicon nitride is preferable because it can supply nano-sized fine particles.

Examples of the organotin compound include tetraphenyltin and triphenyltin.

The ammonia-generating compound is preferably a compound that generates ammonia at 40 to 330°C.

The ammonia-generating compound is preferably urea or a derivative thereof, or an ammonium salt, more preferably urea or an ammonium salt, and even more preferably urea. The ammonium salt may be either an organic ammonium salt or an inorganic ammonium salt. Also, the ammonia-generating compound may be one that reacts with a minute amount of water to generate ammonia.

Examples of the urea derivative include biurea, thiourea, urea hydrochloride, and biuret.

Examples of the organic ammonium salt include the compounds described in Japanese Patent Laid-Open No. 9-111081, International Publication No. WO 00/09603, and International Publication No. WO 98/23675, including ammonium salts of polyfluorocarboxylic acids such as ammonium perfluorohexanoate and ammonium perfluorooctanoate; ammonium salts of polyfluorosulfonic acids such as ammonium perfluorohexanesulfonate and ammonium perfluorooctanesulfonate; ammonium salts of polyfluoroalkyl group-containing phosphoric acids or phosphonic acids such as ammonium perfluorohexanephosphate and ammonium perfluorooctanephosphate; and ammonium salts of non-fluorinated carboxylic or sulfonic acids such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, HCF₂CF₂CH(CH₃)OCONH₂, and phthalamide.

Examples of the cross-linking agent include a cross-linking agent used in peroxide crosslinking, polyol crosslinking, polyamine crosslinking, triazine crosslinking, oxazole crosslinking, imidazole crosslinking, and thiazole crosslinking.

The cross-linking agent used in peroxide crosslinking may be any organic peroxide that can easily generate peroxy radicals in the presence of heat or a redox system, and specific examples thereof may include 1,1-bis(t-butylperoxy)-3,5,5-trimethylcyclohexane, 2,5-dimethylhexane-2,5-dihydroperoxide, di-t-butyl peroxide (PERBUTYL D), t-butyl cumyl peroxide (PERBUTYL C), dicumyl peroxide (PERCUMYL D, PERCUMYL D-40, PERCUMYL D-40MB(T)), α,α-bis(t-butylperoxy)-p-diisopropylbenzene, 2,5-dimethyl-2,5-di(t-butylperoxy)hexane (PERHEXA 25B, PERHEXA 25B-40), 2,5-dimethyl-2,5-di(t-butylperoxy)-hexyne-3 (PERHEXYNE 25B, PERHEXYNE 25B-40), benzoyl peroxide, t-butylperoxybenzene, 2,5-dimethyl-2,5-di(benzoylperoxy)hexane (PERHEXA 25Z), t-butyl peroxymaleate (t-butyl MA), t-butyl peroxyisopropylcarbonate (PERBUTYL I-75), methyl ethyl ketone peroxide (PERMEK D (DR), PERMEK H (HR, HY), PERMEK N (NR, NY), PERMEK S (SR), PERMEK F (FR), PERMEK G (GR, GY)), cyclohexanone peroxide (PERHEXA H), acetylacetone peroxide (PERCURE AH, AL), 1,1-di(t-hexylperoxy)-3,3,5-trimethylcyclohexane (PERHEXA TMH), 1,1-di(t-hexylperoxy)cyclohexane (PERHEXA HC), 1,1-di(t-butylperoxy)-2-methylcyclohexane (PERHEXA MC), 1,1-di(t-butylperoxy)cyclohexane (PERHEXA C-80 (S), PERHEXA C-75 (EB), PERHEXA C (C), PERHEXA C-40, PERHEXA C-40MB (S)), 2,2-di(t-butylperoxy)butane (PERHEXA 22), butyl 4,4-di-(t-butylperoxy)pentanoate (PERHEXA V, PERHEXA V-40 (F)), 2,2-di(4,4-di-(t-butylperoxy)cyclohexyl)propane (PERTETRA A), p-menthane hydroperoxide (PERMENTA H), diisopropylbenzene hydroperoxide (PERCUMYL P), 1,1,3,3-tetramethylbutyl hydroperoxide (PEROCTA H), cumene hydroperoxide (PERCUMYL H-80), t-butyl hydroperoxide (PERBUTYL H-69), di(2-t-butylperoxyisopropyl)benzene (PERBUTYL P, PERBUTYL P-40, PEROXYMON F-40, PERBUTYL P-40MB(K)), di-t-hexyl peroxide (PERHEXYL D), diisobutyryl peroxide (PEROYL IB), di(3,5,5-trimethylhexanoyl) peroxide (PEROYL 355 (S)), dilauroyl peroxide (PEROYL L), disuccinic acid peroxide (PEROYL SA), di-(3-methylbenzoyl) peroxide, benzoyl (3-methylbenzoyl) peroxide, and a mixture of dibenzoyl peroxides (NYPER BMT-K40, NYPER BMT-M), dibenzoyl peroxide (NYPER BW, NYPER BO, NYPER FF, NYPER BS, NYPER E, NYPER NS), di(4-methylbenzoyl) peroxide (NYPER PMB), di-n-propyl peroxydicarbonate (PEROYL NPP-50M), diisopropyl peroxydicarbonate (PEROYL IPP-50, PEROYL IPP-27), di(4-t-butylcyclohexyl) peroxydicarbonate (PEROYL TCP), di(2-ethylhexyl) peroxydicarbonate (PEROYL OPP), di-sec-butyl peroxydicarbonate (PEROYL SBP), cumyl peroxyneodecanoate (PERCUMYL ND, PERCUMYL ND-50E), 1,1,3,3-tetramethylbutyl peroxyneodecanoate (PEROCTA ND, PEROCTA ND-50E), t-hexyl peroxyneodecanoate (PERHEXYL ND, PERHEXYL ND-50E), t-butyl peroxyneodecanoate (PERBUTYL ND, PERBUTYL ND-50E), t-butyl peroxyneoheptanoate (PERBUTYL NHP), t-hexyl peroxypivalate (PERHEXYL PV, PERHEXYL PV-50E), t-butyl peroxypivalate (PERBUTYL PV, PERBUTYL PV-40E), 1,1,3,3-tetramethylbutyl peroxy-2-ethylhexanoate (PEROCTA O), 2,5-dimethyl-2,5-di(2-ethylhexanoylperoxy)hexane (PERHEXA 25O), t-hexyl peroxy-2-ethylhexanoate (PERHEXYL O, PERCURE HO(N)), t-butyl peroxy-2-ethylhexanoate (PERBUTYL O, PERCURE O), t-hexyl peroxyisopropylmonocarbonate (PERHEXYL I), t-butyl peroxy-3,5,5-trimethylhexanoate (PERBUTYL 355), t-butyl peroxylaurate (PERBUTYL L), t-butyl peroxy-2-ethylhexylmonocarbonate (PERBUTYL E), t-hexyl peroxybenzoate (PERHEXYL Z), t-butyl peroxyacetate (PERBUTYL A), a mixture of t-butyl peroxy-3-methylbenzoate and t-butyl peroxybenzoate (PERBUTYL ZT), t-butyl peroxybenzoate (PERBUTYL Z), t-butyl peroxyallylmonocarbonate (PEROMER AC), 3,3',4,4'-tetra(t-butylperoxycarbonyl)benzophenone (BTTB-25), and 2,3-dimethyl-2,3-diphenylbutane (NOFMER BC-90). Among these, preferable are of the dialkyl type. Furthermore, 2,5-dimethyl-2,5-di(t-butylperoxy)hexane is particularly preferable. In general, the type and amount of organic peroxide to be used are selected in consideration of the amount of active -O-O-, decomposition temperature, and the like.

Also, the cross-linking aid that can be used in this case is any compound that has reaction activity for peroxy radicals and polymer radicals, and examples thereof include a polyfunctional compound having a functional group such as - CH=CH₂, -CH₂CH=CH₂, -CF=CF₂, -C(CF₃)=CF₂, -C(CH₃)=CF₂, - CF=CF (CF₃), -CF=CF(CH₃), -C(C₆H₅)=CF₂, -CF=CF(C₆H₅), -CH=CF₂, - CF=CHF, -C(CF₃)=CHF, -CF=CH(CF₃), and -CH=CF(CF₃) ("C₆H₅" in each formula represents a phenyl group). Specific examples include triallyl cyanurate, triallyl isocyanurate (TAIC), triacrylformal, triallyl trimellitate, N,N'-n-phenylenebismaleimide, dipropagyl terephthalate, diaryl phthalate, tetraallyl terephthalateamide, triallyl phosphate, bismaleimide, fluorinated triallyl isocyanurate (1,3,5-tris(2,3,3-trifluoro-2-propenyl)-1,3,5-triazine 2,4,6-trione), tris(diallylamine)-S-triazine, triallyl phosphite, N,N-(diallylacrylamide), and 1,6-divinyldodecafluorohexane.

In addition, examples of the cross-linking aid to be used together with the peroxide cross-linking agent may also include a compound represented by the general formula (31): 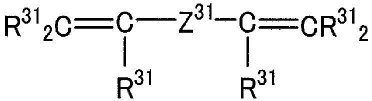 wherein six R³¹ are each independently H, a halogen atom, or an optionally halogenated group having 1 to 5 carbon atoms and optionally having an ether bond intercalated therein, and Z³¹ is an optionally halogenated, linear or branched alkylene group having 1 to 18 carbon atoms and optionally containing a heteroatom, a cycloalkylene group, or a (per)fluoropolyoxyalkylene group.

Examples of the compound represented by the general formula (31) may include:
a compound represented by the general formula (32): 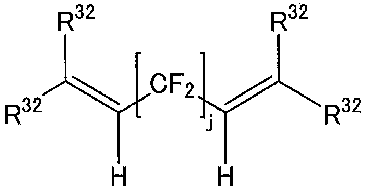 wherein j is an integer of 2 to 10, preferably an integer of 4 to 8; four R³² are each independently H, F, or an alkyl group or (per)fluoroalkyl group having 1 to 5 carbon atoms;
a compound represented by the general formula (33): 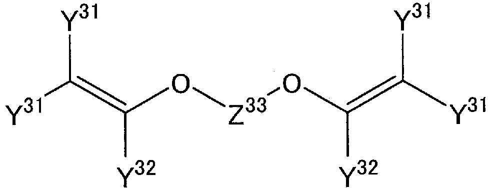 wherein Y³¹ is each independently F, Cl, or H; Y³² is each independently F, Cl, H, or OR³³ (where R³³ is an optionally partially, substantially, or fully fluorinated or chlorinated, branched or linear alkyl group); Z³³ is an optionally fluorinated divalent group having 2 to 10 carbon atoms and optionally having an ether bond intercalated therein, and Z³³ is preferably a -(CF₂)ₘ- group where m is an integer of 3 to 5; and the compound represented by the general formula (33) is preferably F₂C=CF-O-(CF₂)₅-O-CF=CF₂; and
a compound represented by the general formula (34): 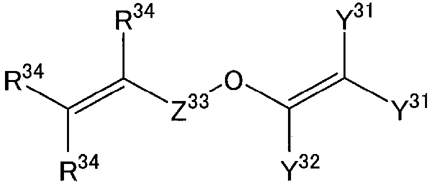 wherein Y³¹, Y³², and Z³³ are as defined above, and each R³⁴ is independently H, F, or an alkyl group or (per)fluoroalkyl group having 1 to 5 carbon atoms.

Examples of the cross-linking agent or the cross-linking aid to be used together with the peroxide cross-linking agent may also include a compound having at least one structure represented by the general formula (35): 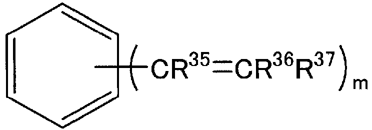 wherein R³⁵ to R³⁷ are each independently a hydrogen atom, a fluorine atom, an alkyl group, a fluorinated alkyl group, or a substituted or unsubstituted aryl group, and at least one of R³⁵ to R³⁷ is a fluorine atom or a group containing a fluorine atom; m is an integer of 1 to 5; when m is 2 or more, m R³⁵ to R³⁷ may be the same as or different from each other; and the hydrogen atoms of the benzene ring may be substituted. When m is 1, the compound preferably has 2 or more of the structures.

Examples of the compound represented by the general formula (35) may include:
a compound represented by the general formula (36): 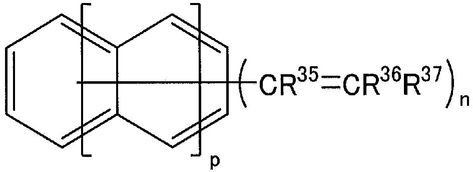
wherein R³⁵ to R³⁷ are as defined above, p is an integer of 0 to 2, and n is an integer of 2 to 6; and
a compound represented by the general formula (37): 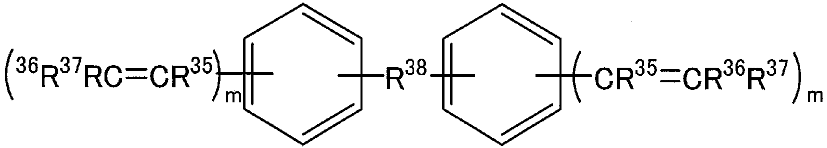
wherein R³⁵ to R³⁷ are as defined above, R³⁸ is a single bond, -SO₂-, -O-, -S-, -CO-, a heteroatom-containing group, a substituted or unsubstituted alkylene group, a substituted or unsubstituted cycloalkylene group, or a substituted or unsubstituted arylene group, m is an integer of 1 to 5, and these groups may be partially or fully fluorinated.

The heteroatom-containing group is not limited as long as it is a divalent group containing a heteroatom. Examples of the heteroatom may include an oxygen atom, a nitrogen atom, a sulfur atom, a boron atom, and a phosphorus atom.

Examples of the cross-linking agent used in polyol crosslinking include a polyhydric alcohol compound such as bisphenol A and bisphenol AF.

Examples of the cross-linking agent used in polyamine crosslinking include a polyvalent amine compound such as hexamethylenediamine carbamate, N,N'-dicinnamylidene-1,6-hexanediamine, and 4,4'-bis(aminocyclohexyl)methane carbamate.

Examples of the cross-linking agent used in triazine crosslinking include an organotin compound such as tetraphenyltin and triphenyltin.

Examples of the cross-linking agent used in oxazole crosslinking, imidazole crosslinking, and thiazole crosslinking include:
a bisdiaminophenyl cross-linking agent, a bisaminophenol cross-linking agent, or a bisaminothiophenol cross-linking agent represented by the general formula (41): 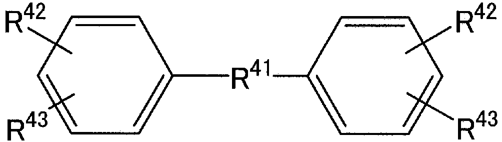
wherein R⁴¹ is -SO₂-, -O-, -CO-, an alkylene group having 1 to 6 carbon atoms, a perfluoroalkylene group having 1 to 10 carbon atoms, single bond, or a group represented by: 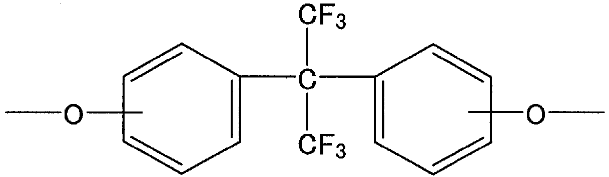
one of R⁴² and R⁴³ is -NH₂ and the other is -NHR⁴⁴, -NH₂, -OH, or -SH, where R⁴⁴ is hydrogen atom, fluorine atom, or a monovalent organic group, and preferably R⁴² is -NH₂ and R⁴³ is -NHR⁴⁴, specific preferable examples of the alkylene group having 1 to 6 carbon atoms may include a methylene group, an ethylene group, a propylene group, a butylene group, a pentylene group, and a hexylene group, and examples of the perfluoroalkylene group having 1 to 10 carbon atoms include: 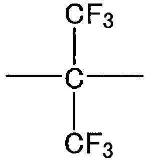
, and note that these compounds are known as examples of bisdiaminophenyl compounds in Japanese Patent Publication No. 2-59177, Japanese Patent Laid-Open No. 8-120146, and the like;
a bisamidrazone cross-linking agent represented by a general formula (42): 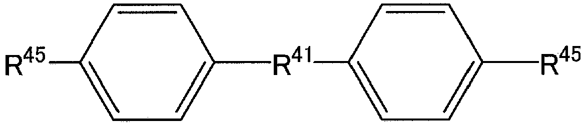
wherein R⁴¹ is as defined above, and each R⁴⁵ is independently any one of the following groups: 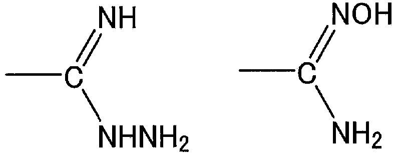
an amidrazone cross-linking agent represented by a general formula (43): 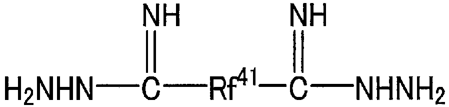
wherein Rf⁴¹ is a perfluoroalkylene group having 1 to 10 carbon atoms;
a bisamidoxime cross-linking agent represented by a general formula (44):

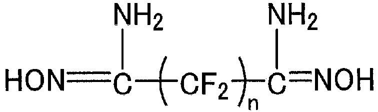

wherein n is an integer of 1 to 10; and
a compound represented by a general formula (45):

   HN=CR⁴⁵R⁴⁶

   wherein R⁴⁵ is selected from the group consisting of H, NH₂, and NHR⁴⁷; R⁴⁶ is selected from the group consisting of Ph, SO₂H, NR⁴⁸R⁴⁹, 2-pyridine, and CH₂CONH₂; R⁴⁷ is selected from the group consisting of Ph, NH₂, and CN; R⁴⁸ is selected from the group consisting of H, NHPh, CH₂CONH₂, a linear alkyl group having 1 to 8 carbon atoms, and a branched alkyl group having 1 to 8 carbon atoms; and R⁴⁹ is selected from the group consisting of Ph, COOC(CH₃)₃, NH₂, CH₂COOH, CSNH₂, CNHNH₃⁺Cl⁻, p-phenyl-CN, 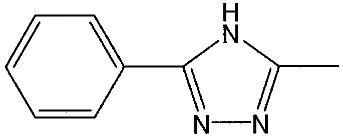 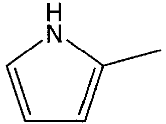 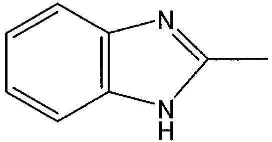 and COPh. These bisaminophenol cross-linking agent, bisaminothiophenol cross-linking agent, and bisdiaminophenyl cross-linking agent are conventionally used in crosslinking systems that use cyano groups as crosslinking points, but they also react with carboxyl groups and alkoxycarbonyl groups to form oxazole rings, thiazole rings, and imidazole rings, providing crosslinked products.

Examples of the cross-linking agent may also include a cross-linking agent represented by a general formula (46): X⁴¹-(CH₂)ₙ-R⁵⁰-(CH₂)ₘ-X⁴¹ (in the formula, X⁴¹ is each independently an alkyne group, a cyano group, or Y⁴¹_{P}N₃ (Y⁴¹ is SO, SO₂, C₆H₄, or CO and p is 0 or 1); n and m are each independently an integer of 1 to 4; and R⁵⁰ is selected from the group consisting of:
i) a fluoroalkylene group having 3 to 10 carbon atoms;
ii) a fluoroalkoxylene group having 3 to 10 carbon atoms;
iii) a substituted arylene group;
iv) an oligomer comprising copolymerization units of vinylidene fluoride and perfluoro(methyl vinyl ether);
v) an oligomer comprising copolymerization units of vinylidene fluoride and hexafluoropropylene;
vi) an oligomer comprising copolymerization units of tetrafluoroethylene and perfluoro(methyl vinyl ether); and
vii) an oligomer comprising copolymerization units of tetrafluoroethylene and a hydrocarbon olefin). This cross-linking agent is preferably used together with a perfluoroelastomer having a cyano group, an azide group, a sulfonyl azide group, a carbonyl azide group, or an alkyne group. For example, a cyano group of the perfluoroelastomer reacts with an azide group of the cross-linking agent to form a tetrazole ring, providing a crosslinked product.

Examples of the particularly preferable cross-linking agent include a compound having multiple 3-amino-4-hydroxyphenyl groups or 3-amino-4-mercaptophenyl groups, and a compound represented by the general formula (47): 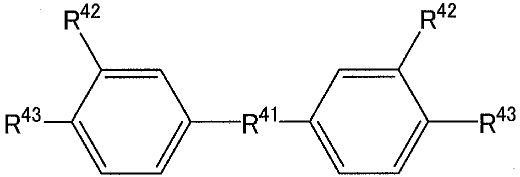 wherein R⁴¹, R⁴², and R⁴³ are as defined above, and specific examples include 2,2-bis(3-amino-4-hydroxyphenyl)hexafluoropropane (generic name: bis(aminophenol) AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane, 2,2-bis[3-amino-4-(N-phenylamino)phenyl]hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane.

In particular, the cross-linking agent is preferably 2,2-bis[3-amino-4-(N-phenylamino)phenyl]hexafluoropropane (AFTA-Ph) from the viewpoint of heat resistance, steam resistance, amine resistance, and good crosslinkability.

The content of the cross-linking agent is preferably 0.05 to 10 parts by mass, and more preferably 0.5 to 5 parts by mass, based on 100 parts by mass of the fluoroelastomer (perfluororubber).

In one embodiment, the crosslinkable composition of the present disclosure contains a perfluoroelastomer having an iodine atom or a bromine atom as the fluoroelastomer.

When the crosslinkable composition of the present disclosure contains a perfluoroelastomer having an iodine atom or a bromine atom, a crosslinked product, the compression set of which is extremely small, can be obtained. The reason therefor is because the content of the polymer (I) in the crosslinkable composition of the present disclosure is significantly reduced.

The content of the polymer (I) in the crosslinkable composition of the present disclosure is preferably 0.0001 to 1.0% by mass based on the perfluoroelastomer having an iodine atom or a bromine atom. The content of the polymer (I) is more preferably 0.001% by mass or more, even more preferably 0.005% by mass or more, and particularly preferably 0.01% by mass or more, and is more preferably 0.5% by mass or less and even more preferably 0.2% by mass or less based on the perfluoroelastomer having an iodine atom or a bromine atom because the compression set of the resulting crosslinked product is further reduced. The content of the polymer (I) may be less than 0.1% by mass, 0.05% by mass or less, or 0.02% by mass or less based on the perfluoroelastomer having an iodine atom or a bromine atom.

When the crosslinkable composition of the present disclosure contains a perfluoroelastomer having an iodine atom or a bromine atom, the crosslinkable composition preferably contains an organic peroxide as the cross-linking agent. The above-described organic peroxide can be suitably used.

When the crosslinkable composition of the present disclosure contains a perfluoroelastomer having an iodine atom or a bromine atom, the crosslinkable composition preferably contains a cross-linking aid, and more preferably contains an organic peroxide and a cross-linking aid. The above-described cross-linking aid can be suitably used.

Next, the perfluoroelastomer having an iodine atom or a bromine atom will now be described.

The perfluoroelastomer having an iodine atom or a bromine atom preferably has an iodine atom or a bromine atom at a main-chain terminal and/or in a side chain. The perfluoroelastomer having an iodine atom or a bromine atom may have both an iodine atom and a bromine atom.

The perfluoroelastomer having iodine or bromine atoms is preferably at least one selected from the group consisting of a perfluoroelastomer containing a monomer unit having an iodine atom or a bromine atom, a perfluoroelastomer having an iodine atom or a bromine atom at a main-chain terminal, and a perfluoroelastomer having an iodine atom or a bromine atom at a main-chain terminal and also containing a monomer unit having an iodine atom or a bromine atom.

Examples of the monomer having an iodine atom or a bromine atom include monomers represented by

Formula: CX⁴₂=CX⁵R_{f}²-X

wherein X⁴ and X⁵ are each independently H, F, or an alkyl group having 1 to 5 carbon atoms; Rf² is a linear or branched alkylene group or oxyalkylene group in which some or all hydrogen atoms may be replaced with fluorine atoms, optionally having one or more oxygen atoms derived from an ether bond, and optionally having an aromatic ring; and X is an iodine atom or a bromine atom.

Examples of the monomer having an iodine atom or a bromine atom include monomers represented by

Formula: CX¹⁶₂=CX¹⁶-Rf¹⁶CHR¹⁶X

wherein X¹⁶ is each independently a hydrogen atom, a fluorine atom, or CH₃; Rf¹⁶ is a fluoroalkylene group, a perfluoroalkylene group, a fluoro(poly)oxyalkylene group, or a perfluoro(poly)oxyalkylene group; R¹⁶ is a hydrogen atom or CH₃; and X is an iodine atom or a bromine atom;

Formula: CX¹⁶₂=CX¹⁶-Rf¹⁷X

wherein X¹⁶ is each independently a hydrogen atom, a fluorine atom, or CH₃; Rf¹⁷ is a fluoroalkylene group, a perfluoroalkylene group, a fluoro(poly)oxyalkylene group, or a perfluoro(poly)oxyalkylene group; and X is an iodine atom or a bromine atom;

Formula: CF₂=CFO(CF₂CF(CF₃)O)ₘ(CF₂)ₙ-X

wherein m is an integer of 0 to 5; n is an integer of 1 to 3; and X is an iodine atom, a bromine atom, or -CH₂I; and

Formula: CH₂=CFCF₂O(CF(CF₃)CF₂O)ₘ(CF(CF₃))ₙ-X

wherein m is an integer of 0 to 5; n is an integer of 1 to 3; and X is an iodine atom or a bromine atom. One of these monomers can be used singly, or these monomers can be used in any combination.

X¹⁶ is preferably a fluorine atom. Rf¹⁶ and Rf¹⁷ are each preferably a perfluoroalkylene group having 1 to 5 carbon atoms. R¹⁶ is preferably a hydrogen atom.

The monomer having an iodine atom or a bromine atom is preferably at least one selected from the group consisting of CF₂=CFOCF₂CF(CF₃)OCF₂CF₂CH₂I, CF₂=CFOCF₂CF₂CH₂I, and CH₂=CHCF₂CF₂I, and more preferably CF₂=CFOCF₂CF₂CH₂I.

The perfluoroelastomer having an iodine atom or a bromine atom at a main-chain terminal can be produced by using an iodine compound or a bromine compound as a chain transfer agent when producing the perfluoroelastomer by polymerizing a monomer. Examples of a polymerization method performed using an iodine compound or a bromine compound include a method in which emulsion polymerization is carried out in an aqueous medium under pressure in the presence of the iodine compound or the bromine compound in a substantially oxygen-free state (an iodine transfer polymerization method). Representative examples of the iodine compound or the bromine compound used include a compound represented by the general formula:

R²¹IₓBr_{y}

wherein x and y are each an integer of 0 to 2 and satisfy 1 ≤ x + y ≤ 2; and R²¹ is a saturated or unsaturated fluorohydrocarbon group or chlorofluorocarbon group having 1 to 16 carbon atoms or a hydrocarbon group having 1 to 3 carbon atoms and optionally containing an oxygen atom.

Examples of the iodine compound or the bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. One of these compounds may be used singly, or these compounds may be used in any combination.

Among these, 1,4-diiodoperfluorobutane, 1,6-diiodoperfluorohexane, or 2-iodoperfluoropropane is preferably used from the viewpoint of polymerization reactivity, cross-linking reactivity, availability, and the like.

The content of iodine atom and bromine atom in the perfluoroelastomer having an iodine atom or a bromine atom is preferably 0.001 to 10% by mass, more preferably 0.01% by mass or more, and even more preferably 0.1% by mass or more, and is more preferably 5% by mass or less. An excessively small content of iodine atom and bromine atom results in a large haze value, and a crosslinked product exhibiting excellent transparency may not be obtained. The content of iodine atom and bromine atom can be measured by elemental analysis.

The perfluoroelastomer having an iodine atom or a bromine atom is preferably at least one selected from the group consisting of perfluoroelastomers containing a TFE unit and having an iodine atom or a bromine atom, such as a copolymer of TFE/a fluoromonomer represented by the general formula (160), (130), or (140) and a copolymer of TFE/a fluoromonomer represented by the general formula (160), (130), or (140)/a monomer having an iodine atom or a bromine atom.

When the perfluoroelastomer having an iodine atom or a bromine atom is a copolymer of TFE/perfluoro(methyl vinyl ether) (PMVE), the perfluoroelastomer having an iodine atom or a bromine atom preferably has a composition (mol%) of 45 to 90/10 to 55, more preferably 55 to 80/20 to 45, even more preferably 55 to 70/30 to 45, and most preferably 56 to 69.5/30.5 to 44.

When the perfluoroelastomer having an iodine atom or a bromine atom is a copolymer of TFE/PMVE/a monomer having an iodine atom or a bromine atom, the perfluoroelastomer having an iodine atom or a bromine atom preferably has a composition (mol%) of 45 to 89.9/10 to 54.9/0.01 to 4, more preferably 55 to 77.9/20 to 49.9/0.01 to 3.5, even more preferably 55 to 69.8/30 to 44.8/0.03 to 3.0, and most preferably 55.3 to 69.5/30.3 to 44.5/0.05 to 2.5.

When the perfluoroelastomer having an iodine atom or a bromine atom is a copolymer of TFE/a fluoromonomer represented by the general formula (160), (130), or (140) and having 4 to 12 carbon atoms, the perfluoroelastomer having an iodine atom or a bromine atom preferably has a composition (mol%) of 50 to 90/10 to 50, more preferably 60 to 88/12 to 40, even more preferably 65 to 85/15 to 35, and most preferably 66 to 84/16 to 34.

When the perfluoroelastomer having an iodine atom or a bromine atom is a copolymer of TFE/a fluoromonomer represented by the general formula (160), (130), or (140) and having 4 to 12 carbon atoms/a monomer having an iodine atom or a bromine atom, the perfluoroelastomer having an iodine atom or a bromine atom preferably has a composition (mol%) of 50 to 89.9/10 to 49.9/0.01 to 4, more preferably 60 to 87.9/12 to 39.9/0.1 to 3.5, even more preferably 65 to 84.8/15 to 34.8/0.2 to 3.0, and most preferably 66 to 84.3/15.5 to 33.8/0.2 to 2.0.

Outside of these compositional ranges, the perfluoroelastomer tends to have no characteristics as a rubber elastic material and become more like a resin.

The perfluoroelastomer having an iodine atom or a bromine atom is more preferably at least one selected from the group consisting of a copolymer of TFE/perfluorovinyl ether represented by the general formula (140), a copolymer of TFE/a fluoromonomer represented by the general formula (140)/a monomer having an iodine atom or a bromine atom, a copolymer of TFE/a fluoromonomer represented by the general formula (160), and a copolymer of TFE/a fluoromonomer represented by the general formula (160)/a monomer having an iodine atom or a bromine atom.

The perfluoroelastomer having an iodine atom or a bromine atom preferably has a glass transition temperature of -70°C or higher, more preferably -60°C or higher, and even more preferably -50°C or higher, from the viewpoint of excellent compression set properties at high temperatures. Also, the perfluoroelastomer preferably has a glass transition temperature of 5°C or lower, more preferably 0°C or lower, and even more preferably -3°C or lower, from the viewpoint of good low-temperature resistance.

By using a differential scanning calorimeter (manufactured by Mettler-Toledo, DSC822e) and increasing the temperature of 10 mg of the sample at 10°C/min, a DSC curve is obtained, and then the temperature indicating the midpoint of the two intersections between the extension line of the baseline before and after the secondary transition of the DSC curve and the tangent line at the inflection point of the DSC curve is determined and used as the above glass transition temperature.

The perfluoroelastomer having an iodine atom or a bromine atom preferably has a Mooney viscosity ML (1 + 10) at 100°C of 10 or more, more preferably 20 or more, and even more preferably 25 or more, from the viewpoint of good heat resistance. Also, the perfluoroelastomer preferably has a Mooney viscosity of 120 or less, more preferably 100 or less, and even more preferably 80 or less, from the viewpoint of good processability.

The Mooney viscosity can be measured at 100°C in accordance with JIS K 6300 using a Mooney viscometer MV 2000E manufactured by ALPHA TECHNOLOGIES.

In one embodiment, the crosslinkable composition of the present disclosure contains a perfluoroelastomer having a cyano group as the fluoroelastomer.

The crosslinkable composition of the present disclosure, when containing a perfluoroelastomer having a cyano group, can be crosslinked at a high crosslinking rate. The reason therefor is because the content of the polymer (I) in the above composition contained in the crosslinkable composition of the present disclosure is significantly reduced.

The content of the polymer (I) in the crosslinkable composition of the present disclosure is preferably 0.0001 to 1.0% by mass based on the perfluoroelastomer having a cyano group. The content of the polymer (I) is more preferably 0.001% by mass or more, even more preferably 0.005% by mass or more, and particularly preferably 0.01% by mass or more, and is more preferably 0.5% by mass or less and even more preferably 0.2% by mass or less based on the perfluoroelastomer having a cyano group because the crosslinking rate of the crosslinkable composition is further increased. The content of the polymer (I) may be less than 0.1% by mass, 0.05% by mass or less, or 0.02% by mass or less based on the perfluoroelastomer having a cyano group.

The crosslinkable composition of the present disclosure, when containing a perfluoroelastomer having a cyano group, preferably contains at least one selected from the group consisting of an inorganic nitride, an organotin compound, an ammonia-generating compound, a compound having a plurality of 3-amino-4-hydroxyphenyl groups or 3-amino-4-mercaptophenyl groups, and a compound represented by the general formula (47): 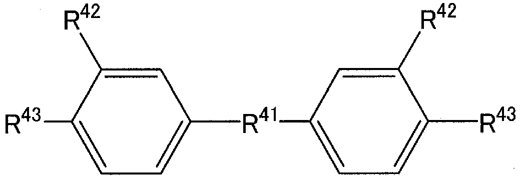 wherein R⁴¹, R⁴², and R⁴³ are as described above. The above-described inorganic nitride, organotin compound, ammonia-generating compound, and cross-linking agent can be suitably used.

Next, the perfluoroelastomer having a cyano group will now be described.

The perfluoroelastomer having a cyano group (-CN group) can be crosslinked by cyclotrimerization of the cyano group to form a triazine ring, and can impart excellent compression set properties and heat resistance to a crosslinked product.

The perfluoroelastomer having a cyano group preferably has a cyano group (-CN group) at a main-chain terminal and/or in a side chain.

The perfluoroelastomer having a cyano group preferably contains a monomer unit having a cyano group. Examples of the monomer having a cyano group include a monomer represented by

Formula: CX⁴₂=CX⁵R_{f}²-CN

wherein X⁴ and X⁵ are each independently H, F, or an alkyl group having 1 to 5 carbon atoms; and R_{f}² is a linear or branched alkylene group or oxyalkylene group in which some or all hydrogen atoms may be replaced with fluorine atoms, optionally having one or more oxygen atoms derived from an ether bond, and optionally having an aromatic ring.

Examples of the monomer having a cyano group include monomers represented by

Formula: CY¹₂=CY¹(CF₂)ₙ-CN

wherein each Y¹ is independently a hydrogen atom or a fluorine atom, and n is an integer of 1 to 8;

Formula: CF₂=CFCF₂Rf⁸-CN

wherein Rf⁸ is -(OCF₂)ₙ- or -(OCF(CF₃))ₙ-, and n is an integer of 0 to 5;

Formula: CF₂=CFCF₂(OCF(CF₃)CF₂)ₘ(OCH₂CF₂CF₂)ₙOCH₂CF₂-CN

wherein m is an integer of 0 to 5, and n is an integer of 0 to 5;

Formula: CF₂=CFCF₂(OCH₂CF₂CF₂)ₘ(OCF(CF₃)CF₂)ₙOCF(CF₃)-CN

wherein m is an integer of 0 to 5, and n is an integer of 0 to 5;

Formula: CF₂=CF(OCF₂CF(CF₃))ₘO(CF₂)ₙ-CN

wherein m is an integer of 0 to 5, and n is an integer of 1 to 8;

Formula: CF₂=CF(OCF₂CF(CF₃))ₘ-CN

wherein m is an integer of 1 to 5; F

ormula: CF₂=CFOCF₂(CF(CF₃)OCF₂)ₙCF(-CN)CF₃

wherein n is an integer of 1 to 4;

Formula: CF₂=CFO(CF₂)ₙOCF(CF₃)-CN

wherein n is an integer of 2 to 5;

Formula: CF₂=CFO(CF₂)ₙ-(C₆H₄)-CN

wherein n is an integer of 1 to 6;

Formula: CF₂=CF(OCF₂CF(CF₃))ₙOCF₂CF(CF₃)-CN

wherein n is an integer of 1 to 2;

Formula: CH₂=CFCF₂O(CF(CF₃)CF₂O)ₙCF(CF₃)-CN

wherein n is an integer of 0 to 5;

Formula: CF₂=CFO(CF₂CF(CF₃)O)ₘ(CF₂)-CN

wherein m is an integer of 0 to 5, and n is an integer of 1 to 3;

Formula: CH₂=CFCF₂OCF(CF₃)OCF(CF₃)-CN;

Formula: CH₂=CFCF₂OCH₂CF₂-CN;

Formula: CF₂=CFO(CF₂CF(CF₃)O)ₘCF₂CF(CF₃)-CN

wherein m is an integer of 0 or more;

Formula: CF₂=CFOCF(CF₃)CF₂O(CF₂)ₙ-CN

wherein m is an integer of 1 or more;

Formula: CF₂=CFOCF₂OCF₂CF(CF₃)OCF₂-CN.

One of these can be used singly, or these can be used in any combination.

The monomer having a cyano group (-CN group), in particular, is preferably a monomer represented by

Formula: CF₂=CF(OCF₂CF(CF₃))ₘO(CF₂)ₙ-CN

wherein m is an integer of 0 to 5, n is an integer of 1 to 8; and CF₂=CFOCF₂CF(CF₃)OCF₂CF₂CN is more preferable.

The perfluoroelastomer having a cyano group may be a copolymer of TFE/a fluoromonomer represented by the general formula (160), (130) or (140)/a monomer having a cyano group. In this case, the content of the monomer unit having a cyano group may be 0.1 to 5 mol% based on the total amount of the TFE unit and the fluoromonomer unit represented by the general formula (160), (130), or (140) from the viewpoint of good crosslinking characteristics and heat resistance, and may be 0.3 to 3 mol%.

When the perfluoroelastomer having a cyano group is a copolymer of TFE/perfluoro(methyl vinyl ether) (PMVE)/a monomer having a cyano group, the perfluoroelastomer having a cyano group preferably has a composition (mol%) of 45 to 89.9/10 to 54.9/0.01 to **4,** more preferably 55 to 77.9/20 to 49.9/0.1 to **3.5,** even more preferably 55 to 69.8/30 to 44.8/0.2 to **3,** and most preferably 55.3 to 69.5/30.3 to 44.5/0.2 to **2.8.**

When the perfluoroelastomer having a cyano group is a copolymer of TFE/a fluoromonomer represented by the general formula (160), (130), or (140) and having 4 to 12 carbon atoms/a monomer having a cyano group, the perfluoroelastomer having a cyano group preferably has a composition (mol%) of 50 to 89.9/10 to 49.9/0.01 to 4, more preferably 60 to 87.9/12 to 39.9/0.1 to 3.5, even more preferably 65 to 84.8/15 to 34.8/0.2 to 3, and most preferably 66 to 84.3/15.5 to 33.8/0.2 to 2.8.

Outside of these compositional ranges, the perfluoroelastomer tends to have no characteristics as a rubber elastic material and become more like a resin.

The perfluoroelastomer having a cyano group is preferably at least one selected from the group consisting of a copolymer of TFE/a fluoromonomer represented by the general formula (140)/a monomer having a cyano group and a copolymer of TFE/a fluoromonomer represented by the general formula (160)/a monomer having a cyano group.

The perfluoroelastomer having a cyano group may have a polar terminal group. The terminal group means any group present on the main chain of a polymer or an optionally present long or short terminal. The polar terminal group encompasses ionic groups such as a carboxylate (-COO⁻) group and a sulfonate (-OSO₃⁻) group as well as non-ionic groups such as alcohol (-CH₂OH), acylfluoride (-COF), and amide (-CONH₂). The polar terminal group can be introduced into the perfluoroelastomer by using an inorganic peroxide or the like as a polymerization initiator when producing the elastomer by polymerizing a monomer. The presence or absence of a polar terminal group can be verified by Fourier transform infrared spectroscopy (FTIR).

The perfluoroelastomer having a cyano group preferably has a glass transition temperature of -70°C or higher, more preferably -60°C or higher, and even more preferably -50°C or higher, from the viewpoint of excellent compression set properties at high temperatures. Also, the perfluoroelastomer preferably has a glass transition temperature of 5°C or lower, more preferably 0°C or lower, and even more preferably -3°C or lower, from the viewpoint of good low-temperature resistance.

By using a differential scanning calorimeter (manufactured by Mettler-Toledo, DSC822e) and increasing the temperature of 10 mg of the sample at 10°C/min, a DSC curve is obtained, and then the temperature indicating the midpoint of the two intersections between the extension line of the baseline before and after the secondary transition of the DSC curve and the tangent line at the inflection point of the DSC curve is determined and used as the above glass transition temperature.

The perfluoroelastomer having a cyano group preferably has a Mooney viscosity ML (1 + 20) at 170°C of 30 or more, more preferably 40 or more, and even more preferably 50 or more, from the viewpoint of good heat resistance. Also, the perfluoroelastomer preferably has a Mooney viscosity of 150 or less, more preferably 120 or less, and even more preferably 110 or less, from the viewpoint of good processability.

The Mooney viscosity can be measured at 170°C in accordance with JIS K 6300 using a Mooney viscometer MV 2000E manufactured by ALPHA TECHNOLOGIES.

The crosslinkable composition may contain a filler.

Examples of the filler include an organic filler, and from the viewpoint of heat resistance and plasma resistance (low particle generation and low weight loss during plasma irradiation), an organic pigment; an imide filler with an imide structure such as polyimide, polyamide-imide, and polyetherimide; and a ketone engineering plastic such as polyether ether ketone (PEEK) and polyether ketone (PEK) are preferable. In particular, an organic pigment is preferable.

Examples of the organic pigment include a condensed azo pigment, an isoindolinone pigment, a quinacridone pigment, a diketo-pyrrolo-pyrrole pigment, and an anthraquinone pigment, but among these, from the viewpoint of excellent heat resistance and chemical resistance and less influence on the characteristics of crosslinked products, a quinacridone pigment, a diketo-pyrrolo-pyrrole pigment, and an anthraquinone pigment are preferable, and a quinacridone pigment is more preferable.

Furthermore, a commonly used filler may be contained as well. Examples of the commonly used filler include an organic filler made of an engineering plastic such as polyarylate, polysulfone, polyethersulfone, polyphenylene sulfide, polyoxybenzoate, and polytetrafluoroethylene powder; a metal oxide filler such as aluminum oxide, silicon oxide, yttrium oxide, and titanium oxide; a metal carbide filler such as silicon carbide and aluminum carbide, and a metal nitride filler such as silicon nitride and aluminum nitride; and an inorganic filler such as aluminum fluoride, fluorocarbon, barium sulfate, carbon black, silica, clay, and talc.

Among these, from the viewpoint of shielding effects for various plasmas, carbon black, aluminum oxide, silicon oxide, yttrium oxide, silicon nitride, polyimide, fluorocarbon, and silicon carbide are preferable.

Also, one of the inorganic fillers and the organic fillers may be used singly, or two or more inorganic fillers and organic fillers may be used in combination.

The content of the filler in the crosslinkable composition is preferably 0.5 to 100 parts by mass, and more preferably 5 to 50 parts by mass, based on 100 parts by mass of the fluoroelastomer (perfluoroelastomer).

Particularly, in a field where high purity and antistaining properties are not required, usual additives to be compounded into perfluoroelastomers if required, such as a processing aid, a plasticizer, and a coloring agent, can be compounded, and one or more types of ordinary cross-linking agents or cross-linking aids different from those described above may also be compounded.

The crosslinkable composition may contain an organic basic compound. Examples of the organic basic compound may include:
octadecylamine of the formula: CH₃(CH₂)₁₇-NH₂; erucamide of the formula: H₂N-C(O)-(CH₂)₁₁-CH=CH-(CH₂)₇CH₃ oleamide of the formula: H₂N-C(O)-(CH₂)₇-CH=CH-(CH₂)₇CH₃; hexamethylenediamine of the formula: H₂N-(CH₂)₆-NH₂; and 1,8-diazabicycloundec-7-ene (DBU) of the formula: 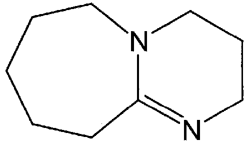 .

The crosslinkable composition can be prepared by mixing each of the above components using a normal processing machine for polymers, such as an open roll, a Banbury mixer, and a kneader. In addition, it can also be prepared by a method using an internal mixer.

By crosslinking the crosslinkable composition described above, a crosslinked product can be obtained.

The crosslinking described above can be carried out in the order of primary crosslinking and secondary crosslinking. The primary crosslinking is preferably carried out at 150 to 250°C for 5 to 120 minutes, and more preferably at 160 to 200°C for 5 to 60 minutes. As the crosslinking means, a known crosslinking means may be used, and examples thereof may include press crosslinking.

The secondary crosslinking is preferably carried out at 150 to 320°C for 2 to 48 hours, and more preferably at 180 to 310°C for 3 to 24 hours. As the crosslinking means, a known crosslinking means may be used, and examples thereof may include oven crosslinking.

The crosslinkable composition may be formed to obtain a preform, followed by crosslinking to provide the crosslinked product (formed article). The method for forming the crosslinkable composition to obtain the preform may be a usual method, and it can be carried out by a known method such as a method in which the crosslinkable composition is heated and compressed in a metal mold, a method in which the crosslinkable composition is pressed into a heated metal mold, and a method in which the crosslinkable composition is extruded by an extruder. In the case of extruded products such as hoses and electric wires, the crosslinked product can be obtained by carrying out heating crosslinking with steam or the like after extrusion.

The crosslinked product of the present disclosure can be suitably used as a sealing material for semiconductor manufacturing apparatuses that particularly require heat resistance, and especially for semiconductor manufacturing apparatuses where high density plasma irradiation is carried out. Examples of the sealing material described above include an O-ring, a square ring, a gasket, a packing, an oil seal, a bearing seal, and a lip seal.

In addition, the crosslinked product of the present disclosure can also be used as various polymer products used in semiconductor fabrication apparatus, such as diaphragms, tubes, hoses, various rubber rolls, and belts. Further, the crosslinked product of the present disclosure can also be used as a coating material and a lining material.

Note that the semiconductor manufacturing apparatuses as used herein are not limited to those for manufacturing semiconductors in particular, but encompass a wide range of manufacturing apparatuses used in the semiconductor field that require a high level of cleanliness, such as those for manufacturing liquid crystal panels and plasma panels. Examples thereof may include the following.
(1) Etching apparatuses
   Dry etching apparatuses
   Plasma etching apparatuses
   Reactive ion etching apparatuses
   Reactive ion beam etching apparatuses
   Sputter etching apparatuses
   Ion beam etching apparatuses
   Wet etching apparatuses
   Ashing apparatuses
(2) Cleaning apparatuses
   Dry etching cleaning apparatuses
   UV/O₃ cleaning apparatuses
   Ion beam cleaning apparatuses
   Laser beam cleaning apparatuses
   Plasma cleaning apparatuses
   Gas etching cleaning apparatuses
   Extraction cleaning apparatuses
   Soxhlet extraction cleaning apparatuses
   High temperature high pressure extraction cleaning apparatuses
   Microwave extraction cleaning apparatuses
   Supercritical extraction cleaning apparatuses
(3) Exposure apparatuses
   Steppers
   Coater/developers
(4) Polishing apparatuses
   CMP apparatuses
(5) Film forming apparatuses
   CVD apparatuses
   Sputtering apparatuses
(6) Diffusion/ion implantation apparatuses
   Oxidation diffusion apparatuses
   Ion implantation apparatuses

The crosslinked product of the present disclosure exhibits excellent performance as, for example, a sealing material for CVD apparatuses, plasma etching apparatuses, reactive ion etching apparatuses, ashing apparatuses, or excimer laser exposure machines.

In addition, the crosslinked product of the present disclosure has excellent heat resistance, oil resistance, amine resistance, chemical resistance, and low-temperature resistance, and is generally used for locations that slide in contact with other materials, encapsulate or seal other materials or substances, or are intended for vibration proofing or sound proofing. It can be used as various components in a variety of fields such as the automobile industry, aircraft industry, and semiconductor industry.

Examples of the fields where the crosslinked product is used include a semiconductor-related field, an automobile field, an aircraft field, a space/rocket field, a ship field, a chemical product field such as chemical plants, a pharmaceutical field such as drugs, a photography field such as developing machines, a printing field such as printing machines, a painting field such as painting equipment, an analytical/physicochemical machinery field such as analytical instruments and measurement instruments, a food equipment field including food plant equipment and household products, a beverage and food manufacturing apparatus field, a drug manufacturing apparatus field, a medical component field, a chemical-reagent transport equipment field, a nuclear power plant equipment field, an iron and steel field such as steel plate processing equipment, a general industrial field, an electrical field, a fuel cell field, an electronic component field, an optical equipment component field, a space equipment component field, a petrochemical plant equipment field, a field of equipment components for exploring and mining energy resources such as petroleum and gas, a petroleum refining field, and a petroleum transport equipment component field.

Examples of the usage of the crosslinked product of the present disclosure include various sealing materials and packings, such as rings, packings, gaskets, diaphragms, oil seals, bearing seals, lip seals, plunger seals, door seals, lip and face seals, gas delivery plate seals, wafer support seals, and barrel seals. The crosslinked product as a sealing material can be used in applications where heat resistance, solvent resistance, chemical resistance, and non-stickiness are required.

Also, the crosslinked product can be used as a tube, a hose, a roll, various types of rubber roll, a flexible joint, a rubber plate, a coating, a belt, a damper, a valve, a valve seat, a valve body, a chemical resistant coating material, a laminating material, a lining material, and the like.

The cross-sectional shape of the ring, packing, and seal described above may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

In the semiconductor-related field described above, the crosslinked product of the present disclosure can be used in, for example, a semiconductor manufacturing apparatus, a liquid crystal panel manufacturing apparatus, a plasma panel manufacturing apparatus, a plasma display panel manufacturing apparatus, a plasma-addressed liquid crystal panel manufacturing apparatus, an organic EL panel manufacturing apparatus, a field emission display panel manufacturing apparatus, a solar cell substrate manufacturing apparatus, and a semiconductor transport apparatus. Examples of such apparatuses include: CVD apparatuses; gas control apparatuses, such as gas control apparatuses for semiconductors; dry etching apparatuses; wet etching apparatuses; plasma etching apparatuses; reactive ion etching apparatuses; reactive ion beam etching apparatuses; sputter etching apparatuses; ion beam etching apparatuses; oxidation diffusion apparatuses; sputtering apparatuses; ashing apparatuses; plasma ashing apparatuses; cleaning apparatuses; ion implantation apparatuses; plasma CVD apparatuses; ventilation apparatuses; exposure apparatuses; polishing apparatuses; film forming apparatuses; dry etching cleaning apparatuses; UV/O₃ cleaning apparatuses; ion beam cleaning apparatuses; laser beam cleaning apparatuses; plasma cleaning apparatuses; gas etching cleaning apparatuses; extraction cleaning apparatuses; Soxhlet extraction cleaning apparatuses; high temperature high pressure extraction cleaning apparatuses; microwave extraction cleaning apparatuses; supercritical extraction cleaning apparatuses; cleaning apparatuses using hydrofluoric acid, hydrochloric acid, sulfuric acid, ozone water, and the like; steppers; coater/developers; CMP apparatuses; excimer laser exposure machines; chemical solution piping; gas piping; apparatuses on which plasma treatment such as NF₃ plasma treatment, O₂ plasma treatment, and fluorine plasma treatment is carried out; heat treatment film forming apparatuses; wafer transport equipment; wafer cleaning apparatuses; silicon wafer cleaning apparatuses; silicon wafer treatment apparatuses; apparatuses used for the LP-CVD step; apparatuses used for the lamp annealing step; and apparatuses used for the reflow step.

Examples of the specific forms of use in the semiconductor-related field include various seal materials, such as O-rings and gaskets for gate valves, quartz windows, chambers, chamber lids, gates, bell jars, couplings, and pumps; various seal materials such as O-rings, hoses, and tubes for resist developing solutions and stripping solutions; linings and coatings for resist developing solution baths, stripping solution baths, wafer cleaning solution baths, and wet etching baths; diaphragms for pumps; rolls for wafer transport; hose tubes for wafer cleaning solutions; seal materials for clean facilities, such as sealants for clean facilities including clean rooms; sealing materials for semiconductor manufacturing apparatuses and vaults for storing devices such as wafers; diaphragms for transferring chemical solutions used in the semiconductor manufacturing step.

In the automobile field described above, the crosslinked product of the present disclosure can be used for the engine body, the main drive system, the valve train system, the lubrication and cooling system, the fuel system, the air intake and exhaust system, the transmission system of the drive system, the steering system of the chassis, and the brake system, as well as an electrical component such as a basic electrical component, a control system electrical component, and an equipment electrical component. Note that the above automobile field encompasses motorcycles as well.

In the engine body and its peripheral apparatuses as mentioned above, the crosslinked product of the present disclosure can be used for various seal materials that require heat resistance, oil resistance, fuel oil resistance, resistance against antifreezing liquid for engine cooling, and steam resistance, and examples of such seal materials include seals such as gaskets, shaft seals, and valve stem seals, noncontact or contact type packings such as self seal packings, piston rings, split ring type packings, mechanical seals, and oil seals, bellows, diaphragms, hoses, and tubes, as well as various seal materials used for electric wires, cushioning materials, vibration proofing materials, and belt AT apparatuses.

Examples of the specific forms of use in the above fuel system include O-rings used for fuel injectors, cold start injectors, quick connectors of fuel lines, sender flange quick connectors, fuel pumps, fuel tank quick connectors, gasoline mixing pumps, gasoline pumps, tube bodies of fuel tubes, connectors of fuel tubes, injectors, and the like; seals used for intake manifolds, fuel filters, pressure regulating valves, canisters, caps of fuel tanks, fuel pumps, fuel tanks, sender units of fuel tanks, fuel injection apparatuses, fuel high pressure pumps, fuel line connector systems, pump timing control valves, suction control valves, solenoid subassemblies, fuel cut valves, and the like; canister purge solenoid valve seals, onboard refueling vapor recovery (ORVR) valve seals, oil seals for fuel pumps, fuel sender seals, fuel tank rollover valve seals, filler seals, injector seals, filler cap seals, and seals of filler cap valves; hoses such as fuel hoses, fuel supply hoses, fuel return hoses, vapor (evaporative) hoses, vent (breather) hoses, filler hoses, filler neck hoses, hoses in fuel tanks (in-tank hoses), control hoses of carburetors, fuel inlet hoses, and fuel breather hoses; gaskets used for fuel filters, fuel line connector systems, and the like, and flange gaskets used for carburetors and the like; line materials such as vapor recovery lines, fuel feed lines, and vapor/ORVR lines; diaphragms used for canisters, ORVR, fuel pumps, fuel tank pressure sensors, gasoline pumps, sensors of carburetors, combined air controller (CAC), pulsation dampers, canisters, auto cocks, and the like, and pressure regulator diaphragms of fuel injection apparatuses; valves for fuel pumps, carburetor needle valves, rollover check valves, and check valves; tubes used in vents (breathers) and fuel tanks; tank packings of fuel tanks and the like, and packings of acceleration pump pistons of carburetors; fuel sender vibration proofing components for fuel tanks; O-rings and diaphragms for controlling fuel pressure; accelerator pump cups; in-tank fuel pump mounts; injector cushion rings of fuel injection apparatuses; injector seal rings; needle valve core valves of carburetors; accelerator pump pistons of carburetors; valve sheets of combined air controller (CAC); fuel tank bodies; and seal components for solenoid valves.

Examples of the specific forms of use in the above brake system include diaphragms used for mastervacs, hydraulic brake hose air brakes, brake chambers of air brakes, and the like; hoses used for brake hoses, brake oil hoses, vacuum brake hoses, and the like; various seal materials such as oil seals, O-rings, packings, and brake piston seals; atmospheric valves and vacuum valves for mastervacs, and check valves for brake valves; piston cups (rubber cups) for master cylinders and brake cups; and O-rings and grommets for master cylinders and vacuum boosters of hydraulic brakes, boots for wheel cylinders of hydraulic brakes, and anti-lock brake systems (ABSs).

Specific examples of usage in the basic electrical component include an insulator and a sheath of an electric wire (harness), a tube of a harness exterior component, and a grommet for a connector.

Specific examples of usage in the control system electrical component include a coating material of various sensor wires.

Specific examples of usage in the equipment electrical component include an O-ring and a packing for a car air conditioner, a cooler hose, a high pressure air conditioner hose, an air conditioner hose, a gasket for an electronic throttle unit, a plug boot for direct ignition, and a diaphragm for a distributor. The crosslinked product of the present disclosure can also be used for bonding electrical components.

Specific examples of usage in the intake/exhaust system include a packing used for an intake manifold, an exhaust manifold, and the like, and a throttle body packing for a throttle; a diaphragm used for EGR (exhaust gas recirculation), pressing control (BPT), a wastegate, a turbo wastegate, an actuator, an actuator for a variable turbine geometry (VTG) turbo, an exhaust purification valve, and the like; a hose such as an EGR (exhaust gas recirculation) control hose, an emission control hose, a turbo oil hose (supply) and a turbo oil hose (return) of a turbocharger, a turbo air hose, an intercooler hose, a turbocharger hose, a hose connected to a compressor of a turbo engine equipped with an intercooler, an exhaust gas hose, an air intake hose, a turbo hose, and a DPF (diesel particulate filter) sensor hose; an air duct and a turbo air duct; an intake manifold gasket; and a sealing material EGR, a sealing material used for an afterburn prevention valve seat of an AB valve, a turbine shaft seal (of a turbocharger and the like), and a groove component of a rocker cover and air suction manifold used in automobile engines.

In addition, in exhaust gas control components, the crosslinked product can be used as a seal used for a steam recovery canister, a catalytic converter, an exhaust gas sensor, an oxygen sensor, and the like, and a seal for a solenoid armature of steam recovery and steam canister; and an intake manifold gasket.

Also, in diesel engine-related components, it can be used as any of O-ring seals for direct injectors, rotary pump seals, control diaphragms, fuel hoses, EGR, priming pumps, diaphragms of boost compensators, and the like. It can also be used as an O-ring, a sealing material, a hose, a tube, and a diaphragm used for a urea SCR system, a sealing material for a urea water tank body and a urea water tank of a urea SCR system, and the like.

Specific examples of usage in the transmission system include a transmission-related bearing seal, oil seal, O-ring, packing, and torque converter hose.

Examples also include a transmission oil seal, and a transmission oil hose, an ATF hose, an O-ring, and a packing of an AT.

The transmission includes an AT (automatic transmission), an MT (manual transmission), a CVT (continuously variable transmission), a DCT (dual clutch transmission), and the like.

Examples also include an oil seal, a gasket, an O-ring, and a packing for a manual or automatic transmission, an oil seal, a gasket, an O-ring, and a packing for a continuously variable transmission (belt type or toroidal type), a packing for an ATF linear solenoid, an oil hose for a manual transmission, an ATF hose for an automatic transmission, and a CVTF hose for a continuously variable transmission (belt type or toroidal type).

Examples of the specific forms of use in the steering system include power steering oil hoses and high pressure power steering hoses.

Examples of the forms used in engine bodies of automobile engines include gaskets such as cylinder head gaskets, cylinder head cover gaskets, oil pan packings, and general gaskets, seals such as O-rings, packings, and timing belt cover gaskets, hoses such as control hoses, vibration proofing rubbers of engine mounts, control valve diaphragms, and camshaft oil seals.

In the main drive system of automobile engines, the crosslinked product of the present disclosure can be used for shaft seals such as crankshaft seals and camshaft seals, and the like.

In the valve train system of automobile engines, it can be used for valve stem oil seals of engine valves, valve sheets of butterfly valves, and the like.

In the lubrication and cooling system of automobile engines, it can be used for engine oil cooler hoses of engine oil coolers, oil return hoses, seal gaskets, water hoses around radiators, seals of radiators, gaskets of radiators, O-rings of radiators, and vacuum pump oil hoses of vacuum pumps, as well as radiator hoses, radiator tanks, diaphragms for oil pressure, fan coupling seals, and the like.

As described above, specific examples of use in the automobile field include engine head gaskets, oil pan gaskets, manifold packings, seals for oxygen sensors, oxygen sensor bushes, seals for nitrogen oxide (NOx) sensors, nitrogen oxide (NOx) sensor bushes, seals for sulfur oxide sensors, seals for temperature sensors, temperature sensor bushes, seals for diesel particulate filter sensors, diesel particulate filter sensor bushes, injector O-rings, injector packings, O-rings and diaphragms of fuel pumps, gearbox seals, power piston packings, seals of cylinder liners, seals of valve stems, static valve stem seals, dynamic valve stem seals, front pump seals of automatic transmissions, rear axle pinion seals, gaskets of universal joints, pinion seals of speedometers, piston cups of foot brakes, O-rings and oil seals of torque transmission apparatuses, seals and bearing seals of exhaust gas re-combustion apparatuses, hoses for re-combustion apparatuses, diaphragms for sensors of carburetors, vibration proofing rubbers (engine mounts, exhaust units, muffler hangers, suspension bushes, center bearings, strut bumper rubbers, and the like), vibration proofing rubbers for suspensions (strut mounts, bushes, and the like), drive system vibration proofing rubbers (dampers and the like), fuel hoses, tubes and hoses of EGR, twin carburetor tubes, core valves of needle valves of carburetors, flange gaskets of carburetors, oil hoses, oil cooler hoses, ATF hoses, cylinder head gaskets, water pump seals, gearbox seals, needle valve tips, reeds of reed valves for motorcycles, oil seals of automobile engines, seals of gasoline hose guns, seals for car air conditioners, rubber hoses for intercoolers of engines, seals of fuel line connector systems, CAC valves, needle tips, electric wires around engines, filler hoses, car air conditioner O-rings, intake gaskets, fuel tank materials, diaphragms for distributors, water hoses, clutch hoses, PS hoses, AT hoses, mastervac hoses, heater hoses, air conditioner hoses, ventilation hoses, oil filler caps, PS rack seals, rack and pinion boots, CVJ boots, ball joint dust covers, strut dust covers, weather strips, glass runs, center unit packings, body sight welts, bumper rubbers, door latches, dash insulators, high tension cords, flat belts, poly V-belts, timing belts, toothed belts, V-ribbed belts, tires, wiper blades, diaphragms and plungers for regulators of LPG vehicles, diaphragms and valves for regulators of CNG vehicles, DME resistant rubber components, diaphragms and boots of auto tensioners, diaphragms and valves for idle speed control, actuators for automatic speed control, diaphragms, check valves, and plungers of negative pressure pumps, diaphragms and O-rings of O.P.S., gasoline pressure relief valves, O-rings and gaskets of engine cylinder sleeves, O-rings and gaskets of wet cylinder sleeves, seals and gaskets of differential gears (seals and gaskets for gear oils), seals and gaskets of power steering apparatuses (seals and gaskets for PSFs), seals and gaskets of shock absorbers (seals and gaskets for SAFs), seals and gaskets of constant velocity joints, seals and gaskets of wheel bearings, coating agents for metal gaskets, caliper seals, boots, wheel bearing seals, and bladders used for vulcanization molding of tires.

In the aircraft field, the space/rocket field, and the ship field, the crosslinked product can be used especially in a fuel system and a lubricating oil system.

In the aircraft field described above, the crosslinked product of the present disclosure can be used as, for example, various aircraft sealing components, various aircraft components in aircraft engine oil applications, a jet engine valve stem seal, gasket, and O-ring, a rotating shaft seal, a hydraulic equipment gasket, a fire wall seal, a fuel supply hose, gasket, and O-ring, an aircraft cable, oil seal, and shaft seal, and the like.

In the space and rocket field described above, the crosslinked product of the present disclosure can be used as, for example, a lip seal, a diaphragm, and an O-ring for a spacecraft, a jet engine, a missile, and the like, a gas turbine engine oil-resistant O-ring, a vibration isolation table pad for missile ground control, and the like.

In the ship field, the crosslinked product can be used as, for example, a screw propeller shaft stern seal, a diesel engine intake/exhaust valve stem seal, a valve seal of a butterfly valve, a valve seat and a shaft seal of a butterfly valve, a shaft seal of a butterfly valve, a stern tube seal, a fuel hose, a gasket, an engine O-ring, a ship cable, a ship oil seal, a ship shaft seal, and the like.

In the chemical product field such as chemical plants and the pharmaceutical field such as drugs, the crosslinked product can be used in a process where a high level of chemical resistance is required, such as a process of producing chemical products such as drugs, agrochemicals, coating materials, and resins.

Specific examples of usage in the chemical product and pharmaceutical fields include seals used in a chemical apparatus, a pump and a flow meter for chemical reagents, piping for chemical reagents, a heat exchanger, an agrochemical sprayer, an agrochemical transfer pump, gas piping, a fuel cell, an analytical instrument and physicochemical instrument (such as column fitting for analytical instruments and measurement instruments), an expansion joint of a flue gas desulfurization apparatus, a nitric acid plant, a power plant turbine, and the like, a seal used in a medical sterilization process, a seal for a plating solution, a belt roller seal for paper making, a wind tunnel joint seal; an O-ring used in a chemical apparatus such as a reactor and a stirrer, an analytical instrument and measurement instrument, a chemical pump, a pump housing, a valve, a rotary meter, and the like, an O-ring for a mechanical seal, and an O-ring for compressor sealing; a packing used in a tube joint part or the like of a high temperature vacuum dryer, a gas chromatography, and a pH meter, and a glass cooler packing for a sulfuric acid manufacturing apparatus; a diaphragm used in a diaphragm pump, an analytical instrument, a physicochemical instrument, and the like; a gasket used in an analytical instrument and a measurement instrument; a fitting wheel (ferrule) used in an analytical instrument and a measurement instrument; a valve seat; a U cup; a lining used in a chemical apparatus, a gasoline tank, a wind tunnel, and the like, and a corrosionresistant lining for an anodized aluminum processing tank; a coating of a masking jig for plating; a valve component of an analytical instrument and a physicochemical instrument; an expansion joint of a flue gas desulfurization plant; an acid resistant hose against concentrated sulfuric acid and the like, a chlorine gas transfer hose, an oil-resistant hose, a rainwater drain hose for benzene and toluene storage tanks; a chemical resistant tube and a medical tube used in an analytical instrument and a physicochemical instrument; a trichlorethylene-resistant roll for fiber dyeing and a dyeing roll; a medical plug for drug; a medical rubber plug; a chemical solution bottle, a chemical solution tank, a bag, a chemical container; and protective equipment such as a glove and a boot that are resistant to strong acids and solvents.

In the above photographic field such as developers, printing field such as printing machines, and painting field such as painting facilities, the crosslinked product of the present disclosure can be used as any of rolls, belts, seals, valve components, and the like of dry copiers.

Examples of the specific forms of use in the above photographic field, printing field, and painting field include surface layers of transfer rollers of copiers, cleaning blades of copiers, and belts of copiers; rolls (including fixing rolls, adhesion rolls, and pressure rolls, for example) and belts for OA equipment such as copiers, printers, and facsimiles; rolls, roll blades, and belts of PPC copiers; rolls of film processors and X-ray film processors; printing rolls, scrapers, tubes, valve components, and belts of printing machines; ink tubes, rolls, and belts of printers; painting rolls, scrapers, tubes, and valve components of coating and painting facilities; processing rolls, gravure rolls, guide rolls, guide rolls of coating lines for magnetic tape production, gravure rolls of coating lines for magnetic tape production, and coating rolls.

In the food plant equipment and the food equipment field including household products, the crosslinked product can be used in a food manufacturing process and for food transfer equipment or food storage equipment.

Examples of the specific forms of use in the above food equipment field include seals of plate type heat exchangers, solenoid valve seals of vending machines, packings of thermo pots, sanitary pipe packings, packings of pressure cookers, seals of boilers, gaskets for heat exchangers, diaphragms and packings for food processing treatment apparatuses, rubber materials (for example, various seals such as heat exchanger gaskets, diaphragms, and O-rings, piping, hoses, sanitary packings, valve packings, and packings for filling used as joints between the mouth of a bottle or the like and a filler during filling) for food processing treatment machines. Examples thereof also include packings, gaskets, tubes, diaphragms, hoses, and joint sleeves, used for products such as alcohols and soft drinks, filling apparatuses, food sterilizing apparatuses, brewing apparatuses, boilers, various food vending machines, and the like.

In the above nuclear power plant equipment field, the crosslinked product of the present disclosure can be used for check valves and pressure reducing valves around nuclear reactors, seals of apparatuses for concentrating uranium hexafluoride, and the like.

Specific examples of usage in the above general industrial field include: seal materials for hydraulic equipment such as machine tools, construction machines, and hydraulic machines; seals and bearing seals of hydraulic and lubricating machines; seal materials for mandrels and the like; seals for windows and the like of dry cleaning equipment; seals and (vacuum) valve seals of cyclotrons, seals of proton accelerators, seals of automatic wrapping machines, diaphragms of pumps for analytical apparatuses for sulfurous acid gas or chlorine gas in the air (pollution measurement equipment), snake pump linings, rolls and belts of printers, belts (conveyor belts) for transportation, squeeze rolls for pickling of iron plates, cables of robots, solvent squeeze rolls of aluminum rolling lines and the like, O-rings of couplers, acid resistant cushioning materials, dust seals and lip rubbers of sliding portions of cutting machines, gaskets of garbage incinerators, friction materials, metal or rubber surface modifiers, and covering materials. The crosslinked product of the present disclosure can also be used as any of gaskets and seal materials of apparatuses used in papermaking processes, sealing agents of filter units for cleanrooms, sealing agents for construction, protective coating agents for concrete, cement, and the like, glass cloth impregnating materials, processing aids for polyolefins, moldability improving additives for polyethylene, fuel containers of small generators, lawn mowers, and the like, precoated metals obtained by performing primer treatment on metal plates, and the like. In addition, the crosslinked product of the present disclosure can be used as a sheet and a belt by impregnating a woven fabric therewith and baking it.

Specific examples of usage in the above iron and steel field include iron plate processing rolls of iron plate processing facilities.

Specific examples of usage in the above electrical field include insulating oil caps of Shinkansen, venting seals of liquid immersed transformers, seals of transformers, jackets of oil well cables, seals of ovens such as electric furnaces, window frame seals of microwave ovens, seal materials used in bonding wedges and necks of CRTs, seal materials of halogen lamps, fixing agents for electrical components, seal materials for treating terminals of sheathed heaters, and seal materials used in insulating and moisture proofing treatment on lead wire terminals of electrical equipment. The crosslinked product of the present disclosure can also be used as a covering material of an oil resistant/heat resistant electric wire, a highly heat resistant wire, a chemical resistant wire, a highly insulated wire, a high voltage transmission line, a cable, an electric wire used in a geothermal power generation apparatus, an electric wire used around an automobile engine, and the like. The crosslinked product of the present disclosure can also be used as an oil seal and a shaft seal of a vehicle cable. Moreover, the crosslinked product of the present disclosure can also be used as an electrical insulation material (such as a material used as an insulation spacer of various electric apparatuses, an insulation tape used in a joint, a terminal part, and the like of a cable, a heat-shrinkable tube and the like), and an electric and electronic apparatus materials used in a high temperature atmosphere (such as a lead wire material for a motor and a wire material around a high temperature furnace). The crosslinked product of the present disclosure can also be used in a sealing layer and a protective film (a back sheet) of a solar cell.

In the fuel cell field described above, the crosslinked product of the present disclosure can be used as a sealing material between electrodes or between an electrode and a separator, a seal, a packing, a separator, and the like of piping for hydrogen, oxygen, generated water, and the like in polymer electrolyte fuel cells, phosphoric acid salt fuel cells, and the like.

In the above electronic component field, the crosslinked product of the present disclosure can be used for raw materials of heat radiating materials, raw materials of electromagnetic wave shielding materials, gaskets for hard disk drives (magnetic recording apparatuses) of computers, and the like. It is also used as a cushioning rubber (a crash stopper) for a hard disk drive, a binder for an electrode active material of a nickel hydrogen secondary battery, a binder for an active material of a lithium-ion battery, a polymer electrolyte for a lithium secondary battery, a binder for the positive electrode of an alkaline rechargeable battery, a binder for an EL element (an electroluminescence element), a binder for the electrode active material of a capacitor, an encapsulating agent, a sealant, a film and a sheet for a covering material for the quartz of an optical fiber, an optical fiber covering material, and the like, a potting, a coating, and an adhesive seal for electronic components and circuit boards, a fixative for an electronic component, a modifying agent for an encapsulating agent such as epoxy, a coating agent for a printed circuit board, a modifying agent for a printed wiring board prepreg resin such as epoxy, an anti-scattering material for a light bulb and the like, a gasket for a computer, a cooling hose for a large computer, a packing such as a gasket or an O-ring for a secondary battery and especially a lithium secondary battery, a sealing layer for covering one or both outer surfaces of an organic EL structure, a connector, and a damper.

In the chemical agent transportation equipment field described above, the crosslinked product of the present disclosure can be used as a safety valve and a shipping valve for trucks, trailers, tank trucks, ships, and the like.

In the above field of equipment components for exploring and mining energy resources such as petroleum and gas, the crosslinked product of the present disclosure can be used as various sealing materials used when mining petroleum, natural gas, and the like, an electric connector boot used in oil wells, and the like.

Examples of the specific forms of use in the above field of equipment components for exploring and mining energy resources include a drill bit seal, a pressure regulating diaphragm, a horizontal drilling motor (stator) seal, a stator bearing (shaft) seal, a sealing material used in a blowout preventer (BOP), a sealing material used in a rotary blowout prevention apparatus (pipe wiper), a sealing material and a gas-liquid connector used in MWD (measurement while drilling) system, a logging tool seal used in a logging apparatus (logging equipment) (such as an O-ring, a seal, a packing, a gas-liquid connector, and a boot), an inflatable packer and a completion packer and a packer seal used therein, a seal and a packing used in a cementing apparatus, a seal used in a perforator, a seal and a packing and a motor lining used in a mud pump, an underground auditory detector cover, a U-cup, a composition seating cup, a rotating seal, a laminated elastomeric bearing, a flow control seal, a sand volume control seal, a safety valve seal, a seal of a hydraulic fracturing apparatus (fracturing equipment), a seal and a packing for a linear packer and a linear hanger, a wellhead seal and packing, a seal and a packing for a chalk and a valve, a sealing material for LWD (logging while drilling), a diaphragm used in oil exploration and oil drilling applications (such as a diaphragm for supplying lubricating oil to oil drilling bits), and a seal element for gate valves, electronic boots, and perforation guns.

In addition, the crosslinked product of the present disclosure can also be used in a joint seal for a kitchen, a bathroom, a washroom, and the like; a ground sheet of an outdoor tent; a seal for a stamp material; a rubber hose for a gas heat pump and a Freon-resistant rubber hose; an agricultural film, lining, and weather-resistant cover; a tank of a laminated steel sheet or the like used in the fields of construction and household electric appliances, and the like.

Moreover, the crosslinked product of the present disclosure can also be used as an article combined with a metal such as aluminum. Examples of such usage include a door seal, a gate valve, a pendulum valve, a solenoid tip, and also a piston seal and a diaphragm combined with a metal, a metal rubber component combined with a metal, such as a metal gasket.

The crosslinked product can also be used as a rubber component, a brake shoe, a brake pad, and the like of bicycles.

Also, one exemplary form of the crosslinked product of the present disclosure is a belt.

Examples of the belt are as follows: power transmission belts (including flat belts, V-belts, V-ribbed belts, toothed belts, and the like), and transportation belts (conveyor belts) such as flat belts used for various locations exposed to a high temperature, such as locations around engines of agricultural machines, machine tools, and industrial machines; conveyor belts for transporting scattered matters or particles of coal, smashed rock, earth and sand, ores, wood chips, and the like under a high temperature environment; conveyor belts used in iron mills such as blast furnaces; conveyor belts in applications exposed to a high temperature environment in precision equipment assembling factories, food factories, and the like; V-belts and V-ribbed belts for agricultural machines, general equipment (for example, OA equipment, printing machines, dryers for business purposes, and the like), automobiles, and the like; power transmission belts of transporting robots; toothed belts such as power transmission belts of food machines and machine tools; and toothed belts for automobiles, OA equipment, medical uses, and printing machines.

In particular, representative examples of the toothed belts for automobiles include timing belts.

The above belts may have a single layer structure or a multilayer structure.

In the case of a multilayer structure, the above belts may be composed of a layer obtained by crosslinking the crosslinkable composition of the present disclosure and a layer composed of a further material.

Examples of the layer composed of a further material in the belts with a multilayer structure include layers composed of a further rubber, layers composed of a thermoplastic resin, various fiber reinforced layers, canvases, and metal foil layers.

The crosslinked product of the present disclosure can also be used as an industrial anti-vibration pad, an anti-vibration mat, a railway slab mat, a pad, an automobile anti-vibration rubber, and the like. Examples of the automobile anti-vibration rubber include anti-vibration rubbers for an engine mount, a motor mount, a member mount, a strut mount, a bush, a damper, a muffler hanger, a center bearing, and the like.

Other examples of usage include a joint member for a flexible joint, an expansion joint, and the like, a boot, and a grommet. In the ship field, examples include marine pumps.

The joint member refers to a joint used in piping and piping equipment, and used in applications for preventing vibration and noise generated from the piping system, absorbing expansion, contraction and displacement resulting from a temperature change and a pressure change, absorbing a dimensional change, mitigating and preventing the influences of earthquakes and land subsidence, and the like.

The flexible joint and the expansion joint can be preferably used as complex-shape formed articles for, for example, shipbuilding piping, for mechanical piping of a pump, a compressor, and the like, for chemical plant piping, for electrical piping, for civil engineering and water piping, and for automobiles.

The boots can be preferably used as formed articles with complicated shapes, such as boots for various industries, including boots for automobiles such as constant velocity joint boots, dust covers, rack and pinion steering boots, pin boots, and piston boots, boots for agricultural machines, boots for industrial vehicles, boots for construction machines, boots for hydraulic machines, boots for pneumatic machines, boots for centralized lubrication machines, boots for liquid transfer, boots for firefighting, and boots for transferring various liquefied gases.

The crosslinked product of the present disclosure can also be used as a diaphragm for a filter press, a diaphragm for a blower diaphragm, a diaphragm for supplying water, a diaphragm for a liquid storage tank, a diaphragm for a pressure switch, a diaphragm for an accumulator, a diaphragm for an air spring such as a suspension, and the like.

By adding the crosslinked product of the present disclosure to a rubber or a resin, an antislipping agent can be obtained that produces a formed article or a coating film that is not slippery in an environment that gets wet with water such as rain, snow, ice, or sweat.

The crosslinked product of the present disclosure can also be used as, for example, a cushioning material for hot press molding when producing decorative plywood, a printed circuit board, an electrical insulation board, and a rigid polyvinyl chloride laminate made of melamine resin, phenol resin, epoxy resin, or the like.

In addition, the crosslinked product of the present disclosure can also contribute to impermeability of various supports such as weapon-related sealing gaskets and protective clothes against contact with invasive chemicals.

The crosslinked product of the present disclosure can also be used as an O (square)-ring, a V-ring, an X-ring, a packing, a gasket, a diaphragm, an oil seal, a bearing seal, a lip seal, a plunger seal, a door seal, a lip and face seal, a gas delivery plate seal, a wafer support seal, a barrel seal, and other various sealing materials used for sealing lubricating oil (such as engine oil, transmission oil, and gear oil) containing amine-type additives (in particular, amine-type additives used as antioxidants and detergent dispersants) used in transportation systems such as automobiles and ships, and fuel oil and grease (in particular, urea-based grease), and can also be used as a tube, a hose, various rubber rolls, a coating, a belt, a valve body of a valve, and the like. The crosslinked product of the present disclosure can also be used as a laminating material and a lining material.

The crosslinked product of the present disclosure can also be used as a covering material for heat resistant and oil resistant electric wires used as, for example, lead electric wires for sensors that come into contact with transmission oil and/or engine oil and detect their oil temperature and/or oil pressure in internal combustion engines of automobiles and the like, and can also be used in a high temperature oil atmosphere such as in the oil pan of automatic transmissions and engines.

In addition, the crosslinked product of the present disclosure may be used to form a vulcanized film. Specific examples include applications such as a non-stick oil resistant roll for a copier, a weather strip for preventing weathering and freezing, an infusion rubber stopper, a vial rubber stopper, a mold release agent, a non-stick light-weight transport belt, an adhesion preventing coating on a play gasket of an automobile engine mount, a synthetic fiber coating processing, and a bolt member or a joint having thin packing-coated layer.

Note that the applications of the crosslinked product of the present disclosure with respect to the automobile-related components encompass applications for motorcycle components with similar structures.

Also, examples of the fuel in the above automobile-related field include light oil, gasoline, and fuel for diesel engines (including biodiesel fuel).

In addition to being crosslinked and used as a crosslinked product, the crosslinkable composition of the present disclosure can also be used as various components in a variety of industrial fields. Therefore, applications of the crosslinkable composition of the present disclosure will be described next.

The crosslinkable composition of the present disclosure can be used for a surface modifier for metals, rubbers, plastics, glass, and the like; a sealing material and a covering material that require heat resistance, chemical resistance, oil resistance, and non-stickiness, such as a metal gasket and an oil seal; a non-sticky covering material or a bleed barrier, such as a roll for OA equipment and a belt for OA equipment; impregnation of a woven fabric sheet and a belt, and application by baking; and the like.

The crosslinkable composition of the present disclosure, by being configured to have a high viscosity and a high concentration, can be used as a sealing material, a lining, and a sealant having a complex shape by an ordinary method; by being configured to have a low viscosity, can be used to form a thin film of several micrometers; and, by being configured to have a medium viscosity, can be used to coat a pre-coated metal, an O-ring, a diaphragm, and a reed valve.

Furthermore, it can also be used for application to a transportation roll or a belt for woven fabrics and paper leaves, a belt for printing, a chemical resistant tube, a medicine stopper, and a fuel hose.

As articles and substrates to be covered with the crosslinkable composition of the present disclosure, the following can be used: metals such as iron, stainless steel, copper, aluminum, and brass; glass products such as glass plates, woven and non-woven fabrics of glass fibers; formed articles and covered products of general purpose and heat resistant resins such as polypropylene, polyoxymethylene, polyimide, polyamide-imide, polysulfone, polyethersulfone, and polyether ether ketone; formed articles and covered products of general purpose rubbers such as SBR, butyl rubber, NBR, and EPDM, and of heat resistant rubbers such as silicone rubber and fluororubber; woven and non-woven fabrics of natural fibers and synthetic fibers; and the like.

The covered products formed from the crosslinkable composition of the present disclosure can be used in fields where heat resistance, solvent resistance, lubricity, and non-stickiness are required, and examples of the specific applications include rolls (for example, fixing rolls and adhesion rolls) and transportation belts for OA equipment such as copiers, printers, and facsimiles; sheets and belts; **O-**rings, diaphragms, chemical resistant tubes, fuel hoses, valve seals, gaskets for chemical plants, engine gaskets, and the like.

The crosslinkable composition of the present disclosure can also be dissolved in a solvent and used as a coating material or adhesive. It can also be used as an emulsion dispersion (latex) and as a coating material.

The composition described above is used as, for example, a sealing material and a lining for various apparatuses, pipes, and the like, and a surface-treating agent for structures made of inorganic and organic substrates such as metal, ceramic, glass, stone, concrete, plastic, rubber, wood, paper, and fiber.

The composition described above can be applied to a substrate and the like by dispenser coating or screen printing coating.

The crosslinkable composition of the present disclosure may be used as a coating material composition for casting a film or for immersing a substrate such as fabric, plastic, metal, or elastomer.

In particular, the crosslinkable composition of the present disclosure may be used, in the form of latex, to produce covered fabrics, protective gloves, impregnated fibers, O-ring coverings, coverings for fuel system quick coupling O-rings, coverings for fuel system seals, coverings for fuel tank rollover valve diaphragms, coverings for fuel tank pressure sensor diaphragms, coverings for oil filter and fuel filter seals, coverings for fuel tank sender seals and sender head fitting seals, coverings for copier fusing mechanism rolls, and polymer coating material compositions.

The crosslinkable composition is useful for covering silicone rubber, nitrile rubber, and other elastomers. To increase the thermal stability thereof as well as both the permeation resistance and the chemical resistance of substrate elastomers, the crosslinkable composition of the present disclosure is also useful for covering components made from such elastomers. Other applications include coverings for heat exchangers, expansion joints, butts, tanks, fans, flue ducts and other pipe conduits, and storage structures such as concrete storage structures. The composition described above may be applied to exposed cross-sections of multilayer component structures, for example, in methods for producing hose structures and diaphragms. Sealing members in connections and joints are often composed of hard materials, and the crosslinkable composition of the present disclosure provides a tight fit with improved frictional interface, leakage along the sealing surface reduced to a trace amount, and enhanced dimensions. The latex thereof increases seal durability in a variety of automobile system applications.

The crosslinkable composition of the present disclosure can also be used in production of power steering systems, fuel systems, air conditioning systems, and any joints where hoses and tubes are connected to other components. The composition is further useful in the repair of manufacturing defects (and damage resulting from use) in a multi-layer rubber structure such as a three-layer fuel hose. The composition is also useful for application to thin steel plates that can be formed or embossed before or after the coating material is applied. For example, multiple layers of covered steel can be assembled to create a gasket between two rigid metal members. The sealing effect is obtained by applying the crosslinkable composition of the present disclosure between those layers. This process can be used to produce engine head gaskets and exhaust manifold gaskets for the purpose of lowering the bolt forces and strains of the assembled components, while providing good fuel savings and low emissions due to low cracks, deflections, and hole strains.

In addition, the crosslinkable composition of the present disclosure can also be used as a coating agent; a substrate-integrated gasket and packing formed by dispensermolding the composition onto a substrate containing an inorganic material such as metal or ceramic; a multi-layer article obtained by being coated onto a substrate containing an inorganic material such as metal or ceramic; and the like.

While embodiments have been described above, it will be understood that various changes in form and details can be made without departing from the gist and scope of the claims.
<1> According to the first aspect of the present disclosure, provided is
   a composition comprising: a polymer (I) having a polymerization unit (I) based on a monomer (I) represented by general formula (I); and a fluoroelastomer, wherein a content of the polymer (I) is 0.0001 to 1.0% by mass based on the fluoroelastomer:

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<2> According to the second aspect of the present disclosure, provided is
   the composition according to the first aspect, wherein the polymer (I) is a polymer (2) having a polymerization unit (2) based on a monomer (2) represented by general formula (2):

   CX₂=CY(-O-Rf -A) (2)

   wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, -SO₃M, -OSO₃M, or -C(CF₃)₂OM, wherein M is H, a metal atom, NR⁷₄, imidazolium optionally having a substituent, pyridinium optionally having a substituent, or phosphonium optionally having a substituent, and R⁷ is H or an organic group.
<3> According to the third aspect of the present disclosure, provided is
   the composition according to the first or second aspect, wherein the fluoroelastomer is a perfluoroelastomer.
<4> According to the fourth aspect of the present disclosure, provided is
   the composition according to any one of the first to third aspects, which is substantially free of a fluorine-containing surfactant.
<5> According to the fifth aspect of the present disclosure, provided is
   the composition according to any one of the first to fourth aspects, which is obtained by preparing a polymerization dispersion comprising the polymer (I), the fluoroelastomer, and an aqueous medium, and
   bringing the fluoroelastomer in the polymerization dispersion into contact with an alcohol having 3 to 6 carbon atoms per OH group to coagulate the fluoroelastomer.
<6> According to the sixth aspect of the present disclosure, provided is
   the composition according to the fifth aspect, wherein the alcohol has 3 to 5 carbon atoms per OH group.
<7> According to the seventh aspect of the present disclosure, provided is
   the composition according to the fifth or sixth, wherein the alcohol has a MolLogP within a range of 0.3 to 1.6.
<8> According to the eighth aspect of the present disclosure, provided is
   the composition according to any one of the first to fourth aspects, which is obtained by preparing a polymerization dispersion comprising the polymer (I), the fluoroelastomer, and an aqueous medium, and
   freezing the polymerization dispersion to coagulate the fluoroelastomer.
<9> According to the ninth aspect of the present disclosure, provided is
   the composition according to any one of the first to fourth aspects, which is obtained by preparing a polymerization dispersion comprising the polymer (I), the fluoroelastomer, and an aqueous medium, and
   bringing the fluoroelastomer in the polymerization dispersion into contact with at least one organic solvent selected from the group consisting of the following compounds to coagulate the fluoroelastomer:
      carboxylic acids having 2 to 5 carbon atoms
      methyl ethyl ketone
      methyl acetate
      dimethyl carbonate
      acetone
      3-methyl-2-cyclopentenone
      methyl propionate
      ethyl acetate
      tetrahydrofuran
      1,2-dimethoxyethane.
<10> According to the tenth aspect of the present disclosure, provided is
   a crosslinkable composition comprising the composition according to any one of the first to ninth aspects and at least one selected from the group consisting of an inorganic nitride, an organotin compound, an ammonia-generating compound, and a cross-linking agent.
<11> According to the eleventh aspect of the present disclosure, provided is
   the crosslinkable composition according to the tenth aspect, comprising a perfluoroelastomer having iodine atom or bromine atom as the fluoroelastomer.
<12> According to the twelfth aspect of the present disclosure, provided is
   the crosslinkable composition according to the eleventh aspect, comprising an organic peroxide as the cross-linking agent and further comprising a cross-linking aid.
<13> According to the thirteenth aspect of the present disclosure, provided is
   the crosslinkable composition according to the eleventh or twelfth aspect, wherein the perfluoroelastomer is at least one selected from the group consisting of a copolymer of tetrafluoroethylene/perfluorovinyl ether represented by general formula (140), a copolymer of tetrafluoroethylene/a fluoromonomer represented by general formula (140)/a monomer having iodine atom or bromine atom, a copolymer of tetrafluoroethylene/a fluoromonomer represented by general formula (160), and a copolymer of tetrafluoroethylene/a fluoromonomer represented by general formula (160)/a monomer having iodine atom or bromine atom, wherein
   general formula (140): CF₂=CFO(CF₂CF(Y¹⁴¹)O)ₘ(CF₂)ₙF wherein Y¹⁴¹ represents fluorine atom or trifluoromethyl group, m is an integer of 1 to 4, and n is an integer of 1 to 4; and

      general formula (160): CF₂=CF-ORf¹⁶¹

      wherein Rf¹⁶¹ represents a perfluoroalkyl group having 1 to 10 carbon atoms.
<14> According to the fourteenth aspect of the present disclosure, provided is
   the crosslinkable composition according to the tenth aspect, comprising a perfluoroelastomer having cyano group as the fluoroelastomer.
<15> According to the fifteenth aspect of the present disclosure, provided is
   the crosslinkable composition according to the fourteenth aspect, comprising at least one selected from the group consisting of an inorganic nitride, an organotin compound, an ammonia-generating compound, a compound having a plurality of 3-amino-4-hydroxyphenyl groups or 3-amino-4-mercaptophenyl groups, and a compound represented by general formula (47): 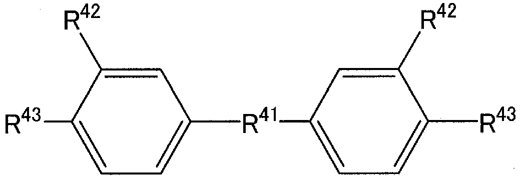 wherein R⁴¹, R⁴², and R⁴³ are as described above.
<16> According to the sixteenth aspect of the present disclosure, provided is
   the crosslinkable composition according to the fourteenth or fifteenth aspect, wherein the perfluoroelastomer is at least one selected from the group consisting of a copolymer of tetrafluoroethylene/a fluoromonomer represented by general formula (140)/a monomer having cyano group and a copolymer of tetrafluoroethylene/a fluoromonomer represented by general formula (160)/a monomer having cyano group:

   general formula (140) : CF₂=CFO(CF₂CF(Y¹⁴¹)O)ₘ(CF₂)ₙF

   wherein Y¹⁴¹ represents fluorine atom or trifluoromethyl group, m is an integer of 1 to 4, and n is an integer of 1 to 4; and

   general formula (160): CF₂=CF-ORf¹⁶¹

   wherein Rf¹⁶¹ represents a perfluoroalkyl group having 1 to 10 carbon atoms.
<17> According to the seventeenth aspect of the present disclosure, provided is
   a crosslinked product obtained by crosslinking the crosslinkable composition according to any one of the tenth to sixteenth aspects.

### EXAMPLES

Next, embodiments of the present disclosure will now be described with reference to Examples, but the present disclosure is not limited only to the Examples.

The numerical values of the Examples were measured by the following methods.

### (Content of polymer (I) in dry fluoroelastomer)

A predetermined amount of the polymer (I) was added to a fluoroelastomer that did not contain the polymer (I) and thoroughly dispersed. The resulting fluoroelastomer was formed into a film and measured with a Fourier transform infrared spectrometer (manufactured by PerkinElmer). The ratio between the absorbance areas of absorption wavelengths -CF (2,213 to 2,685 cm⁻¹) and -COO (1,600 to 1,827 cm⁻¹) was measured, and a calibration curve was created from the amount of the polymer (I) added. The fluoroelastomers obtained in the Examples and Comparative Examples were similarly measured, and the content of the polymer (I) was calculated from the calibration curve.

### (Polymer composition ratio)

Measurement was performed by ¹⁹F-NMR (solid-state NMR) and a Fourier transform infrared spectrophotometer (FT-IR).

### (Content of iodine atom)

The content was measured by elemental analysis.

### (Mooney viscosity)

The Mooney viscosity was measured in accordance with JIS K6300 at 170°C or 100°C using a Mooney viscometer MV2000E model manufactured by ALPHA TECHNOLOGIES.

### (Glass transition temperature)

By using a differential scanning calorimeter (manufactured by Mettler-Toledo, DSC822e) and increasing the temperature of 10 mg of the sample at 10°C/min, a DSC curve was obtained, and then the peak top temperature of the differential curve specified in JIS K6240 was taken as the glass transition temperature.

### Examples 1 to 7, 10 to 11

In these Examples, examples of coagulating a fluoroelastomer by the coagulation method (1) or the coagulation method (3) are shown.

First, 18 g of a polymerization dispersion (TFE/PMVE copolymer content 1.8 g) of a TFE/PMVE copolymer (polymer composition ratio TFE/PMVE=60/40 mol%) containing 0.062 g of a polymer (A) (a homopolymer of a monomer A represented by the formula: CF₂=CFOCF₂CF₂COOH) neutralized with aqueous ammonia was added dropwise to 10 g of an alcohol having 3 to 6 carbon atoms per OH group or an organic solvent to coagulate a fluoroelastomer. The fluoroelastomer, after being washed with water, was dried at 75°C for 20 hours. The resulting dry fluoroelastomer was formed into a film, and the content of the polymer (A) was measured with a Fourier transform infrared spectrometer.

### Examples 8 to 9

In these examples, examples of coagulating a fluoroelastomer by the coagulation method (2) is shown.

First, 0.9 g of an alcohol or an organic solvent shown in the coagulation method (1) or (3) was added to 20 g of the same polymerization dispersion as in Examples 1 to 7 and 10 to 11 (TFE/PMVE copolymer content 2.0 g), and the mixture was kept in a freezer (-25°C) for 16 hours to freeze, and then thawed by being brought into contact with water at 40°C to give a coagulated elastomer. The coagulated elastomer, after being washed with water, was dried at 75°C for 20 hours. The resulting dry fluoroelastomer was formed into a film, and the content of the polymer (I) was measured with a Fourier transform infrared spectrometer.

### Example 12

In this Example, an example of coagulating a fluoroelastomer by the coagulation method (1) is shown.

First, 18 g of a polymerization dispersion of a TFE/PMVE copolymer (polymer composition ratio TFE/PMVE=61/39 mol%) containing 0.048 g of a polymer (B) (a homopolymer of a monomer B represented by the formula: CF₂=CFOCF₂CF₂SO₃NH₄) (TFE/PMVE copolymer content 1.8 g) was added dropwise to 10 g of 2-butanol to coagulate a fluoroelastomer. The fluoroelastomer, after being washed with water, was dried at 140°C for 12 hours. The content of the polymer (B) in the resulting dry fluoroelastomer was measured with NMR.

### Comparative Example 1

First, 23 g of the same polymerization dispersion (TFE/PMVE copolymer content: 2.3 g) as in Examples 1 to 7 and 10 to 11 was added dropwise to 30 g of 20% nitric acid to coagulate a fluoroelastomer. The fluoroelastomer, after being washed with water, was dried at 75°C for 20 hours.

The resulting dry fluoroelastomer was formed into a film, and the content of the polymer (A) was measured with a Fourier transform infrared spectrometer.

The results of the above are shown in Table 1.

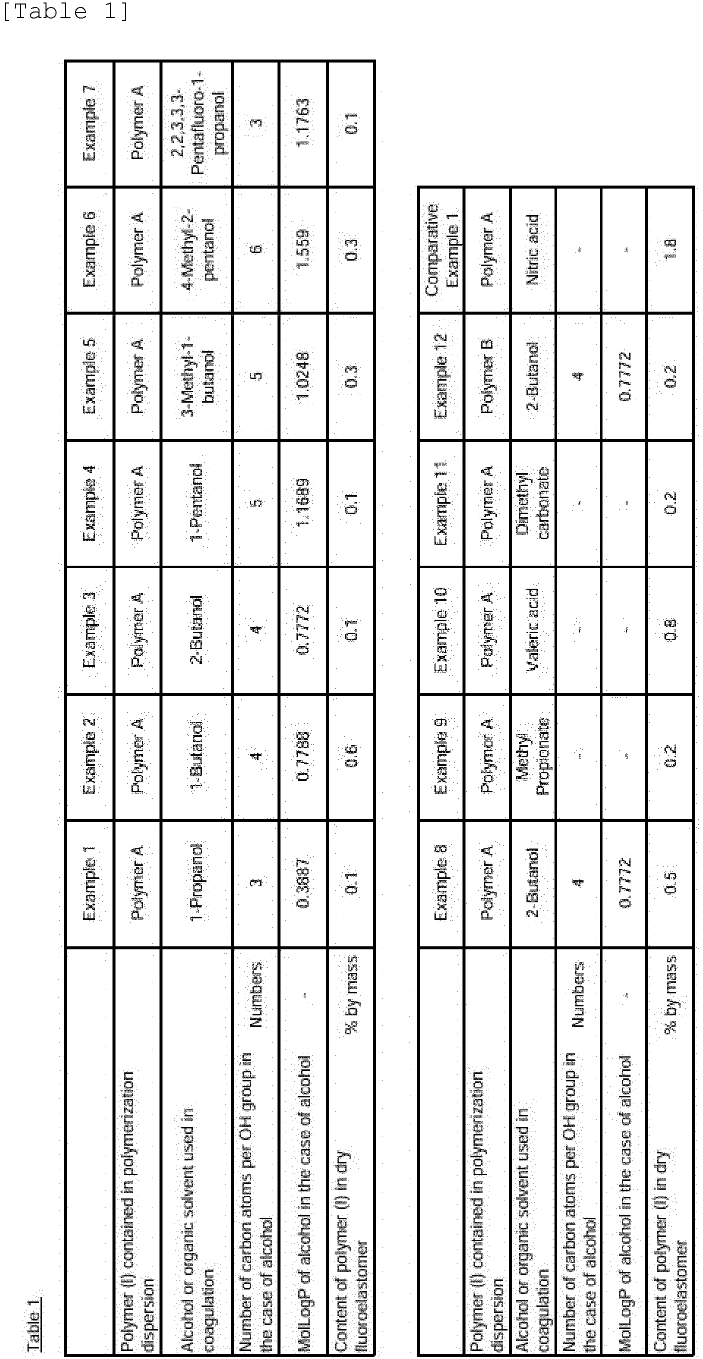

### Preparation Example 1

Polymerization was carried out in the same manner as in Example 11 described in International Publication No. WO 2022-107890, except that the amount of deionized water initially charged was changed to 1,561.5 g and the aqueous polymer B solution B-2 was changed to 992.5 g of the aqueous polymer F solution F-2 (solid concentration: 2.65% by mass) to give 4,027 g of an aqueous dispersion having a solid concentration of 31.5% by mass. The polymerization time was 69.4 hours.

The resulting dispersion was post-treated by the method of Comparative Example 2 of the present application to give 170 g of a perfluoroelastomer. The resulting perfluoroelastomer was analyzed, and the following results were obtained.
Composition of perfluoroelastomer: TFE/PMVE = 66.3/33.7 mol%
Iodine content: 0.44% by mass
Mooney viscosity: ML1+10 (100°C) = 63.8
Glass transition temperature: -1.3°C

### Example 13

The same procedure as in Example 11 described in International Publication No. WO 2022-107890 was carried out, and the solid concentration of the resulting emulsion dispersion was regulated with water to the concentration set forth in Table 2 to give 850 g of a dispersion. The dispersion was added dropwise to 359 g of 2-BuOH regulated to 71% with water, and coagulated. The fluoroelastomer was filtered off, and washed with water as set forth in Table 2. That is to say, washing of the fluoroelastomer with 1,360 g of water was repeated 4 times. Then, the fluoroelastomer, after being filtered off, was vacuum-dried at 140°C for 12 hours.

### Example 14

Coagulation and drying were carried out in the same manner as in Example 13, except that the emulsion dispersion obtained in Preparation Example 1 was used.

### Example 15

The same procedure as in Example 4 described in International Publication No. WO 2022-107890 was carried out, and the solid concentration of the resulting emulsion dispersion was regulated with water to the concentration set forth in Table 3 to give 1,700 g of a dispersion. The dispersion was added dropwise to 718 g of 2-BuOH regulated to 71% with water, and coagulated. The fluoroelastomer was filtered off, and washed with water as set forth in Table 3. Then, the fluoroelastomer, after being filtered off, was vacuum-dried at 70°C for 24 hours.

### Example 16

The same procedure as in Example 15 was carried out except that the dispersion obtained in Example 13 described in International Publication No. WO 2022-107890 was used.

### Comparative Example 2

First, 566 g of an emulsion dispersion obtained by carrying out the same procedure as in Example 11 described in International Publication No. WO 2022-107890 was regulated to the solid content concentration with water shown in Table 2, and this dispersion was added dropwise to 4,000 g of a 10% aqueous hydrochloric acid solution that was being stirred. The coagulated fluoroelastomer was filtered off, and washed with water as set forth in Table 2. Then, the fluoroelastomer, after being filtered off, was vacuum-dried at 140°C for 12 hours.

### Comparative Example 3

The same procedure as in Comparative Example 2 was carried out except that the dispersion obtained in Preparation Example 1 was used.

### Comparative Example 4

First, 850 g of an emulsion dispersion obtained by carrying out the same procedure as in Example 4 described in International Publication No. WO 2022-107890 was regulated to the solid content concentration with water shown in Table 3, and this dispersion was added dropwise to 4,000 g of a 10% aqueous hydrochloric acid solution that was being stirred. The coagulated fluoroelastomer was filtered off, and washed with water as set forth in Table 3. Then, the fluoroelastomer, after being filtered off, was vacuum-dried at 70°C for 24 hours.

### Comparative Example 5

The same procedure as in Comparative Example 4 was carried out except that the emulsion dispersion obtained by carrying out the same procedure as in Example 13 described in International Publication No. WO 2022-107890 was used.

To 100 parts by mass of each fluoroelastomer obtained in Examples 13 and 14 and Comparative Examples 2 and 3, 2 parts by mass of triallyl isocyanurate (TAIC, manufactured by Nihon Kasei Co., Ltd.) as a cross-linking agent, 1 part by mass of 2,5-dimethyl-2,5-bis(t-butylperoxy)hexane (PERHEXA 25B, manufactured by NOF Corporation), and 15 parts by mass of carbon black (Thermax N-990, manufactured by Cancarb Ltd.) as a filler were combined and the mixture was kneaded in an open roll to prepare a crosslinkable fluoroelastomer composition.

The resulting fluoroelastomer composition was crosslinked by being pressed at 160°C for 30 minutes and then further crosslinked in an oven at 180°C for 4 hours to produce a crosslinked product having a thickness of 2 mm and an O-ring (P-24). By the following methods, various physical properties of the fluoroelastomer composition and the crosslinked product were measured. The results are shown in Table 2.

### [Table 2]

**Table 2**

| | | | Example 13 | Example 14 | Comparative Example 2 | Comparative Example 3 |
|---|---|---|---|---|---|---|
| Solid concentration of dispersion after adjustment | | % | 20 | 20 | 13 | 13 |
| Water washing conditions | | | 1,360 g × 4 times | 1,360 g × 4 times | 1,360 g × 4 times | 1,360 g × 4 times |
| Coagulation/washing water temperature | | °C | 27 | 27 | 10 | 10 |
| Content of polymer (I) in dry fluoroelastomer | | % | 0.02 | 0.01 | 1.2 | 1.8 |
| Formulation | | | | | | |
| | Fluoroelastomer | % by mass | 100 | 100 | 100 | 100 |
| | PERHEXA 25B | % by mass | 1 | 1 | 1 | 1 |
| | TAIC | % by mass | 2 | 2 | 2 | 2 |
| | Thermax N990 | % by mass | 15 | 15 | 15 | 15 |
| Crosslinking properties | | | | | | |
| | RPA T90 | min | 5.0 | 5.6 | 4.9 | 15.5 |
| Crosslinking conditions | | | | | | |
| | Press crosslinking | | 160°C × 30 min | 160°C × 30 min | 160°C × 30 min | 160°C × 30 min |
| | Oven crosslinking | | 180°C × 4 hr | 180°C × 4 hr | 180°C × 4 hr | 180°C × 4 hr |
| Ordinary-state properties | | | | | | |
| | M100 | MPa | 10.7 | 10.8 | 7.8 | 6.9 |
| | TB | MPa | 21.2 | 21.3 | 15.3 | 14.9 |
| | EB | % | 160 | **150** | 160 | 160 |
| | Hardness (peak) | | 78 | 77 | 77 | 76 |
| Compression set | | | | | | |
| | 200°C × 70 hr/25% compression | % | 19.5 | 18.4 | 36.7 | 43.2 |

### <Crosslinkability>

Concerning the fluoroelastomer composition, a crosslinking curve at the same temperature as in the press crosslinking was determined using RPA2000 manufactured by ALPHA TECHNOLOGIES, and the optimum crosslinking time (T90) was determined.

### <Ordinary-state properties>

Using the crosslinked product having a thickness of 2 mm, M100 (100% modulus, MPa), TB (tensile breaking strength, MPa), and tensile elongation at break (EB, %) were measured in accordance with JIS-K6251.

### <Hardness>

Using the crosslinked product having a thickness of 2 mm, hardness (Shore A) was measured in accordance with JIS-K6253 (peak value).

### <Compression set>

As for compression set, the O ring was measured in accordance with the method described in ASTM D395 or JIS K6262 under the conditions set forth in Tables 2 and 3.

To 100 parts by mass of each fluoroelastomer obtained in Examples 15 and 16 and Comparative Examples 4 and 5, 2 parts by mass of 2,2-bis[3-amino-4-(N-phenylamino)phenyl]hexafluoropropane (AFTA-PH) as a cross-linking agent and 5 parts by mass of calcium oxide (CML #35, manufactured by Ohmi Chemical Industry Co., Ltd.) as a filler were combined, and the mixture was kneaded in an open roll to prepare a crosslinkable fluoroelastomer composition.

The resulting fluoroelastomer composition was crosslinked by being pressed at 180°C for 40 minutes and then further crosslinked in an oven at 290°C for 18 hours to produce a crosslinked product having a thickness of 2 mm and an O-ring (P-24). The results of various physical properties of the fluoroelastomer composition and the crosslinked product are shown in Table 3.

### [Table 3]

**Table 3**

| | | | Example 15 | Example 16 | Comparative Example 4 | Comparative Example 5 |
|---|---|---|---|---|---|---|
| Solid concentration of dispersion after adjustment | | % | 10 | 10 | 13 | 13 |
| Water washing conditions | | | 1,360 g × 4 times | 1,360 g × 4 times | 1,360 g × 4 times | 1.360 g × 4 times |
| Coagulation/washing water temperature | | °C | 27 | 27 | 10 | 10 |
| Content of polymer (1) in dry fluoroelastomer | | % | 0.01 | 0.01 | 1.8 | 2.1 |
| Formulation | | | | | | |
| | Fluoroelastomer | % by mass | 100 | 100 | 100 | 100 |
| | AFTA-Ph | % by mass | 2 | 2 | 2 | 2 |
| | Calcium hydroxide | % by mass | 5 | 5 | 5 | 5 |
| | Thermax N990 | % by mass | 0 | 0 | 0 | 0 |
| Crosslinking properties | | | | | | |
| | RPA T90 | min | 7.6 | 8.7 | 22.9 | 24.2 |
| Crosslinking conditions | | | | | | |
| | Press crosslinking | | 180°C × 30 min | 180°C × 30 min | 180°C × 30 min | 180°C × 30 min |
| | Oven crosslinking | | 290°C × 18 hr | 290°C × 18 hr | 290°C × 18 hr | 290°C × 18 hr |
| Ordinary-state properties | | | | | | |
| | M100 | MPa | 2.2 | 2.2 | 1.5 | 1.7 |
| | TB | MPa | 7.6 | 9.7 | 7.5 | 8.2 |
| | EB | % | 230 | 240 | 260 | 240 |
| | Hardness (peak) | | 63 | 62 | 58 | 60 |
| Compression set | | | | | | |
| | 300°C × 70 hr/25% compression | % | 33.6 | 33.4 | 33.6 | 34.1 |

## Claims

1. A composition comprising: a polymer (I) having a polymerization unit (I) based on a monomer (I) represented by general formula (I); and a fluoroelastomer, wherein a content of the polymer (I) is 0.0001 to 1.0% by mass based on the fluoroelastomer:
CX¹X3=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

2. The composition according to claim 1, wherein the polymer (I) is a polymer (2) having a polymerization unit (2) based on a monomer (2) represented by general formula (2):
CX₂=CY(-O-Rf-A) (2)
wherein X is the same or different and is -H or F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is -COOM, -SO₃M, -OSO₃M, or -C(CF₃)₂OM, wherein M is H, a metal atom, NR⁷₄, imidazolium optionally having a substituent, pyridinium optionally having a substituent, or phosphonium optionally having a substituent, and R⁷ is H or an organic group.

3. The composition according to claim 1 or 2, wherein the fluoroelastomer is a perfluoroelastomer.

4. The composition according to any one of claims 1 to 3, which is substantially free of a fluorine-containing surfactant.

5. The composition according to any one of claims 1 to 4, which is obtained by preparing a polymerization dispersion comprising the polymer (I), the fluoroelastomer, and an aqueous medium, and
bringing the fluoroelastomer in the polymerization dispersion into contact with an alcohol having 3 to 6 carbon atoms per OH group to coagulate the fluoroelastomer.

6. The composition according to claim 5, wherein the alcohol has 3 to 5 carbon atoms per OH group.

7. The composition according to claim 5 or 6, wherein the alcohol has a MolLogP within a range of 0.3 to 1.6.

8. The composition according to any one of claims 1 to 4, which is obtained by preparing a polymerization dispersion comprising the polymer (I), the fluoroelastomer, and an aqueous medium, and
freezing the polymerization dispersion to coagulate the fluoroelastomer.

9. The composition according to any one of claims 1 to 4, which is obtained by preparing a polymerization dispersion comprising the polymer (I), the fluoroelastomer, and an aqueous medium, and
bringing the fluoroelastomer in the polymerization dispersion into contact with at least one organic solvent selected from the group consisting of the following compounds to coagulate the fluoroelastomer:
carboxylic acids having 2 to 5 carbon atoms
methyl ethyl ketone
methyl acetate
dimethyl carbonate
acetone
3-methyl-2-cyclopentenone
methyl propionate
ethyl acetate
tetrahydrofuran
1,2-dimethoxyethane.

10. A crosslinkable composition comprising the composition according to any one of claims 1 to 9 and at least one selected from the group consisting of an inorganic nitride, an organotin compound, an ammonia-generating compound, and a cross-linking agent.

11. The crosslinkable composition according to claim 10, comprising a perfluoroelastomer having iodine atom or bromine atom as the fluoroelastomer.

12. The crosslinkable composition according to claim 11, comprising an organic peroxide as the cross-linking agent and further comprising a cross-linking aid.

13. The crosslinkable composition according to claim 11 or 12, wherein the perfluoroelastomer is at least one selected from the group consisting of a copolymer of tetrafluoroethylene/perfluorovinyl ether represented by general formula (140), a copolymer of tetrafluoroethylene/a fluoromonomer represented by general formula (140)/a monomer having iodine atom or bromine atom, a copolymer of tetrafluoroethylene/a fluoromonomer represented by general formula (160), and a copolymer of tetrafluoroethylene/a fluoromonomer represented by general formula (160)/a monomer having iodine atom or bromine atom, wherein
general formula (140): CF₂=CFO(CF₂CF(Y¹⁴¹)O)ₘ(CF₂)ₙF
wherein Y¹⁴¹ represents fluorine atom or trifluoromethyl group, m is an integer of 1 to 4, and n is an integer of 1 to 4; and
general formula (160): CF₂=CF-ORf¹⁶¹
wherein Rf¹⁶¹ represents a perfluoroalkyl group having 1 to 10 carbon atoms.

14. The crosslinkable composition according to claim 10, comprising a perfluoroelastomer having cyano group as the fluoroelastomer.

15. The crosslinkable composition according to claim 14, comprising at least one selected from the group consisting of an inorganic nitride, an organotin compound, an ammonia-generating compound, a compound having a plurality of 3-amino-4-hydroxyphenyl groups or 3-amino-4-mercaptophenyl groups, and a compound represented by general formula (47): 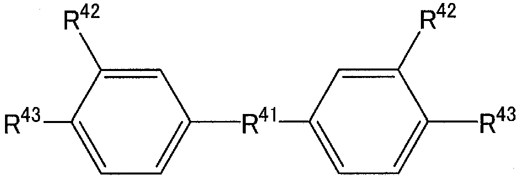 wherein R⁴¹, R⁴², and R⁴³ are as described above.

16. The crosslinkable composition according to claim 14 or 15, wherein the perfluoroelastomer is at least one selected from the group consisting of a copolymer of tetrafluoroethylene/a fluoromonomer represented by general formula (140)/a monomer having cyano group and a copolymer of tetrafluoroethylene/a fluoromonomer represented by general formula (160)/a monomer having cyano group:
general formula (140) : CF₂=CFO(CF₂CF(Y¹⁴¹)O)ₘ(CF₂)ₙF
wherein Y¹⁴¹ represents fluorine atom or trifluoromethyl group, m is an integer of 1 to 4, and n is an integer of 1 to 4; and
general formula (160): CF₂=CF-ORf¹⁶¹
wherein Rf¹⁶¹ represents a perfluoroalkyl group having 1 to 10 carbon atoms.

17. A crosslinked product obtained by crosslinking the crosslinkable composition according to any one of claims 10 to 16.
